# EUROPEAN PATENT SPECIFICATION

(11) **EP 3 526 308 B1**
(45) Date of publication and mention of the grant of the patent: **19.05.2021**
(21) Application number: 17783523.8
(22) Date of filing: 16.10.2017
(51) Int. Cl.: C09K 19/32, C09K 19/34, C09K 19/30, C09K 19/04, C09K 19/12

(54) **LIQUID-CRYSTALLINE MEDIUM, LIQUID CRYSTAL COMPOUND AND LIQUID-CRYSTAL DISPLAY DEVICE COMPRISING THE SAME**
FLÜSSIGKRISTALLZUSAMMENSETZUNG, FLÜSSIGKRISTALLVERBINDUNG UND FLÜSSIGKRISTALLANZEIGEVORRICHTUNG DAMIT
MILIEU LIQUIDE CRISTALLIN, COMPOSÉ LIQUIDE CRISTALLIN ET DISPOSITIF D'AFFICHAGE À BASE DE CRISTAUX LIQUIDES CONTENANT LA COMPOSITION

(30) Priority: 17.10.2016 EP 16194162; 04.11.2016 EP 16197206
(43) Date of publication of application: 21.08.2019
(73) Proprietor: Merck Patent GmbH, 64293 Darmstadt (DE)
(72) Inventor: ENGEL, Martin, 64291 Darmstadt (DE); SCHULER, Brigitte, 63762 Grossostheim (DE); BREMER, Matthias, 64295 Darmstadt (DE); MANABE, Atsutaka, 64625 Bensheim (DE)
(86) International application number: PCT/EP2017/076296
(87) International publication number: WO 2018/073151

(56) References cited:
- EP-A1- 2 031 040
- DE-A1- 10 354 404
- US-A1- 2007 080 324
- US-A1- 2008 191 167
- US-A1- 2011 101 270
- US-A1- 2016 298 033

## Description

The present invention relates to novel liquid crystalline compounds and media, in particular for use in liquid-crystal displays, and to these liquid-crystal displays, particularly to liquid-crystal displays which use the IPS (in-plane switching) or, preferably, the FFS (fringe field switching) effect using dielectrically positive liquid crystals. The last one is also called SG-FFS (super grip FFS) effect occasionally. For this effect dielectrically positive liquid crystals are used, which comprise one or more compounds having at the same time a high dielectric constant parallel to the molecular director and perpendicular to the molecular director, leading to a large average dielectric constant and a high dielectric ratio and, preferably, to a relatively small dielectric anisotropy at the same time. The liquid crystalline media optionally additionally comprise dielectrically negative, dielectrically neutral compounds or both. The liquid crystalline media are used in a homogeneous (i.e. planar) initial alignment. The liquid-crystal media according to the invention have a positive dielectric anisotropy and comprise compounds having at the same time large dielectric constants parallel and perpendicular to the molecular director.

The media are distinguished by a particularly high transmission and reduced response time in respective displays, which is brought about by their unique combination of physical properties, especially by their dielectric properties and in particular by their high ratio of (ε_{⊥} / εₐᵥ.) respectively of the high values of their dielectric ratio (ε_{⊥} / Δε). This also leads to their excellent performance in the displays according to the invention.

IPS and FFS displays using dielectrically positive liquid crystals are well known in the field and have been widely adopted for various types of displays like e.g. desk top monitors and TV sets, but also for mobile applications.

However, recently, IPS and in particular FFS displays using dielectrically negative liquid crystals are widely adopted. The latter ones are sometimes also called or UB-FFS (ultra bright FFS). Such displays, respectively LCs, are disclosed e.g. in US 2013/0207038 A1, US 2016/298033A1, US 2007/080324 A1, EP 2 031 040 A1, DE 10 354 404 A1, US 2008/0191167 A1, US 2011 /101270A1. These displays are characterized by a markedly increased transmission compared to the previously used IPS- and FFS displays, which have been dielectrically positive liquid crystals. These displays using dielectrically negative liquid crystals, however, have the severe disadvantage of requiring a higher operation voltage than the respective displays using dielectrically positive liquid crystals. Liquid crystalline media used for UB-FFS have a dielectric anisotropy of -0.5 or less and preferably of -1.5 or less.

Liquid crystalline media used for HB-FFS (high brightness FFS) have a dielectric anisotropy of 0.5 or more and preferably of 1.5 or more. Respective media comprising both dielectrically negative and dielectrically positive liquid crystalline compounds, respectively mesogenic compounds are disclosed e.g. in US 2013/0207038 A1. These media feature rather large values of ε_{⊥} and of εₐᵥ. already, however, their ratio of (ε_{⊥} / Δε) is relatively small.

According to the present application, however, the IPS or the FFS effect with dielectrically positive liquid crystalline media in a homogeneous alignment are preferred.

Industrial application of this effect in electro-optical display elements requires LC phases which have to meet a multiplicity of requirements. Particularly important here are chemical resistance to moisture, air and physical influences, such as heat, radiation in the infrared, visible and ultraviolet regions, and direct (DC) and alternating (AC) electric fields.

Furthermore, LC phases which can be used industrially are required to have a liquid-crystalline mesophase in a suitable temperature range and low viscosity
None of the series of compounds having a liquid-crystalline mesophase that have been disclosed hitherto includes a single compound which meets all these requirements. Mixtures of two to 25, preferably three to 18, compounds are therefore generally prepared in order to obtain substances which can be used as LC phases.

Matrix liquid-crystal displays (MLC displays) are known. Non-linear elements which can be used for individual switching of the individual pixels are, for example, active elements (i.e. transistors). The term "active matrix" is then used, where in general use is made of thin-film transistors (TFTs), which are generally arranged on a glass plate as substrate.

A distinction is made between two technologies: TFTs comprising compound semiconductors, such as, for example, CdSe, or metal oxides like ZnO or TFTs based on polycrystalline and, inter alia, amorphous silicon. The latter technology currently has the greatest commercial importance worldwide.

The TFT matrix is applied to the inside of one glass plate of the display, while the other glass plate carries the transparent counter electrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is located opposite each switchable pixel.

The TFT displays most used hitherto usually operate with crossed polarisers in transmission and are backlit. For TV applications, ECB (or VAN) cells or FFS cells are used, whereas monitors usually use IPS cells or TN (twisted nematic) cells, and notebooks, laptops and mobile applications usually use TN, VA or FFS cells.

The term MLC displays here encompasses any matrix display having integrated non-linear elements, i.e., besides the active matrix, also displays with passive elements, such as varistors or diodes (MIM = metal-insulator-metal).

MLC displays of this type are particularly suitable for TV applications, monitors and notebooks or for displays with a high information density, for example in automobile manufacture or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

Displays which use the ECB effect have become established as so-called VAN (vertically aligned nematic) displays, besides IPS displays (for example: Yeo, S.D., Paper 15.3: "An LC Display for the TV Application", SID 2004 International Symposium, Digest of Technical Papers, XXXV, Book II, pp. 758 and 759) and the long-known TN displays, as one of the three more recent types of liquid-crystal display that are currently the most important, in particular for television applications.

The most important designs may be mentioned here: MVA (multi-domain vertical alignment, for example: Yoshide, H. et al., Paper 3.1: "MVA LCD for Notebook or Mobile PCs ...", SID 2004 International Symposium, Digest of Technical Papers, XXXV, Book I, pp. 6 to 9, and Liu, C.T. et al., Paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, Paper 15.4: "Super PVA Sets New State-of-the-Art for LCD-TV", SID 2004 International Symposium, Digest of Technical Papers, XXXV, Book II, pp. 760 to 763) and ASV (advanced super view, for example: Shigeta, Mitzuhiro and Fukuoka, Hirofumi, Paper 15.2: "Development of High Quality LCDTV", SID 2004 International Symposium, Digest of Technical Papers, XXXV, Book II, pp. 754 to 757). More modern versions of the VA effect, are the so called PAVA (photo-alignment VA) and PSVA (polymer-stabilized VA).

In general form, the technologies are compared, for example, in Souk, Jun, SID Seminar 2004, Seminar M-6: "Recent Advances in LCD Technology", Seminar Lecture Notes, M-6/1 to M-6/26, and Miller, Ian, SID Seminar 2004, Seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., Paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular in the switching of grey shades, is still a problem which has not yet been solved to a satisfactory extent.

ECB displays, like ASV displays, use liquid-crystalline media having negative dielectric anisotropy (Δε), whereas TN and to date all conventional IPS displays use liquid-crystalline media having positive dielectric anisotropy. However, presently there is an increasing demand for IPS and FFS displays utilizing dielectrically negative liquid crystalline media.

In liquid-crystal displays of this type, the liquid crystals are used as dielectrics, whose optical properties change reversibly on application of an electrical voltage.

Since in displays in general, i.e. also in displays in accordance with these mentioned effects, the operating voltage should be as low as possible, use is made of liquid-crystal media which are generally predominantly composed of liquid-crystal compounds, all of which have the same sign of the dielectric anisotropy and have the highest possible value of the dielectric anisotropy. In general, at most relatively small proportions of neutral compounds and if possible no compounds having a sign of the dielectric anisotropy which is opposite to that of the medium are employed. In the case of liquid-crystal media having negative dielectric anisotropy e.g. for ECB or UB-FFS displays, predominantly compounds having negative dielectric anisotropy are thus employed. The respective liquid-crystalline media employed generally consist predominantly and usually even essentially of liquid-crystal compounds having negative dielectric anisotropy.

In the media used in accordance with the present application, significant amounts of dielectrically positive liquid-crystal compounds and generally only very small amounts of dielectrically compounds or even none at all are typically employed, since in general the liquid-crystal displays are intended to have the lowest possible addressing voltages. At the same time small amounts of dielectrically neutral compounds may be beneficially used in some cases.

US 2013/0207038 A1 discloses liquid crystalline media for HB-FFS displays proposing to improve the performance of the FFS displays using liquid crystals having a positive dielectric anisotropy by the additional incorporation of dielectrically negative liquid crystals. This, however, leads to the necessity of a compensation of the negative contribution of these compounds to the overall dielectric anisotropy of the resultant media. To this end, either the concentration of the dielectrically positive materials has to be increased, which, in turn, leaves less room for the use of dielectrically neutral compounds as diluters in the mixtures, or, alternatively, compounds with a stronger positive dielectric anisotropy have to be used. Both of these alternatives have the strong drawback of increasing the response time of the liquid crystals in the displays.

Liquid crystalline media having a positive dielectric anisotropy for IPS and FFS displays have already been disclosed. In the following some examples will be given.

CN 104232105 A discloses liquid crystalline media with a positive dielectric anisotropy having dielectric ratios (ε_{⊥} / Δ_{ε}) of up to 0.7.

WO 2014/192390 also discloses liquid crystalline media with a positive dielectric anisotropy having rather high values of ε||, but having dielectric ratios (ε_{⊥} / Δε) of only about 0.5.

WO 2015/007131 discloses liquid crystalline media with a positive dielectric anisotropy, some of which have a dielectric ratio (ε_{⊥} / Δε) of about 0.7 and slightly above, up to 0.88.
Obviously, the range of the nematic phase of the liquid-crystal mixture must be sufficiently broad for the intended application of the display.

### Compounds of formula

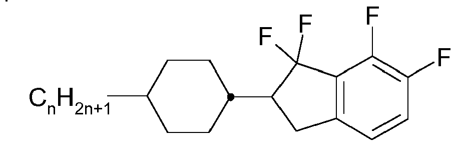

and with n ∈ {2; 3; 5}
and of formula 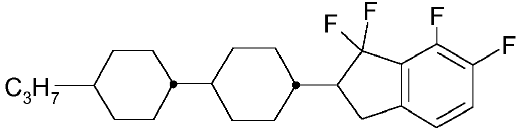 and liquid crystalline mixtures comprising these are disclosed e.g. in DE 100354 404 A and the synthesis of such tetrafluoroindans is described in M. Bremer and L. Lietzau, New J. Chem. 2005, 29, p. 72-74.

The response times of the liquid-crystal media in the displays also have to be improved, i.e. reduced. This is particularly important for displays for television or multimedia applications. In order to improve the response times, it has repeatedly been proposed in the past to optimise the rotational viscosity of the liquid-crystal media (γ₁), i.e. to achieve media having the lowest possible rotational viscosity. However, the results achieved here are inadequate for many applications and therefore make it appear desirable to find further optimisation approaches.

Adequate stability of the media to extreme loads, in particular to UV exposure and heating, is very particularly important. In particular in the case of applications in displays in mobile equipment, such as, for example, mobile telephones, this may be crucial.

Besides their relatively poor transmission and their relatively long response times, the MLC displays disclosed hitherto, they have further disadvantages. These are e.g. their comparatively low contrast, their relatively high viewing-angle dependence and the difficulty in the reproduction of grey scales in these displays, especially when observed from an oblique viewing angle, as well as their inadequate VHR and their inadequate lifetime. The desired improvements of the transmission of the displays and of their response times are required in order to improve their energy efficiency, respectively their capacity to render rapidly moving pictures.

There thus continues to be a great demand for MLC displays having very high specific resistance at the same time as a large working-temperature range, short response times and a low threshold voltage, with the aid of which various grey shades can be produced and which have, in particular, a good and stable VHR.

The invention has the object of providing MLC displays, not only for monitor and TV applications, but also for mobile applications such as e.g. telephones and navigation systems, which are based on the ECB, IPS or FFS effect, do not have the disadvantages indicated above, or only do so to a lesser extent, and at the same time have very high specific resistance values. In particular, it must be ensured for mobile telephones and navigation systems that they also work at extremely high and extremely low temperatures.

Surprisingly, it has been found that it is possible to achieve liquid-crystal displays which have, in particular in IPS and FFS displays, a low threshold voltage with short response times, a sufficiently broad nematic phase, favourable, relatively low birefringence (Δn) and, at the same time, a high transmission, good stability to decomposition by heating and by UV exposure, and a stable, high VHR if use is made in these display elements of nematic liquid-crystal mixtures which comprise at least one compound, preferably two or more compounds of formula IN, preferably selected from the group of the compounds of the sub-formulae IN-A and/or IN-B, preferably selected from their respective sub-formulae IN-A-1, IN-A-2, IN-A-3, IN-A-4 and IN-A-5 and IN-B-1, IN-B-2, IN-B-3, IN-B-4 and IN-B-5 and optionally of formula I, preferably selected from the group of the compounds of the sub-formulae I-1, I-2, I-3 and I-4 and/or I-5, I-6, I-7, I-8, I-9 and I-10, particularly preferably of these of the sub-formulae I-1 and/or I-2 and/or I-3, more preferably I-1 and/or I-3, and/or I-5 and preferably additionally at least one compound, preferably two or more compounds, selected from the group of the compounds of the formulae II and III, the former preferably of formula II-1 and/or II-2, and/or at least one compound, preferably two or more compounds selected from the group of formulae IV and/or V and, preferably, one or more compounds selected from the group of formulae VII to IX (all formulae as defined herein below).

Media of this type can be used, in particular, for electro-optical displays having active-matrix addressing for IPS- or FFS displays. The media according to the present invention preferably additionally comprise a one or more compounds selected from the group of compounds of formulae II and III, preferably one or more compounds of formula II, more preferably in addition one or more compounds of formula III and, most preferably, additionally one or more compounds selected from the group of the compounds of formulae IV and V and, again preferably, one or more compounds selected from the group of compounds of formulae VI to IX (all formulae as defined below).

The mixtures according to the invention exhibit very broad nematic phase ranges with clearing points ≥ 70°C, very favourable values for the capacitive threshold, relatively high values for the holding ratio and at the same time good low-temperature stabilities at -20°C and -30°C, as well as very low rotational viscosities. The mixtures according to the invention are furthermore distinguished by a good ratio of clearing point and rotational viscosity and by a relatively high positive dielectric anisotropy.

Now, it has been found surprisingly that LCs of the FFS type using liquid crystals with positive dielectric anisotropy may be realised using specially selected liquid crystalline media. These media are characterised by a particular combination of physical properties. Most decisive amongst these are their dielectric properties and here a high average dielectric constant (εₐᵥ.), a high dielectric constant perpendicular to the director of the liquid crystal molecules (ε_{⊥}), a high value of the dielectric anisotropy (Δε), and, in particular, the relatively high ratio of these latter two values: (ε_{⊥} / Δε).

Preferably the liquid-crystalline media according to the present invention, on the one hand, have a value of the dielectric anisotropy of 0.5 or more, preferably of 1.0 or more preferably of 1.5 or more. At the other hand, they preferably have a dielectric anisotropy of 26 or less.

Preferably the liquid-crystalline media according to the present invention, on the one hand, have a value of the dielectric constant perpendicular to the director of 2 or more, more preferably of 8 or more and, on the other hand preferably of 20 or less.

The liquid crystalline media according to the present invention preferably have a positive dielectric anisotropy, preferably in the range from 1.5 or more to 20.0 or less, more preferably in the range from 3.0 or more to 8.0 or less and, most preferably in the range from 4.0 or more to 7.0 or less.

The liquid crystalline media according to the present invention preferably have a dielectric constant perpendicular to the director of the liquid crystal molecules (ε_{⊥}) of 5.0 or more, more preferably of 6.0 or more, more preferably of 7.0 or more, more preferably of 8.0 or more, more preferably of 9 or more and, most preferably, of 10.0 or more.

The liquid crystalline media according to the present invention preferably have a dielectric ratio (ε_{⊥} / Δε) of 1.0 or more, more preferably of 1.5 or more and, most preferably, of 2.0 or more.

In a preferred embodiment of the present invention the liquid crystalline medium preferably comprises
a) one or more compounds of formula IN-A, having both a high dielectric constant perpendicular to the director and parallel to the director, preferably in a concentration in the range from 1 % to 60 %, more preferably in the range from 5 % to 40 %, particularly preferably in the range from 8 % to 35 %, 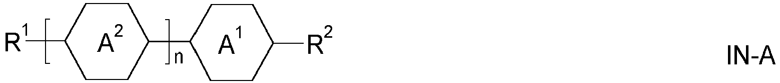 in which 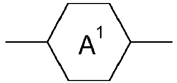 denotes 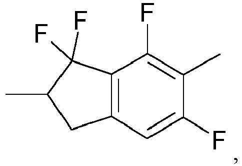 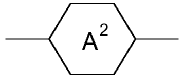 denotes, in each occurrence independently of each other, 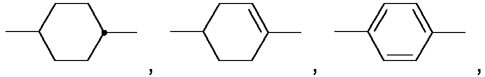 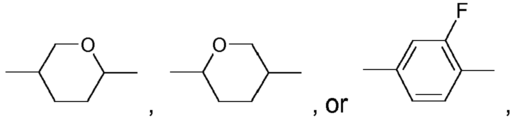 preferably 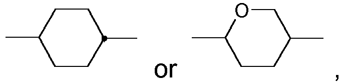
   - n: denotes 0, 1 or 2,
   - R¹ and R²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms, and R² alternatively denotes H or X¹ and preferably denotes X¹,
   - X¹: denotes F, CI, fluorinated alkyl, fluorinated alkenyl, fluorinated alkoxy or fluorinated alkenyloxy.
   and
b) one or more selected from the group of compounds of formulae II and III, being dielectrically positive, preferably of compounds having a dielectric anisotropy of greater than 3 each: 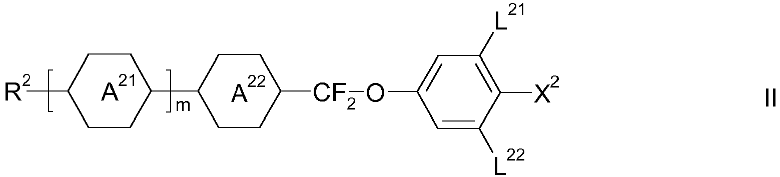 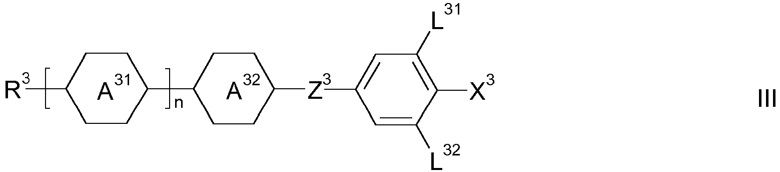 in which
   - R²: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, 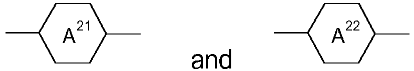 on each appearance, independently of one another, denote 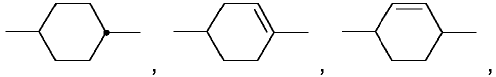 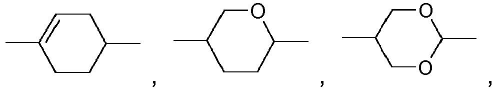 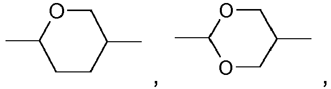 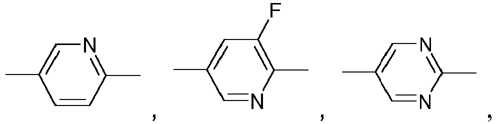 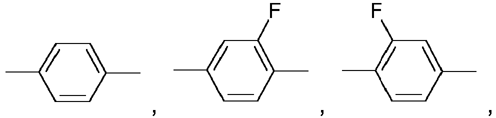 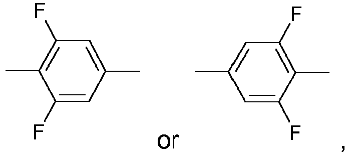 preferably 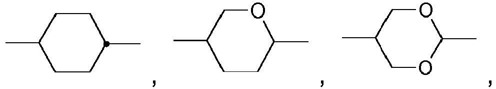 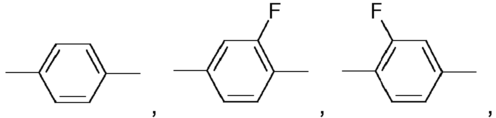 or 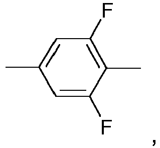
   - L²¹ and L²²: denote H or F, preferably L²¹ denotes F,
   - X²: denotes halogen, halogenated alkyl or alkoxy having 1 to 3 C atoms or halogenated alkenyl or alkenyloxy having 2 or 3 C atoms, preferably F, Cl, -OCF₃, -O-CH₂CF₃, -O-CH=CH₂, -O-CH=CF₂ or -CF₃, very preferably F, CI, -O-CH=CF₂ or -OCF₃,
   - m: denotes 0, 1, 2 or 3, preferably 1 or 2 and particularly preferably 1,
   - R³: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, 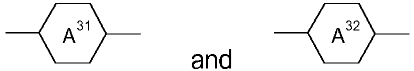 on each appearance, independently of one another, are 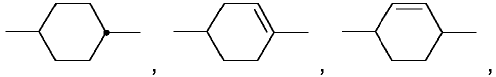 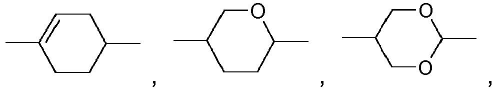 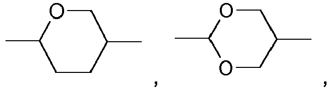 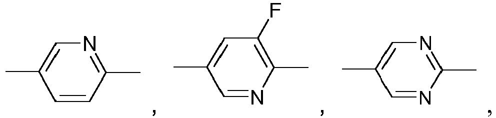 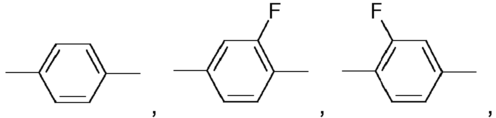 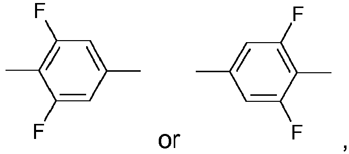 preferably 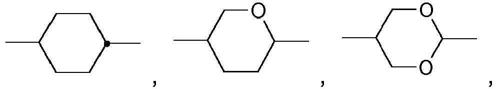 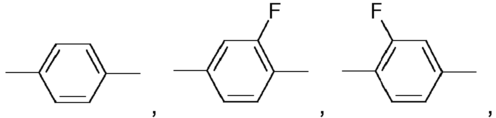 or 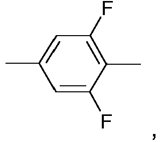
   - L³¹ and L³²,: independently of one another, denote H or F, preferably L³¹ denotes F,
   - X³: denotes halogen, halogenated alkyl or alkoxy having 1 to 3 C atoms or halogenated alkenyl or alkenyloxy having 2 or 3 C atoms, F, Cl, -OCF₃, -OCHF₂, -O-CH₂CF₃, -O-CH=CF₂, -O-CH=CH₂ or -CF₃, very preferably F, Cl, -O-CH=CF₂, -OCHF₂ or -OCF₃,
   - Z³: denotes -CH₂CH₂-, -CF₂CF₂-, -COO-, *trans*-CH=CH-, *trans*-CF=CF-, -CH₂O- or a single bond, preferably -CH₂CH₂-, -COO-, *trans*-CH=CH- or a single bond and very preferably -COO-, *trans-*CH=CH- or a single bond, and
   - n: denotes 0, 1, 2 or 3, preferably 1, 2 or 3 and particularly preferably 1, and
c) optionally one or more compounds selected from the group of formulae IV and V, being dielectrically neutral: 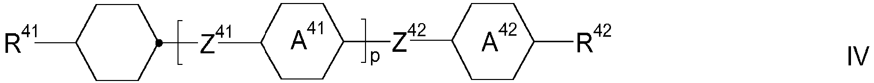 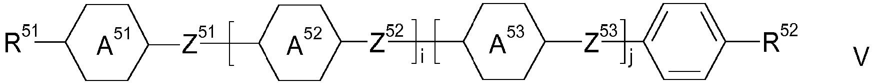 in which
   - R⁴¹ and R⁴²,: independently of one another, have the meaning indicated above for R² under formula II, preferably R⁴¹ denotes alkyl and R⁴² denotes alkyl or alkoxy or R⁴¹ denotes alkenyl and R⁴² denotes alkyl, 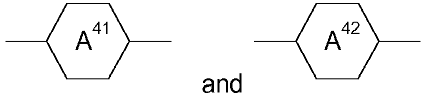 independently of one another and, if 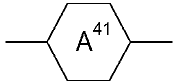 occurs twice, also these independently of one another, denote 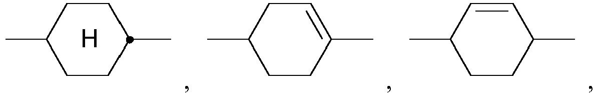 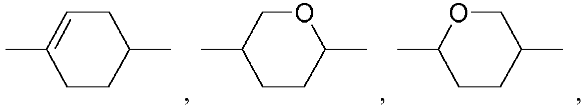 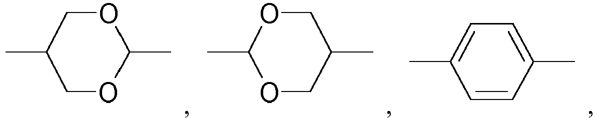 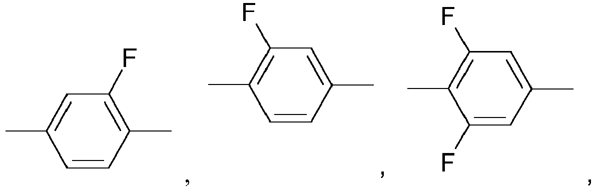 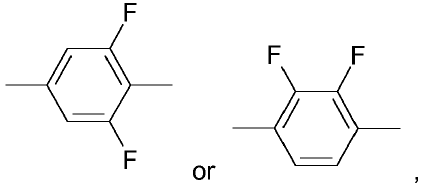 preferably one or more of 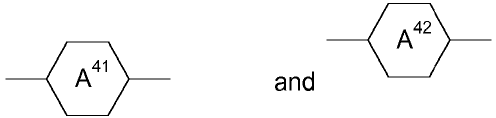 denotes or denote, 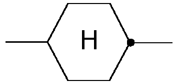
   - Z⁴¹ and Z⁴²,: independently of one another and, if Z⁴¹ occurs twice, also these independently of one another, denote -CH₂CH₂-, -COO-, *trans*-CH=CH-*, trans-*CF=CF-, -CH₂O-, -CF₂O-, -C≡C- or a single bond, preferably one or more thereof denotes/denote a single bond, and
   - p: denotes 0, 1 or 2, preferably 0 or 1, and
   - R⁵¹ and R⁵²,: independently of one another, have one of the meanings given for R⁴¹ and R⁴² and preferably denote alkyl having 1 to 7 C atoms, preferably *n*-alkyl, particularly preferably *n*-alkyl having 1 to 5 C atoms, alkoxy having 1 to 7 C atoms, preferably *n*-alkoxy, particularly preferably *n*-alkoxy having 2 to 5 C atoms, alkoxyalkyl, alkenyl or alkenyloxy having 2 to 7 C atoms, preferably having 2 to 4 C atoms, preferably alkenyloxy, 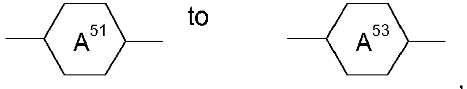 if present, each, independently of one another, denote 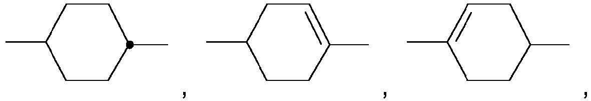 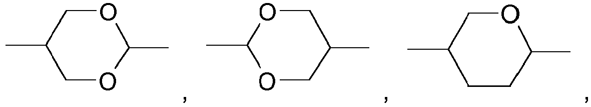 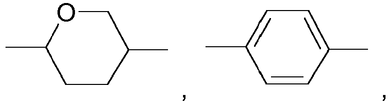 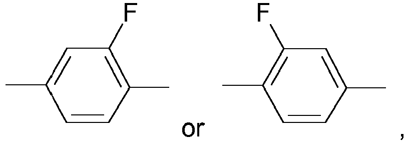 preferably 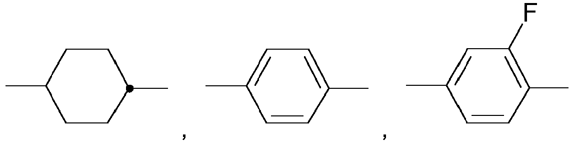 or 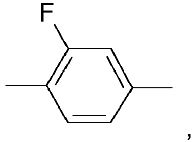 preferably 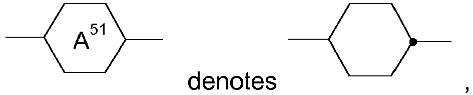 and, if present, 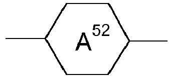 preferably denotes 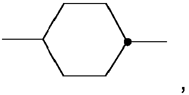
   - Z⁵¹ to Z⁵³: each, independently of one another, denote -CH₂-CH₂-, -CH₂-O-, -CH=CH-, -C≡C-, -COO- or a single bond, preferably -CH₂-CH₂-, -CH₂-O- or a single bond and particularly preferably a single bond,
   - i and j: each, independently of one another, denote 0 or 1,
   - (i + j): preferably denotes 0, 1 or 2, more preferably 0 or 1 and, most preferably, 1,
d) again optionally, either alternatively or additionally, one or more compounds selected from the group of formulae VI to IX, being dielectrically negative: 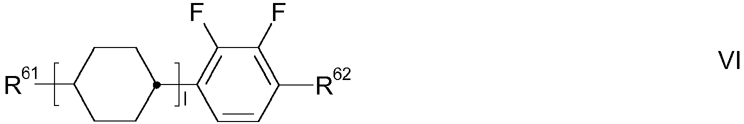 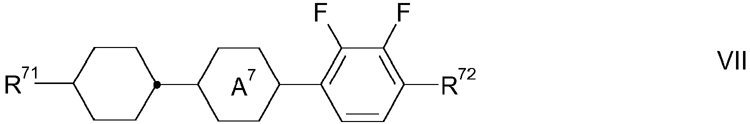 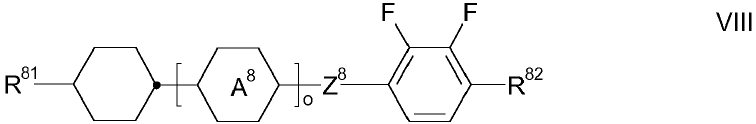 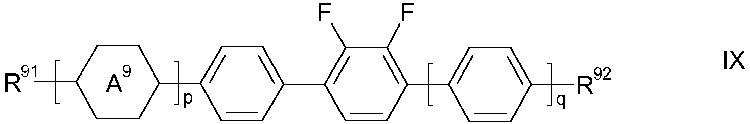 wherein
   - R⁶¹: denotes an unsubstituted alkyl radical having 1 to 7 C atoms, preferably a straight-chain alkyl radical, more preferably an *n*-alkyl radical, most preferably propyl or pentyl, an unsubstituted alkenyl radical having 2 to 7 C atoms, preferably a straight-chain alkenyl radical, particularly preferably having 2 to 5 C atoms, an unsubstituted alkoxy radical having 1 to 6 C atoms or an unsubstituted alkenyloxy radical having 2 to 6 C atoms,
   - R⁶²: denotes an unsubstituted alkyl radical having 1 to 7 C atoms, an unsubstituted alkoxy radical having 1 to 6 C atoms or an unsubstituted alkenyloxy radical having 2 to 6 C atoms, and
   - I: denotes 0 or 1,
   - R⁷¹: denotes an unsubstituted alkyl radical having 1 to 7 C atoms, preferably a straight-chain alkyl radical, more preferably an *n*-alkyl radical, most preferably propyl or pentyl, or an unsubstituted alkenyl radical having 2 to 7 C atoms, preferably a straight-chain alkenyl radical, particularly preferably having 2 to 5 C atoms,
   - R⁷²: denotes an unsubstituted alkyl radical having 1 to 7 C atoms, preferably having 2 to 5 C atoms, an unsubstituted alkoxy radical having 1 to 6 C atoms, preferably having 1, 2, 3 or 4 C atoms, or an unsubstituted alkenyloxy radical having 2 to 6 C atoms, preferably having 2, 3 or 4 C atoms, and 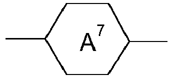 denotes 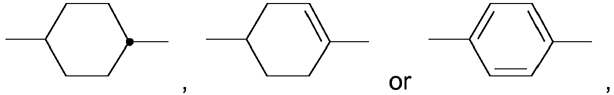
   - R⁸¹: denotes an unsubstituted alkyl radical having 1 to 7 C atoms, preferably a straight-chain alkyl radical, more preferably an *n*-alkyl radical, most preferably propyl or pentyl, or an unsubstituted alkenyl radical having 2 to 7 C atoms, preferably a straight-chain alkenyl radical, particularly preferably having 2 to 5 C atoms,
   - R⁸²: denotes an unsubstituted alkyl radical having 1 to 7 C atoms, preferably having 2 to 5 C atoms, an unsubstituted alkoxy radical having 1 to 6 C atoms, preferably having 1, 2, 3 or 4 C atoms, or an unsubstituted alkenyloxy radical having 2 to 6 C atoms, preferably having 2, 3 or 4 C atoms, 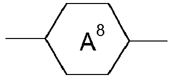 denotes 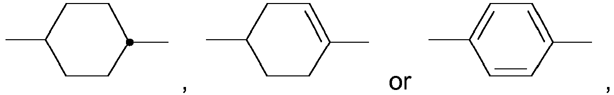 preferably 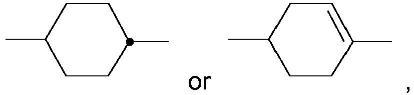 more preferably 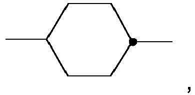
   - Z⁸: denotes -(C=O)-O-, -CH₂-O-, -CF₂-O- or -CH₂-CH₂-, preferably -(C=O)-O- or -CH₂-O-, and
   - o: denotes 0 or 1,
   - R⁹¹ and R⁹²: independently of one another have the meaning given for R⁷² above,
   - R⁹¹: preferably denotes an alkyl radical having 2 to 5 C atoms, preferably having 3 to 5 C atoms,
   - R⁹²: preferably denotes an alkyl or alkoxy radical having 2 to 5 C atoms, more preferably an alkoxy radical having 2 to 4 C atoms, or an alkenyloxy radical having 2 to 4 C atoms. 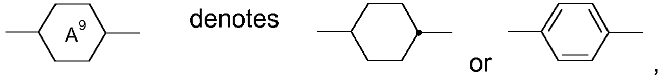
   - p and q: independently of each other denote 0 or 1, and
   - (p + q): preferably denotes 0 or 1, and in case 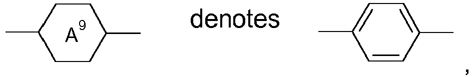
   alternatively, preferably p = q = 1, and
e) again optionally, one or more compounds of formula I, having both a high dielectric constant perpendicular to the director and parallel to the director, preferably in a concentration in the range from 1 % to 60 %, more preferably in the range from 5 % to 40 %, particularly preferably in the range from 8 % to 35 %, 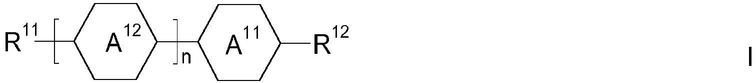 in which 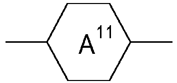 denotes 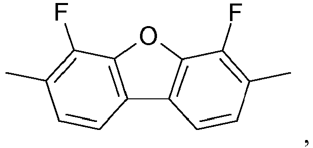 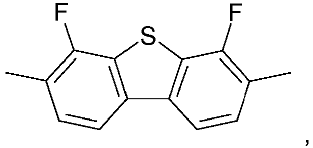 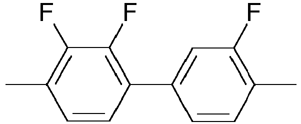 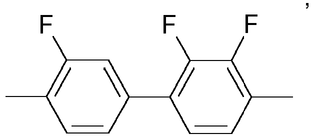 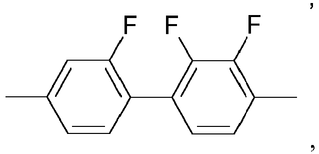 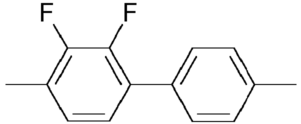 or, 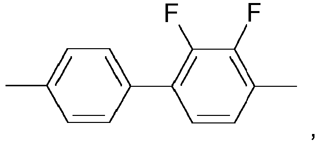 of these preferably 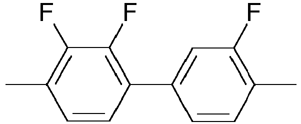 or 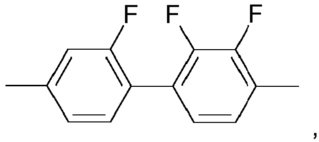 most preferably 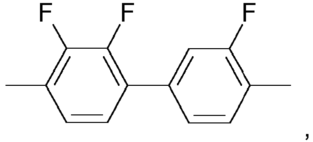 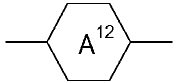 denotes 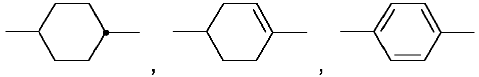 or 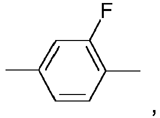
   - n: denotes 0 or 1,
   - R¹¹ and R¹²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl, alkoxy, alkenyl or alkenyloxy, most preferably alkyl, alkoxy or alkenyloxy, and R¹¹ alternatively denotes R¹ and R¹² alternatively denotes X¹,
   - R¹: denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
   - X¹: denotes F, CI, fluorinated alkyl, fluorinated alkenyl, fluorinated alkoxy or fluorinated alkenyloxy, the latter four groups preferably having 1 to 4 C atoms, preferably F, CI, CF₃ or OCF₃.

The liquid-crystalline media in accordance with the present application preferably have a nematic phase.

In an preferred embodiment the media according to the present invention comprise one or more compounds of the sub-formula IN-A of the formula IN, wherein 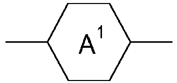 denotes

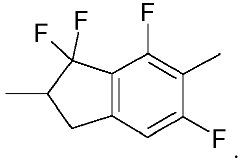

In another preferred embodiment the media according to the present invention comprise one or more compounds of formula IN-B, wherein 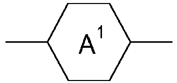 denotes

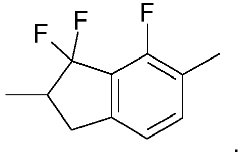

In another preferred embodiment the media according to the present invention comprise one or more compounds of formula IN-A and one or more compounds of formula IN-B.

Preferably the compounds of formula IN-A are selected from the group of compounds of formulae IN-A-1 to IN-A-5 preferably from the group of formulae IN-A-1 and/or IN-A-2 and/or IN-A-3 and/or IN-A-5 and most preferably from formulae IN-A-1 and/or IN-A-2: 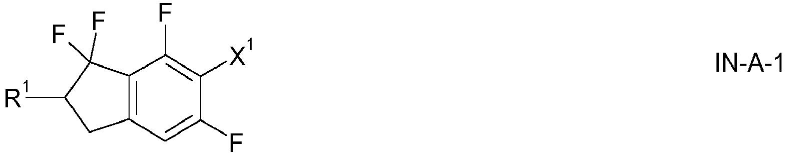 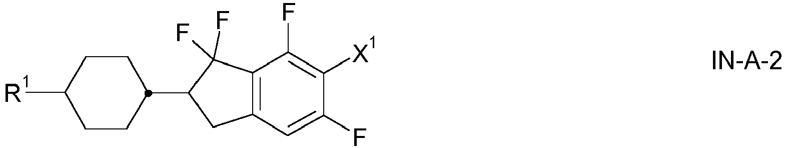 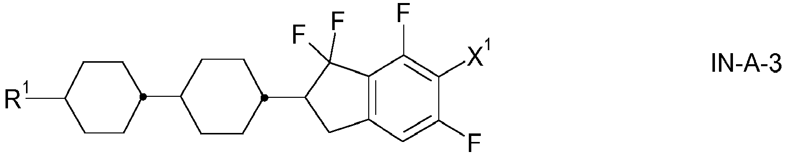 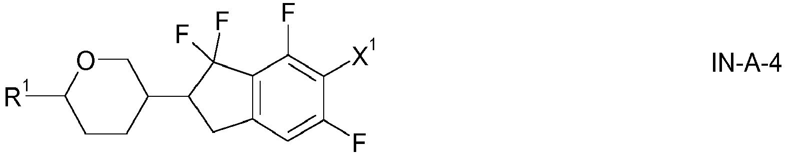 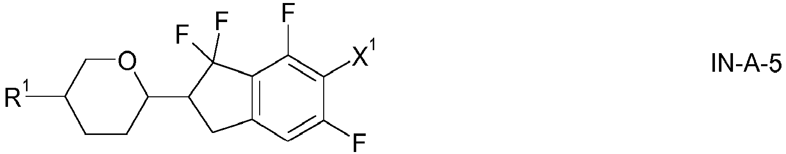 in which the parameters have the respective meanings given above and preferably
- R¹: denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
- X¹: denotes F, CI, CN, NCS, fluorinated alkyl, fluorinated alkenyl, fluorinated alkoxy or fluorinated alkenyloxy, the latter four groups preferably having 1 to 4 C atoms, preferably F, CI, CF₃ or OCF₃, more preferably CF₃ or OCF₃.

Preferably the compounds of formula IN-B are selected from the group of compounds of formulae IN-B-1 to IN-B-5 preferably from the group of formulae IN-B-1 and/or IN-B-3 and/or IN-B-4 and/or IN-B-5 and most preferably from formulae IN-B-1 and/or IN-B-4 and/or IN-B-5: 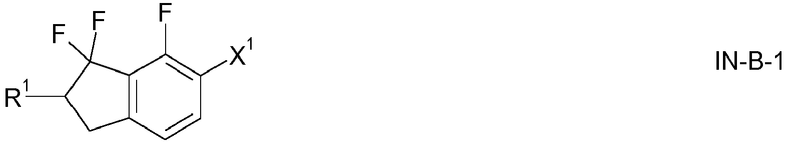 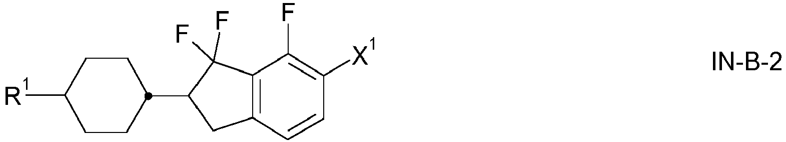 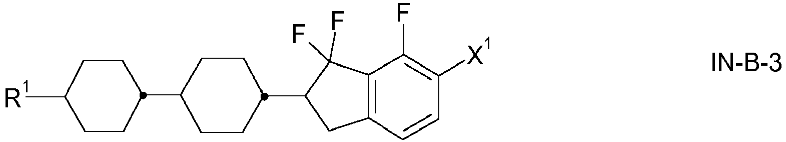 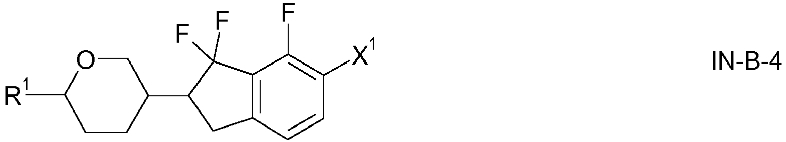 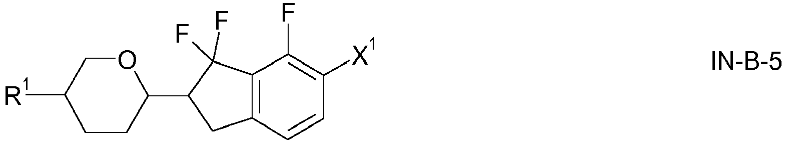 in which the parameters have the respective meanings given above and preferably
- R¹: denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
- X¹: denotes F, CI, CN, NCS, fluorinated alkyl, fluorinated alkenyl, fluorinated alkoxy or fluorinated alkenyloxy, the latter four groups preferably having 1 to 4 C atoms, preferably F, Cl, CF₃ or OCF₃, more preferably CF₃ or OCF₃.

The present invention also relates to novel compounds of formula IN-A 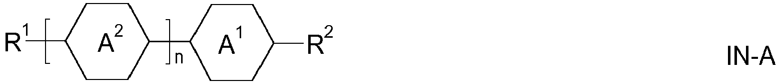 in which 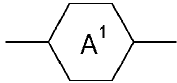 denotes 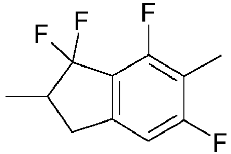 and the other parameters have the respective meanings given under formula IN above and preferably
- R¹ and R²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms, and R² alternatively denotes H or X¹ and preferably denotes X¹,
- X¹: denotes F, CI, fluorinated alkyl, fluorinated alkenyl, fluorinated alkoxy or fluorinated alkenyloxy, the latter four groups and
- n: denotes 1 or 2, preferably 1, and 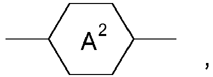 which is present, denotes 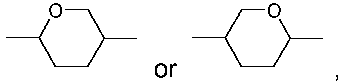 and the other, if present, denotes 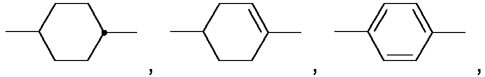 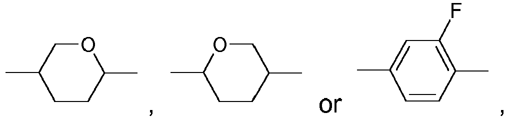 preferably

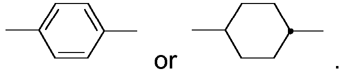

The present invention also relates to novel compounds of formula IN-B 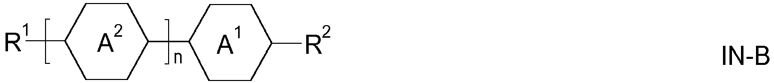 in which 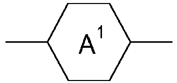 denotes 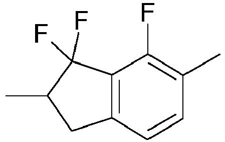
- R¹ and R²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms, and R² alternatively denotes H or X¹ and preferably denotes X¹,
- X¹: denotes F, Cl, fluorinated alkyl, fluorinated alkenyl, fluorinated alkoxy or fluorinated alkenyloxy, the latter four groups and
- n: denotes 0 or
- n: denotes 1 or 2, preferably 1, and 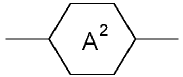
denotes, in each occurrence independently of each other, 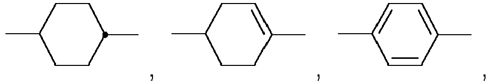 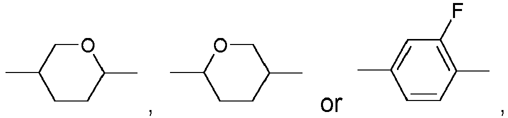 preferably

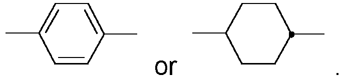

Preferably the medium comprises one or more compounds of formula I selected from the group of compounds of formulae I-1 to I-4: 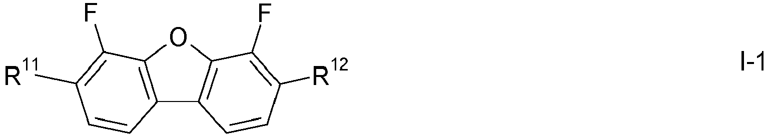 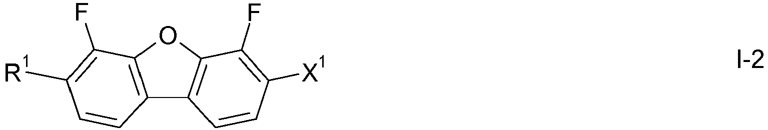 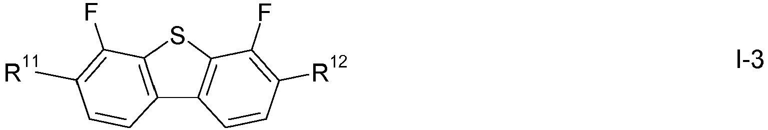 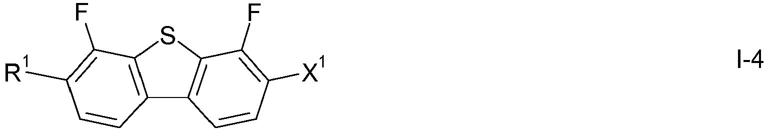 in which
- R¹¹ and R¹²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl, alkoxy, alkenyl or alkenyloxy, most preferably alkoxy or alkenyloxy,
- R¹: denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
- X¹: denotes F, CI, CN, NCS, fluorinated alkyl, fluorinated alkenyl, fluorinated alkoxy or fluorinated alkenyloxy, the latter four groups preferably having 1 to 4 C atoms, preferably F, CI, CF₃ or OCF₃, in particular for formula I-1 preferably F and for formulae I-2 and I-4 preferably OCF₃ or CF₃ in particular for formula I-1 preferably F and in formulae I-2 and I-4 preferably OCF₃ or CF₃.

Preferably the compounds of formula I are selected from the group of compounds of formulae I-5 to I-10, preferably from the group of formulae I-5 to I-8 and most preferably from formulae I-5 and I-6: 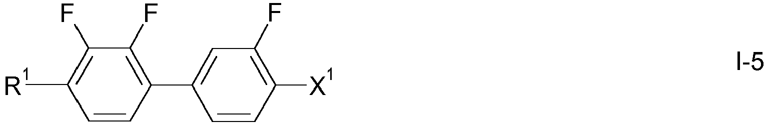 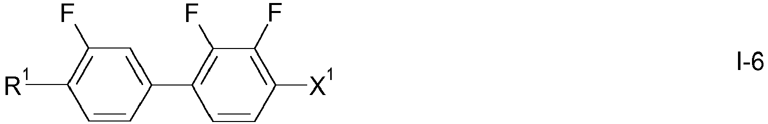 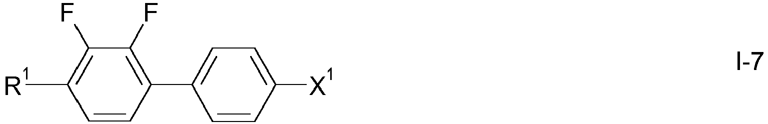 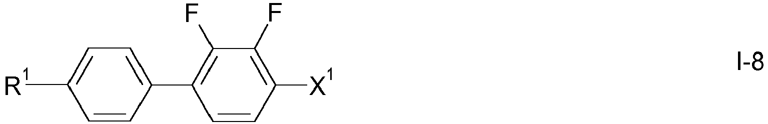 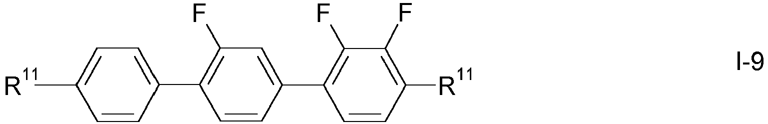 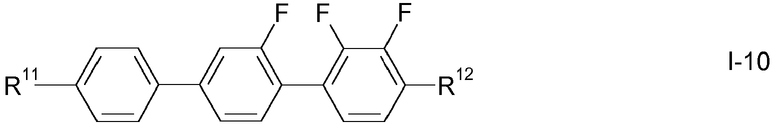 in which the parameters have the respective meanings given above and preferably
- R¹¹ and R¹²: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl, alkoxy, alkenyl or alkenyloxy, most preferably alkoxy or alkenyloxy,
- R¹: denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
- X¹: denotes F, Cl, CN, NCS, fluorinated alkyl, fluorinated alkenyl, fluorinated alkoxy or fluorinated alkenyloxy, the latter four groups preferably having 1 to 4 C atoms, preferably F, CI, CF₃ or OCF₃, more preferably CF₃ or OCF₃.

Preferably the medium comprises one or more compounds of formula I selected from the group of compounds of formulae I-1 and I-2: 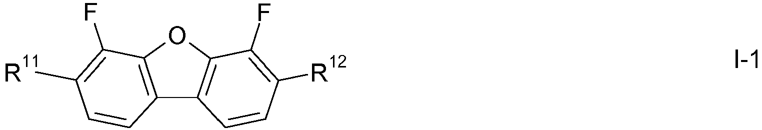 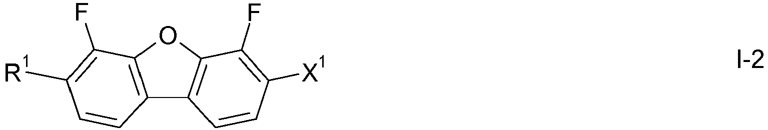 in which
- R¹¹, and R¹² and R¹: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl, alkoxy, alkenyl or alkenyloxy, most preferably alkoxy or alkenyloxy, and
- X¹: denotes F, Cl, CN, NCS, fluorinated alkyl, fluorinated alkenyl, fluorinated alkoxy or fluorinated alkenyloxy, the latter four groups preferably having 1 to 4 C atoms, preferably F, CI, CF₃ or OCF₃, more preferably CF₃ or OCF₃.

Preferably the medium comprises one or more compounds of formula I selected from the group of compounds of formulae I-3 and I-4: 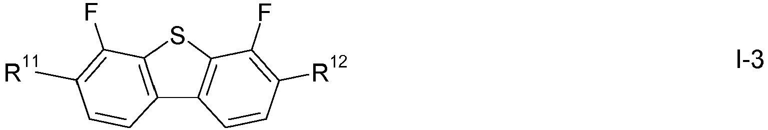 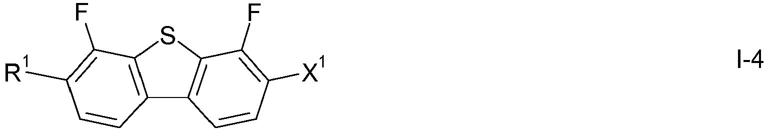 in which
- R¹¹, and R¹² and R¹: independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl, alkoxy, alkenyl or alkenyloxy, most preferably alkoxy or alkenyloxy, and
- X¹: denotes F, CI, CN, NCS, fluorinated alkyl, fluorinated alkenyl, fluorinated alkoxy or fluorinated alkenyloxy, the latter four groups preferably having 1 to 4 C atoms, preferably F, Cl, CF₃ or OCF₃, more preferably CF₃ or OCF₃.

The compounds of formula I-4 are prepared similar to the synthesis of compounds of formula I-2 according to WO 02/055463 and compounds of the formula I-3 containing two alkoxy groups (R¹¹ => R¹-O; R¹² => R¹-O) are preferably prepared starting from the basic compound dibenzothiophene according to the following scheme: **(Scheme 1a).**

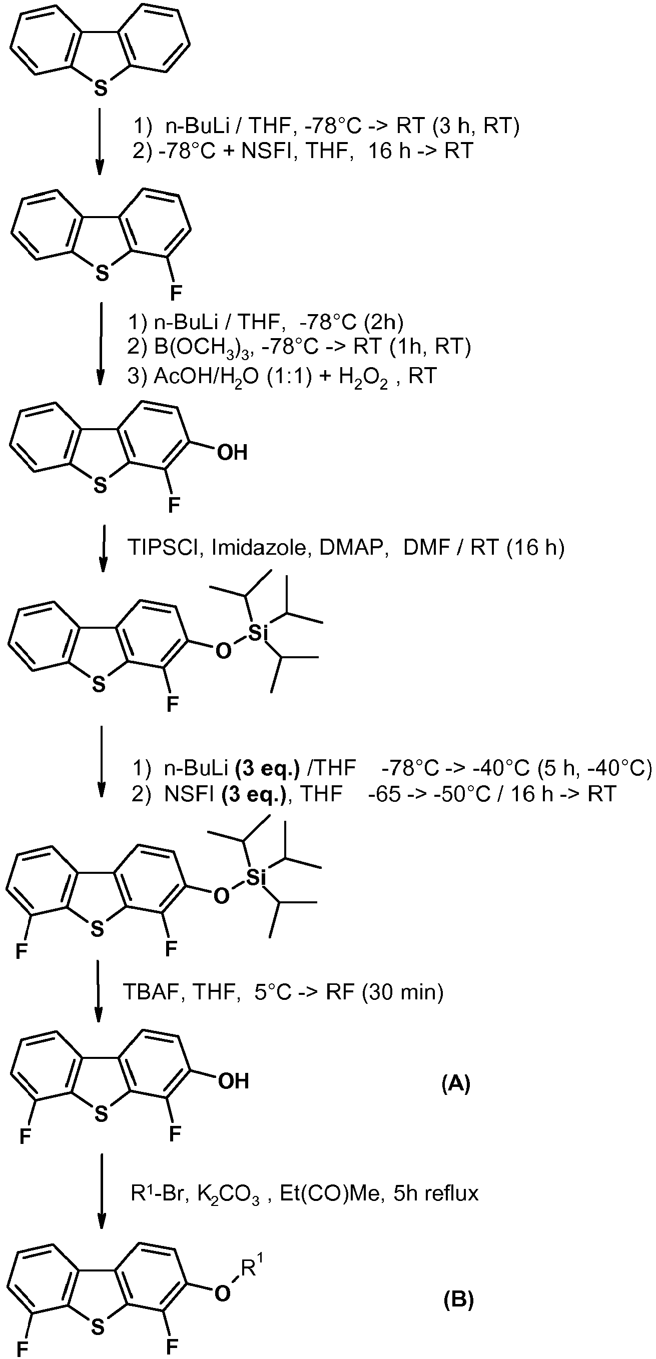

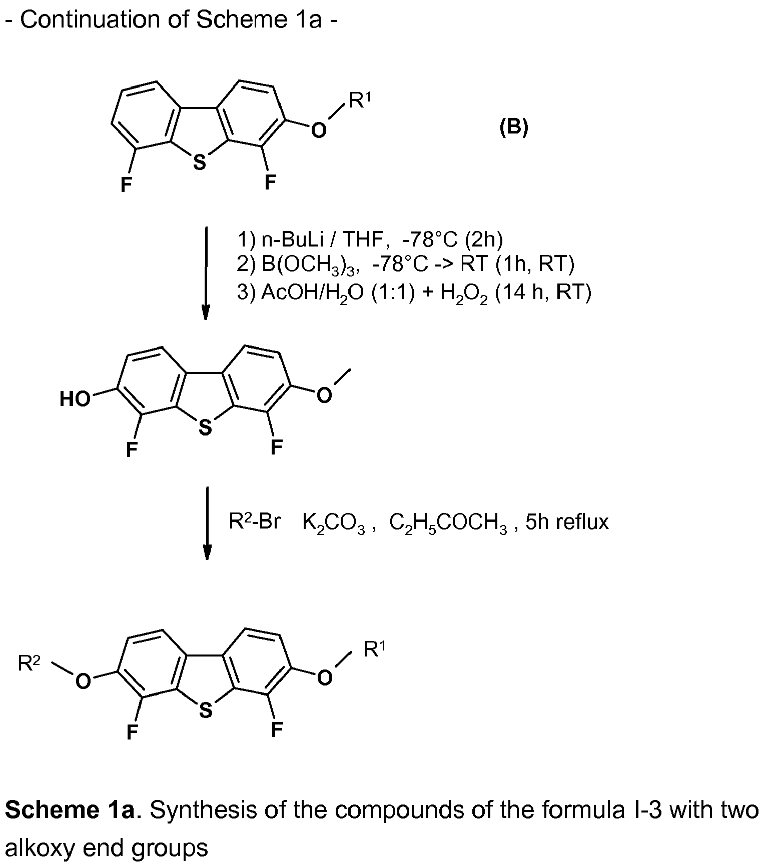

The compounds of formula I-3 containing one alkoxy group (R¹-O) and one alkyl group (R¹), (R¹¹ => R¹-O; R¹² => R²) are preferably prepared starting from the basic compound dibenzothiophene according to the following scheme: **(Scheme 2a).**

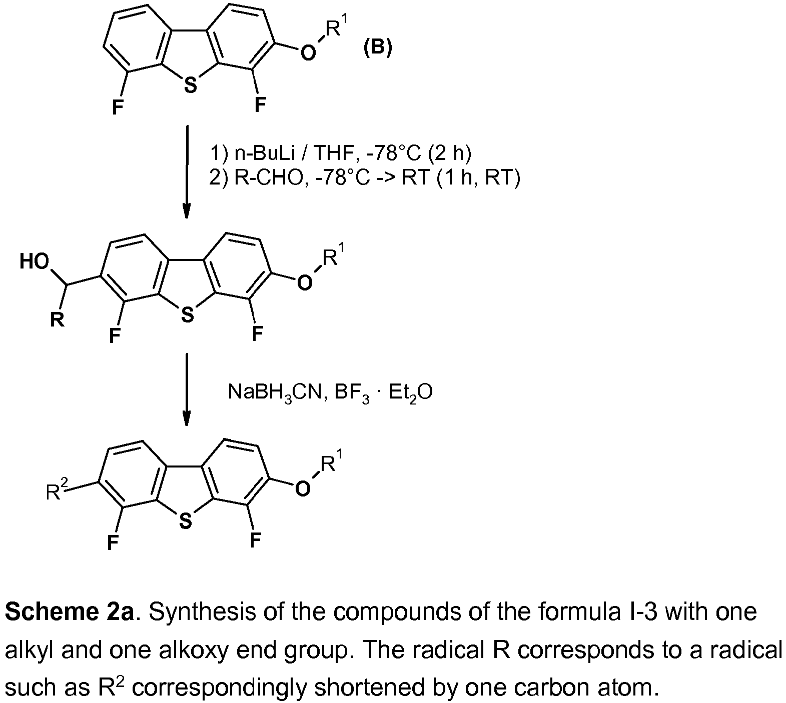

The compounds of formula I-3 containing two alkyl groups (R¹¹ => R¹; R¹² => R²) are preferably prepared starting from the basic compound dibenzothiophene according to the following scheme: **(Scheme 3a).**

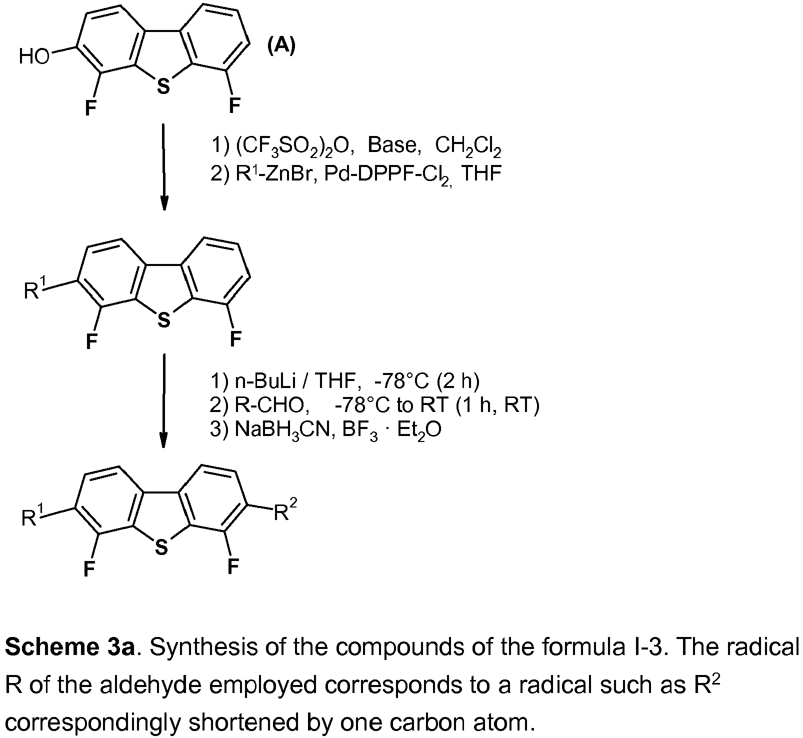

The compounds of formula I-4 are preferably prepared e.g. according to the following scheme **(Scheme 4a).**

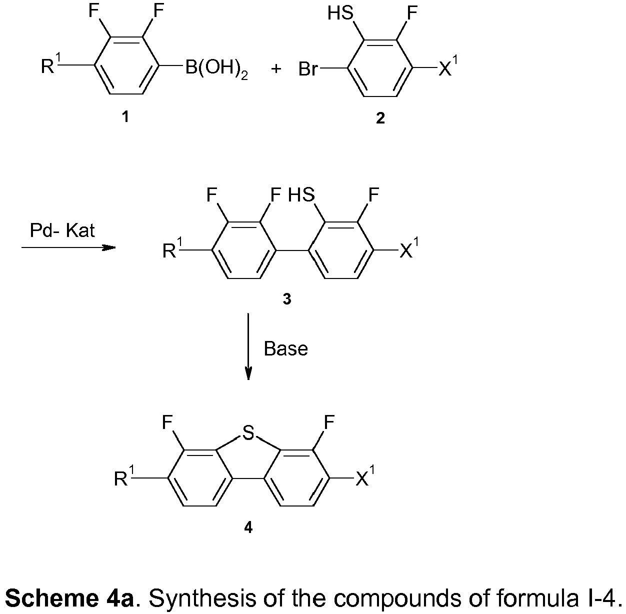

The compounds of formula I-4 are prepared according to WO 02/055463 and compounds of the formula I-2 containing two alkoxy groups (R¹¹ => R¹-O; R¹² => R²-O) are preferably prepared starting from the basic compound dibenzofuran according to the following scheme: **(Scheme 1b)**.

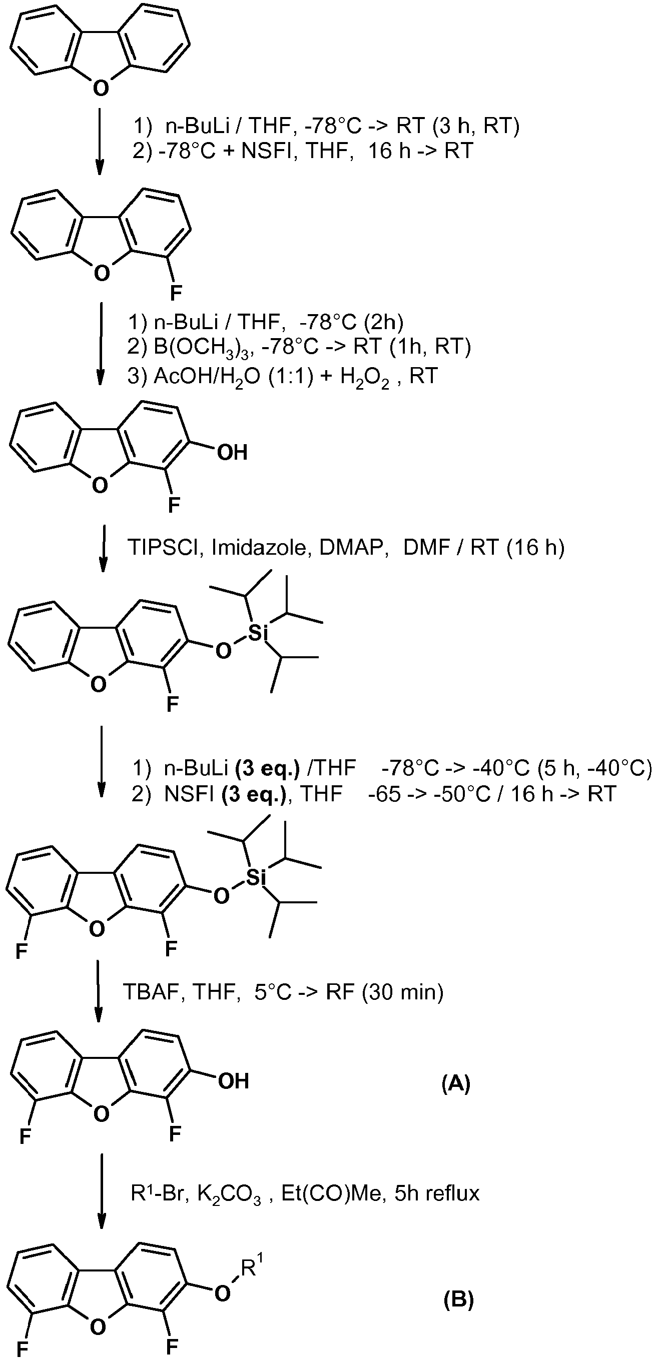

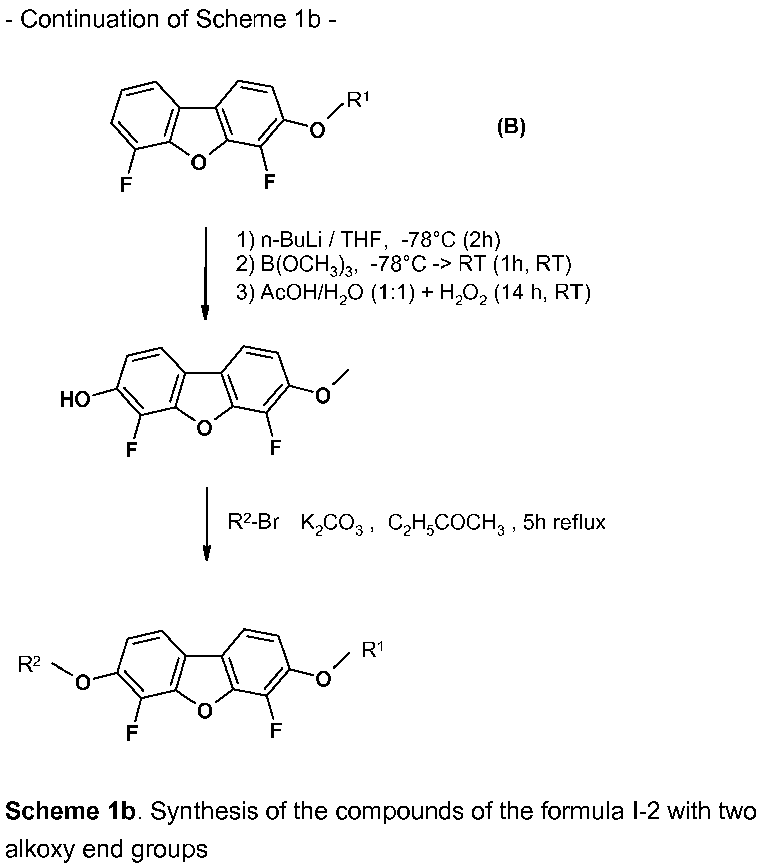

The compounds of formula I-2 containing one alkoxy group (R¹-O) and one alkyl group (R²), (R¹¹ => R¹-O; R¹² => R²) are preferably prepared starting from the basic compound dibenzofuran according to the following scheme: **(Scheme 2b).**

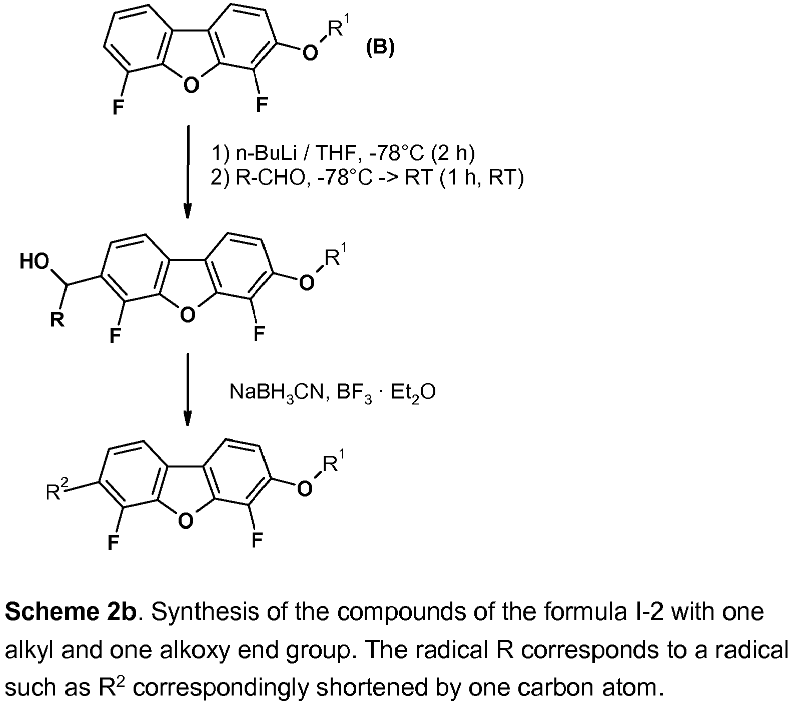

The compounds of formula I-2 containing two alkyl groups (R¹¹ => R¹; R¹² => R²) are preferably prepared starting from the basic compound dibenzofuran according to the following scheme: **(Scheme 3b).**

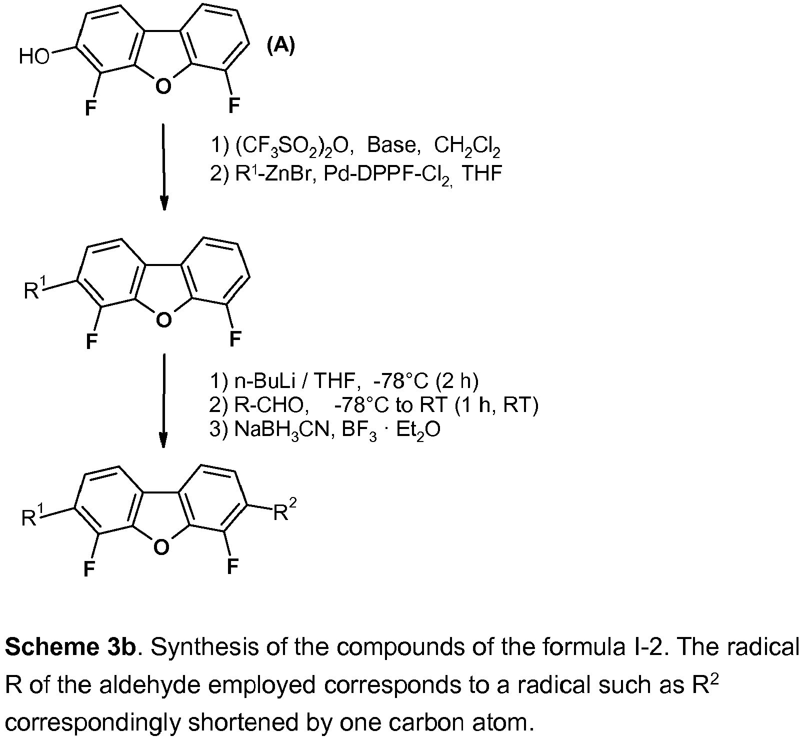

The compounds of formula I-2 are preferably prepared e.g. according to the following scheme **(Scheme 4b).**

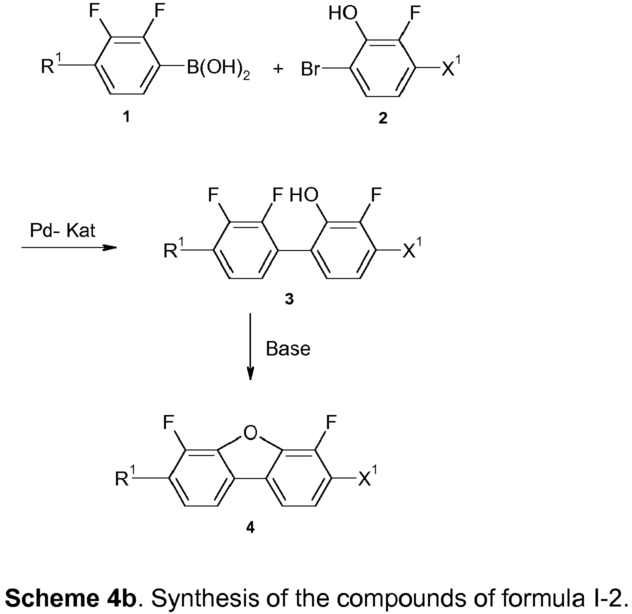

Particularly suitable synthetic routes to the compounds of formulae I-1 to I-4 used according to the invention are explained below with reference to **Scheme 5.**

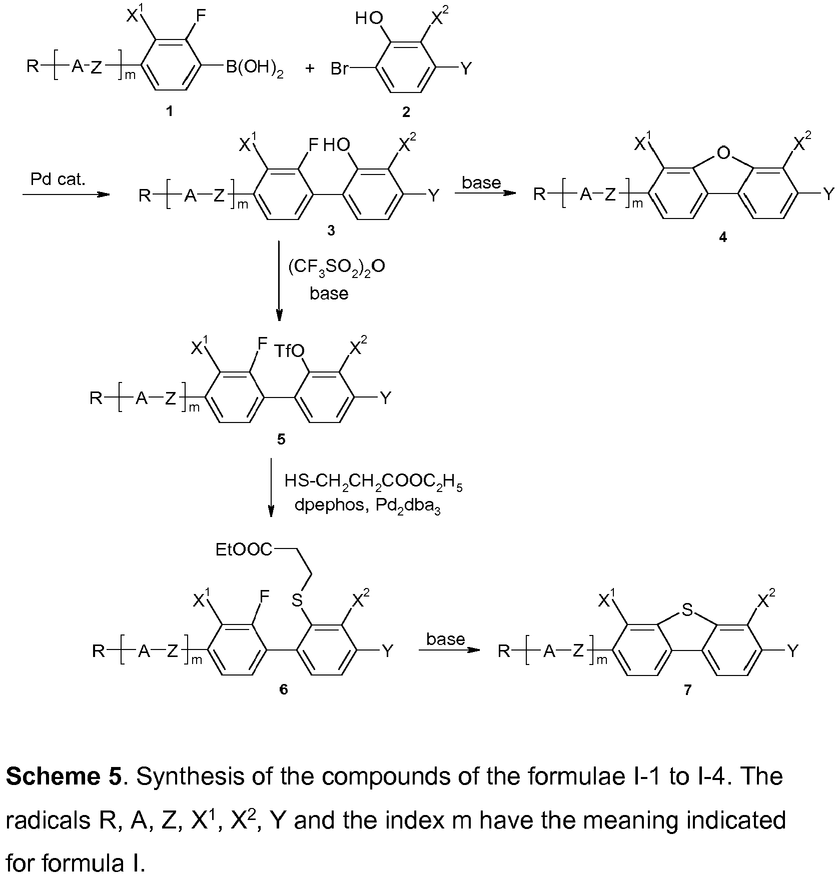

Scheme 5 should only be regarded as illustrative. The person skilled in the art will be able to carry out corresponding variations of the syntheses presented, and also follow other suitable synthetic routes, in order to obtain compounds of the formulae I-1 to I-4.

In accordance with the synthesis depicted above, the present invention in an embodiment also encompasses one or more processes for the preparation of compounds of the formulae IN-1 to IN-4.

The invention thus encompasses a process for the preparation of compounds of the formula I which is characterised in that it comprises a process step in which a compound of the formula II is converted into compounds of the formulae I-1 to I-4 in the presence of a base, as shown in **Scheme 6** and in which R, A, Z, X¹, X², W and m have the meaning indicated above and G denotes -OH, -SH or SG' and G' denotes a base-labile protecting group for thiols. Preferred protecting groups are acetyl, dimethylaminocarbonyl, 2-tetrahydropyranyl, ethoxycarbonylethyl, tert-butyl, methyl, particularly preferably ethoxycarbonylethyl.

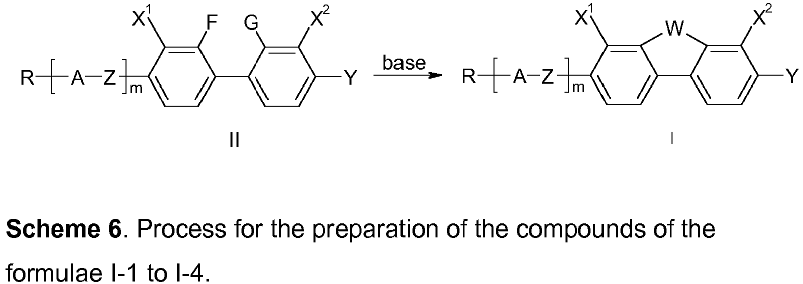

The process and the subsequent work-up of the reaction mixture can basically be carried out as a batch reaction or in a continuous reaction procedure. The continuous reaction procedure encompasses, for example, reaction in a continuous stirred-tank reactor, a stirred-reactor cascade, a loop or cross-flow reactor, a flow tube or in a microreactor. The reaction mixtures are optionally worked up, as necessary, by filtration via solid phases, chromatography, separation between immiscible phases (for example extraction), adsorption onto solid supports, removal of solvents and/or azeotropic mixtures by distillation, selective distillation, sublimation, crystallisation, co-crystallisation or by nanofiltration on membranes.

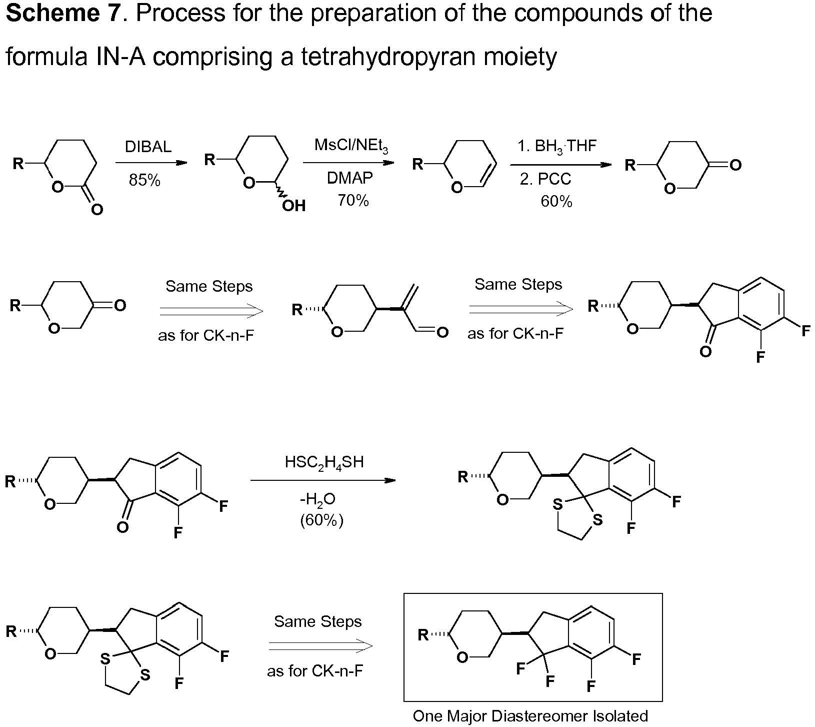

The synthesis for CK-n-F is published e.g. in M. Bremer and L. Lietzau, New J. Chem. 2005, 29, p. 72-74. The compounds of formula IN-B, wherein n is 0, are prepared analogously.

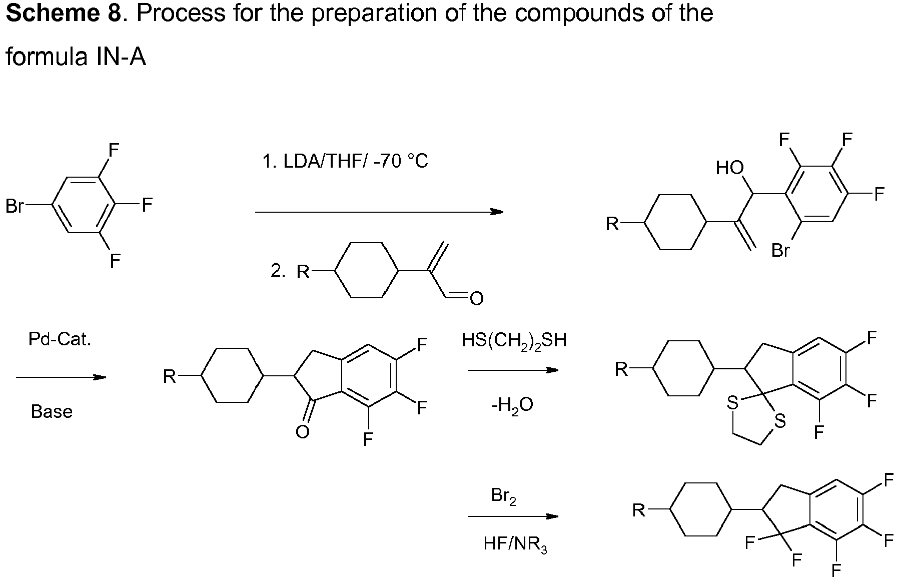

The invention furthermore relates to the use of liquid-crystal mixtures and liquid-crystalline media according to the invention in IPS and FFS displays, in particular the use in SG-FFS displays containing a liquid-crystalline medium, for improving the response times and/or the transmission.

The invention furthermore relates to a liquid-crystal display containing a liquid-crystalline medium according to the invention, in particular an IPS or FFS display, particularly preferably a FFS or SG-FFS display.

The invention furthermore relates to a liquid-crystal display of the IPS or FFS type comprising a liquid-crystal cell consisting of two substrates, where at least one substrate is transparent to light and at least one substrate has an electrode layer, and a layer, located between the substrates, of a liquid-crystalline medium comprising a polymerised component and a low-molecular-weight component, where the polymerised component is obtainable by polymerisation of one or more polymerisable compounds in the liquid-crystalline medium between the substrates of the liquid-crystal cell, preferably with application of an electrical voltage and where the low-molecular-weight component is a liquid-crystal mixture according to the invention as described above and below.

The displays in accordance with the present invention are preferably addressed by an active matrix (active matrix LCDs, AMDs for short), preferably by a matrix of thin-film transistors (TFTs). However, the liquid crystals according to the invention can also be used in an advantageous manner in displays having other known addressing means.

The invention furthermore relates to a process for the preparation of a liquid-crystalline medium according to the invention by mixing one or more compounds of formula IN, preferably selected from the group of compounds of formulae IN-1 to IN-4, optionally with one or more compounds of formula I, preferably selected from the group of formulae I-1 to I-4 and/or I-5 to I-10, with one or more low-molecular-weight liquid-crystalline compounds, or a liquid-crystal mixture and optionally with further liquid-crystalline compounds and/or additives.

The following meanings apply above and below:
The term "FFS" is, unless indicated otherwise, used to represent FFS and SG-FFS displays.
The term "mesogenic group" is known to the person skilled in the art and is described in the literature, and denotes a group which, due to the anisotropy of its attracting and repelling interactions, essentially contributes to causing a liquid-crystalline (LC) phase in low-molecular-weight or polymeric substances. Compounds containing mesogenic groups (mesogenic compounds) do not necessarily have to have a liquid-crystalline phase themselves. It is also possible for mesogenic compounds to exhibit liquid-crystalline phase behavior only after mixing with other compounds and/or after polymerisation. Typical mesogenic groups are, for example, rigid rod- or disc-shaped units. An overview of the terms and definitions used in connection with mesogenic or liquid-crystalline compounds is given in Pure Appl. Chem. 73(5), 888 (2001) and C. Tschierske, G. Pelzl, S. Diele, Angew. Chem. 2004, 116, 6340-6368.
The term "spacer group" or "spacer" for short, also referred to as "Sp" above and below, is known to the person skilled in the art and is described in the literature, see, for example, Pure Appl. Chem. 73(5), 888 (2001) and C. Tschierske, G. Pelzl, S. Diele, Angew. Chem. 2004, 116, 6340-6368. Unless indicated otherwise, the term "spacer group" or "spacer" above and below denotes a flexible group which connects the mesogenic group and the polymerisable group(s) to one another in a polymerisable mesogenic compound.

For the purposes of this invention, the term "liquid-crystalline medium" is intended to denote a medium which comprises a liquid-crystal mixture and one or more polymerisable compounds (such as, for example, reactive mesogens). The term "liquid-crystal mixture" (or "host mixture") is intended to denote a liquid-crystalline mixture which consists exclusively of unpolymerisable, low-molecular-weight compounds, preferably of two or more liquid-crystalline compounds and optionally further additives, such as, for example, chiral dopants or stabilisers.

Particular preference is given to liquid-crystal mixtures and liquid-crystalline media which have a nematic phase, in particular at room temperature.

In a preferred embodiment of the present invention, the liquid-crystal medium comprises one or more dielectrically positive compounds having a dielectric anisotropy of greater than 3, selected from the group of the compounds of the formulae II-1 and II-2: 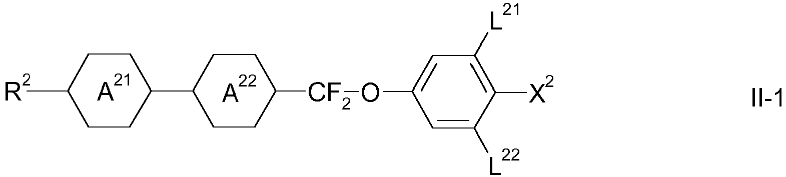 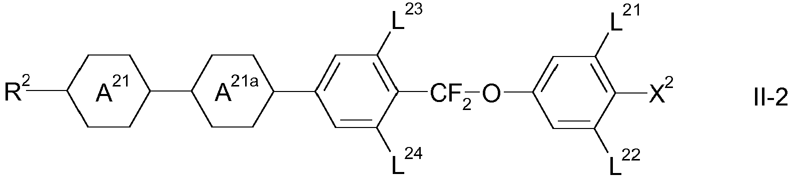 n which the parameters have the respective meanings indicated above under formula II, and L²³ and L²⁴, independently of one another, denote H or F, preferably L²³ denotes F, and 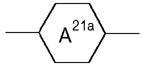 has one of the meanings given for 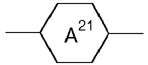 and, in the case of formulae II-1 and II-2, X² preferably denotes F or OCF₃, particularly preferably F, and, in the case of formula II-2, 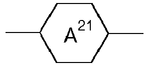 and 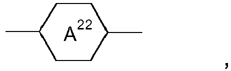 independently of one another, preferably denote 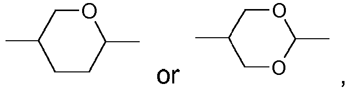 and/or selected from the group of the compounds of the formulae III-1 and III-2: 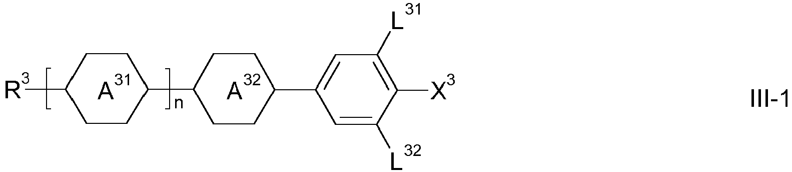 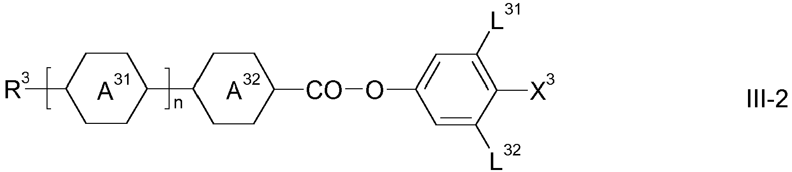 in which the parameters have the meanings given under formula III,
and the media in accordance with the present invention may comprise, alternatively or in addition to the compounds of the formulae III-1 and/or III-2, one or more compounds of the formula III-3 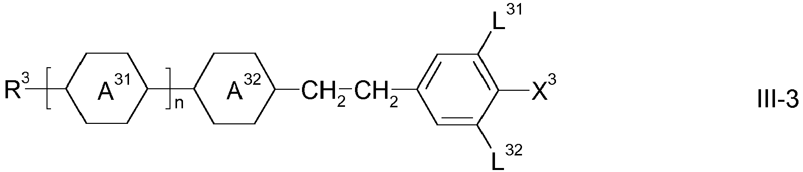 in which the parameters have the respective meanings indicated above, and the parameters L³¹ and L³², independently of one another and of the other parameters, denote H or F.

The liquid-crystal medium preferably comprises compounds selected from the group of the compounds of the formulae II-1 and II-2 in which L²¹ and L²² and/or L²³ and L²⁴ both denote F.

In a preferred embodiment, the liquid-crystal medium comprises compounds selected from the group of the compounds of the formulae II-1 and II-2 in which L²¹, L²², L²³ and L²⁴ all denote F.

The liquid-crystal medium preferably comprises one or more compounds of the formula II-1. The compounds of the formula II-1 are preferably selected from the group of the compounds of the formulae II-1a to II-1e, preferably one or more compounds of formulaeII-1a and/or II-1b and/or II-1d, preferably of formula II-1a and/or II-1d or II-1b and/or II-1d, most preferably of formula II-1d: 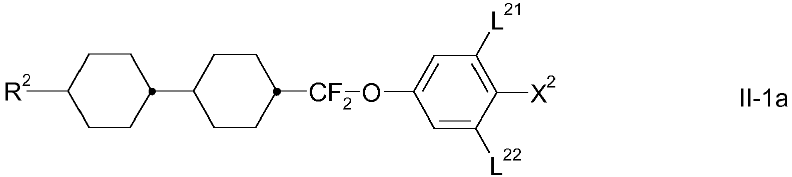 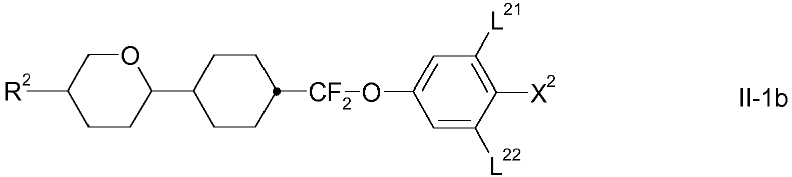 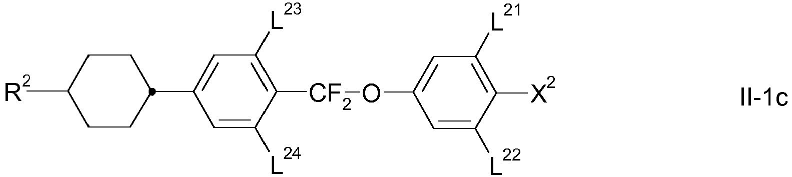 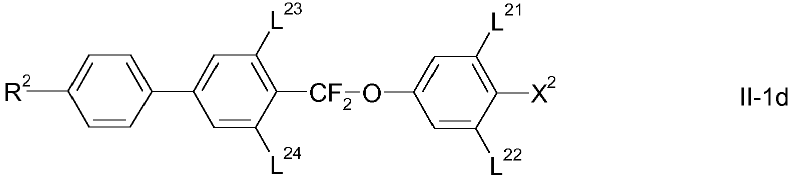 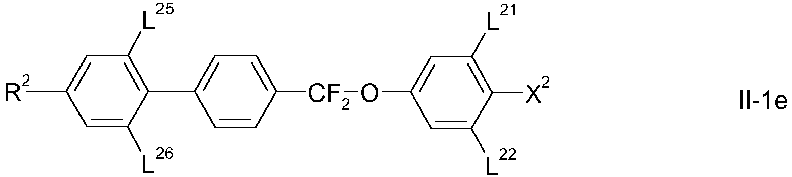 in which the parameters have the respective meanings indicated above, and L²⁵ and L²⁶, independently of one another and of the other parameters, denote H or F, and preferably
in the formulae II-1 a and II-1 b,
L²¹ and L²² both denote F,
in the formulae II-1c and II-1d,
L²¹ and L²² both denote F and/or L²³ and L²⁴ both denote F, and
in formula II-1e,
L²¹, L²² and L²³ denote F.

The liquid-crystal medium preferably comprises one or more compounds of the formula II-2, which are preferably selected from the group of the compounds of the formulae II-2a to II-2k, preferably one or more compounds each of formulae II-2a and/or II-2h and/or II-2j: 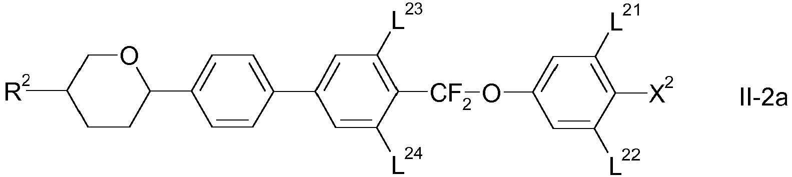 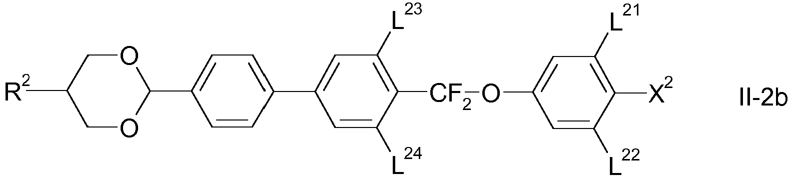 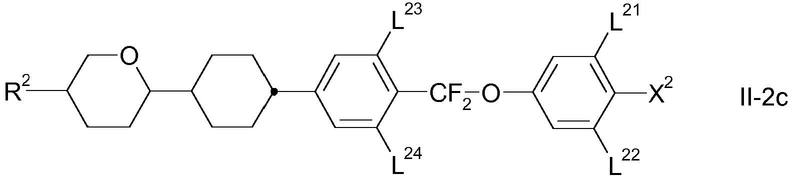 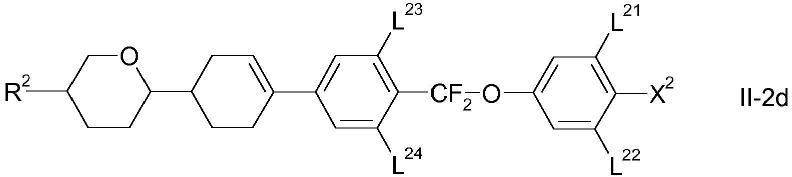 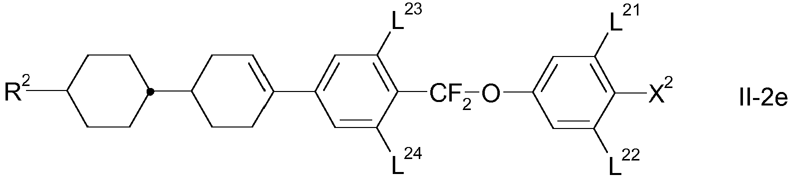 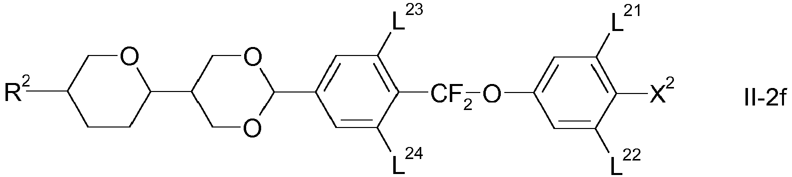 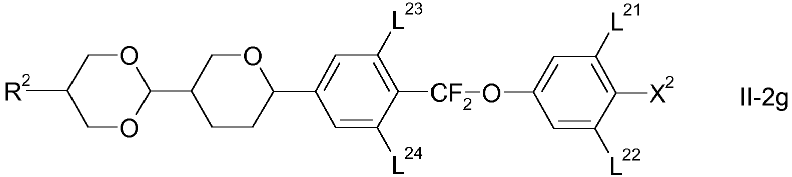 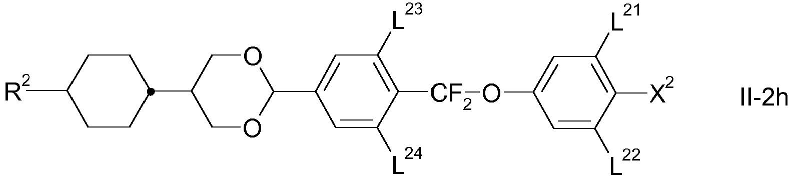 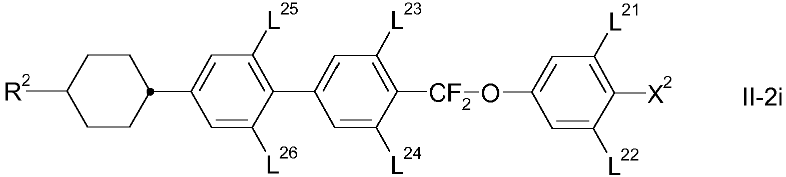 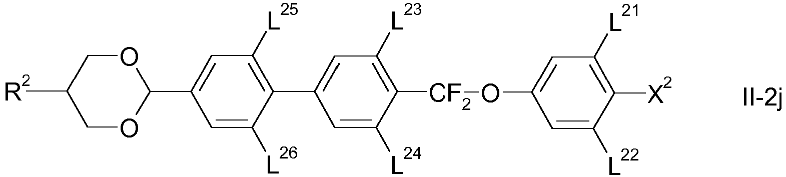 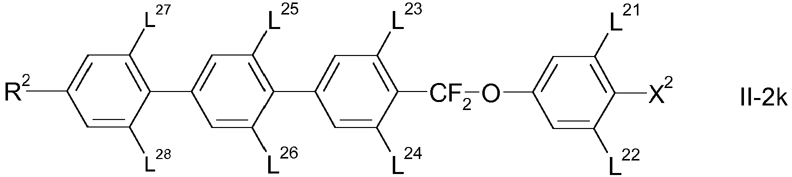 in which the parameters have the respective meanings indicated above, and L²⁵ to L²⁸, independently of one another, denote H or F, preferably L²⁷ and L²⁸ both denote H, particularly preferably L²⁶ denotes H.

The liquid-crystal medium preferably comprises compounds selected from the group of the compounds of the formulae II-1a to II-1e in which L²¹ and L²² both denote F and/or L²³ and L²⁴ both denote F.

In a preferred embodiment, the liquid-crystal medium comprises compounds selected from the group of the compounds of the formulae II-2a to II-2k in which L²¹, L²², L²³ and L²⁴ all denote F.

Especially preferred compounds of the formula II-2 are the compounds of the following formulae, particularly preferred of formulae II-2a-1 and/or II-2h-1 and/or II-2k-2: 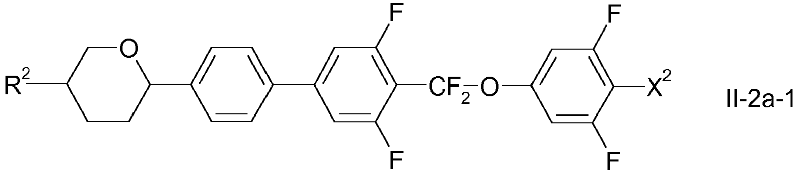 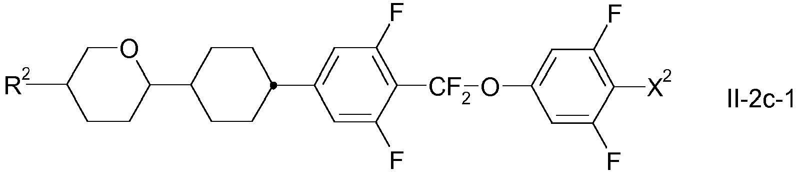 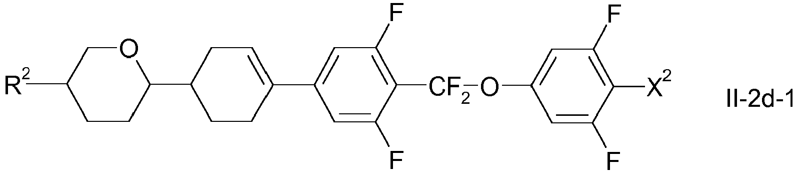 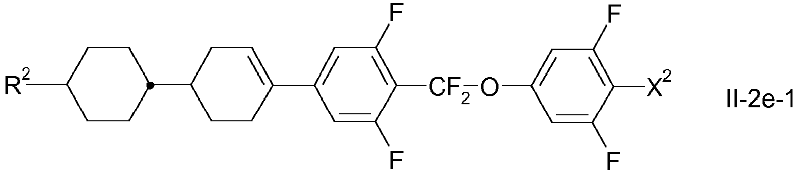 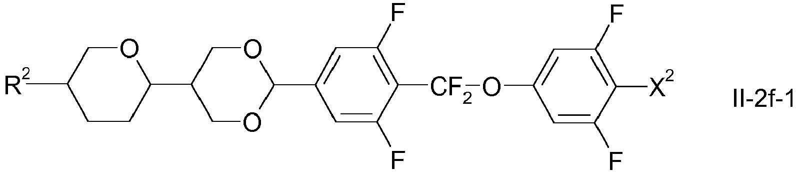 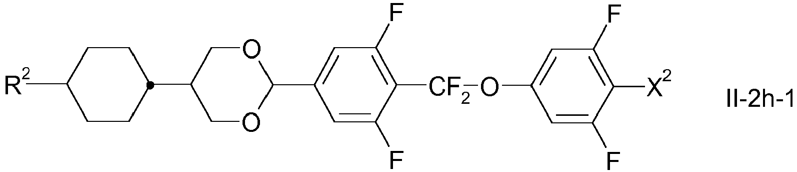 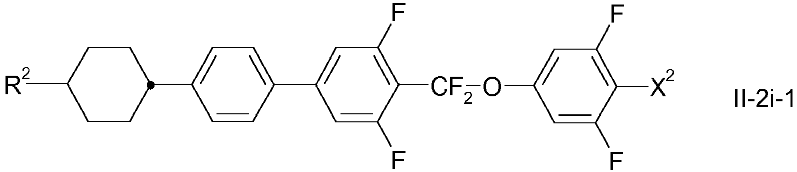 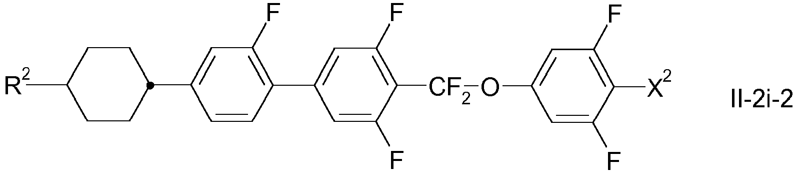 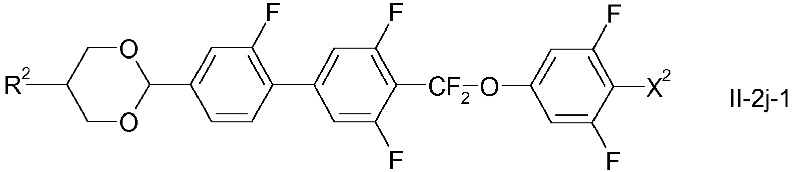 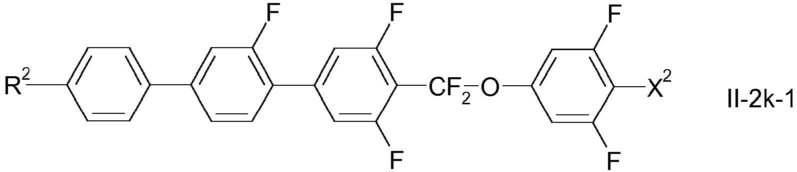 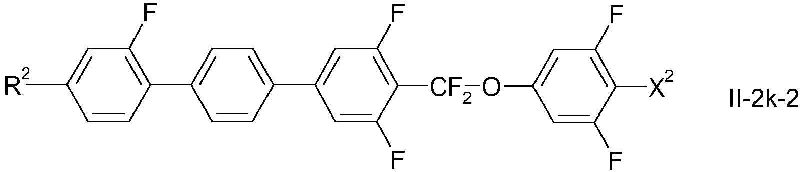 in which R² and X² have the meanings indicated above, and X² preferably denotes F.

The liquid-crystal medium preferably comprises one or more compounds of the formula III-1. The compounds of the formula III-1 are preferably selected from the group of the compounds of the formulae III-1a to III-1j, preferably from formulae III-1 c, III-1f, III-1 g and III-1j: 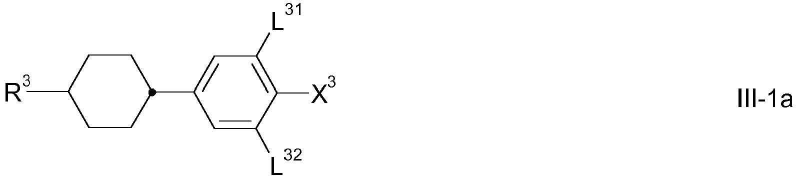 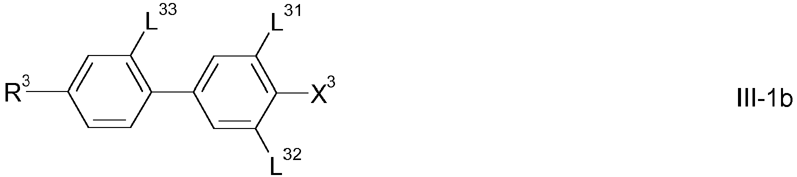 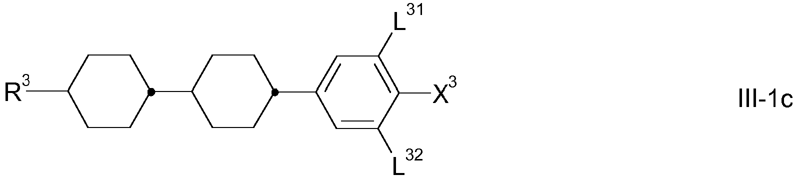 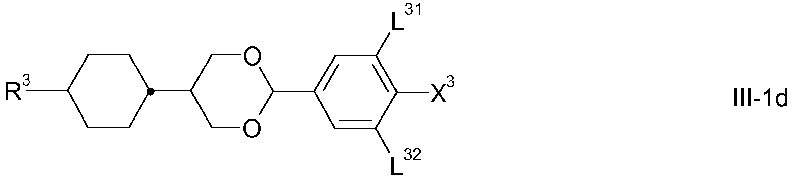 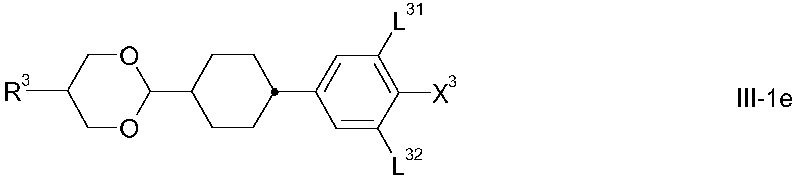 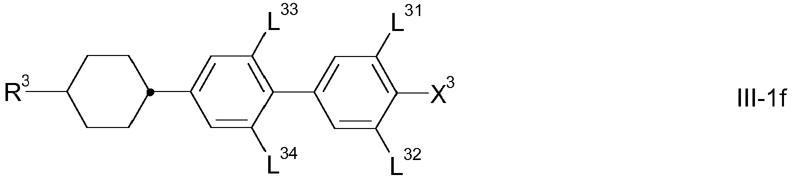 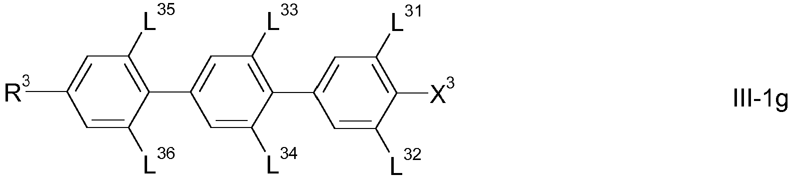 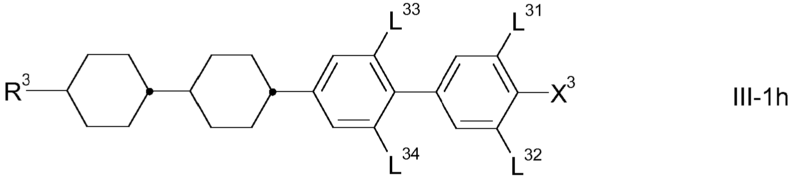 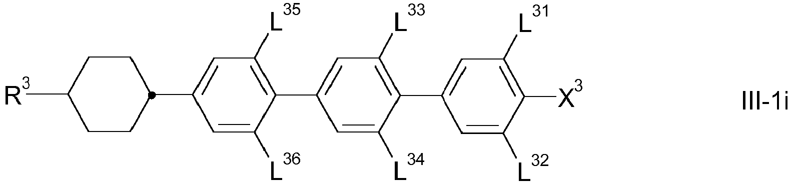 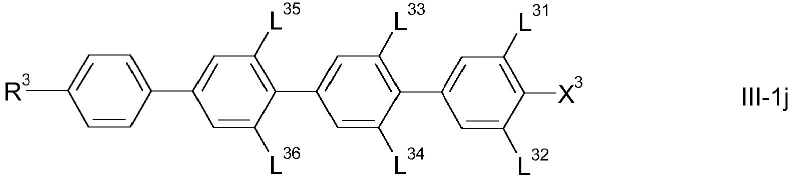 in which the parameters have the meanings given above and preferably in which the parameters have the respective meanings indicated above, the parameters L³⁵ and L³⁶, independently of one another and of the other parameters, denote H or F, and the parameters L³⁵ and L³⁶, independently of one another and of the other parameters, denote H or F.

The liquid-crystal medium preferably comprises one or more compounds of the formula III-1 c, which are preferably selected from the group of the compounds of the formulae III-1c-1 to III-1 c-5, preferably of formulae III-1 c-1 and/or III-1 c-2, most preferably of formula III-1 c-1: 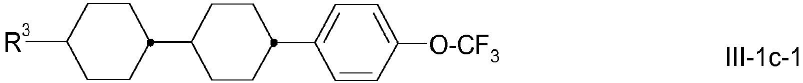 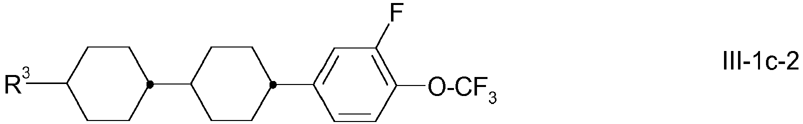 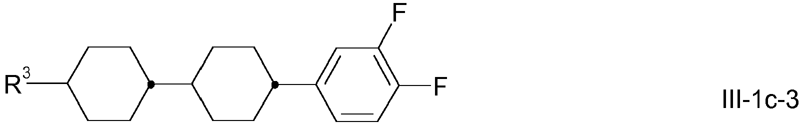 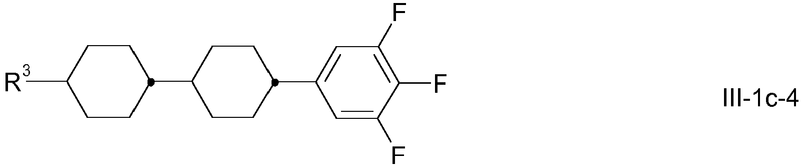 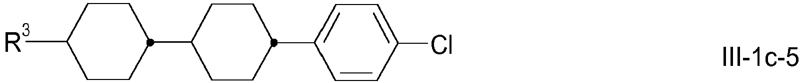 in which R³ has the meaning indicated above.

The liquid-crystal medium preferably comprises one or more compounds of the formula III-1f, which are preferably selected from the group of the compounds of the formulae III-1f-1 to III-1f-6, preferably of formulae III-1f-1 and/or III-1f-2 and/or III-1f-3 and /or III-1f-6, more preferably of formula III-1f-3 and/or III-1f-6, more preferably of formula III-1f-6 : 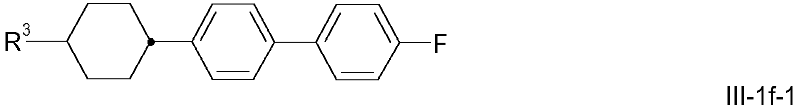 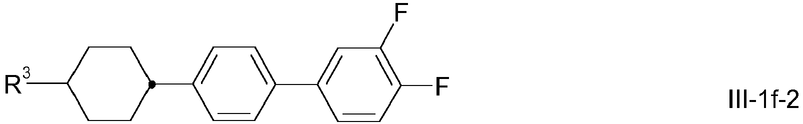 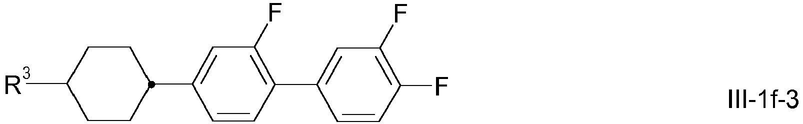 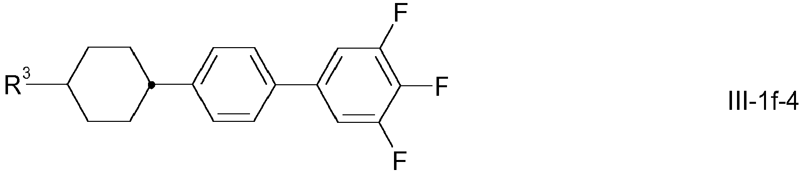 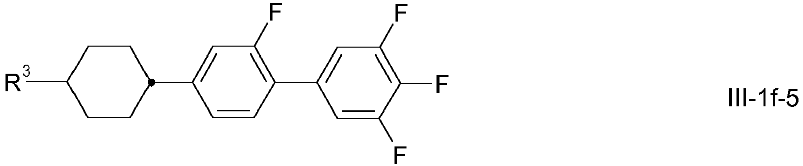 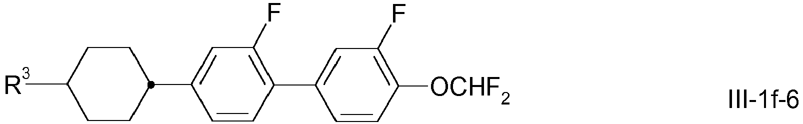 in which R³ has the meaning indicated above.

The liquid-crystal medium preferably comprises one or more compounds of the formula III-1 g, which are preferably selected from the group of the compounds of the formulae III-1g-1 to III-1g-5, preferably of formula III-1g-3: 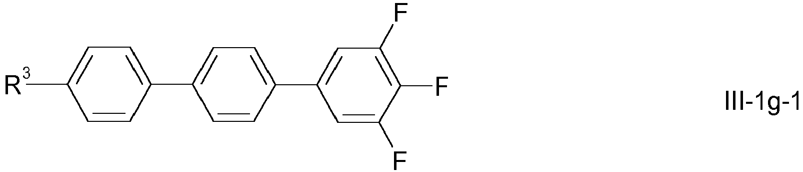 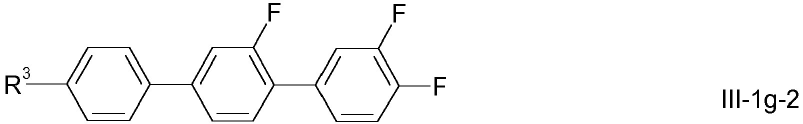 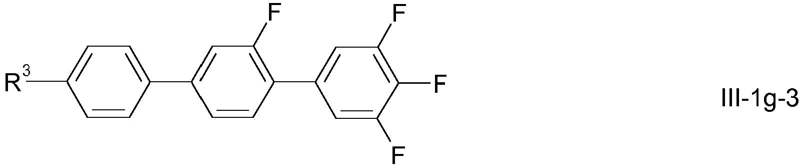 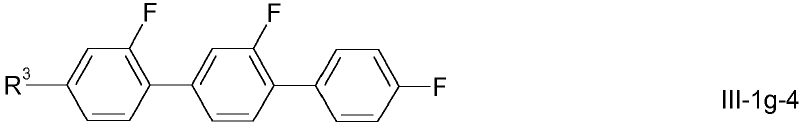 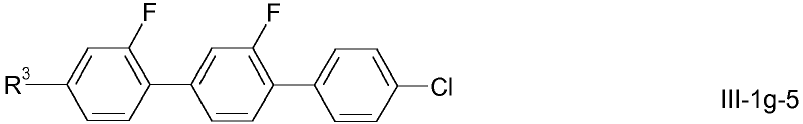 in which R³ has the meaning indicated above.

The liquid-crystal medium preferably comprises one or more compounds of the formula III-1 h, which are preferably selected from the group of the compounds of the formulae III-1h-1 to III-1 h-3, preferably of the formula III-1 h-3: 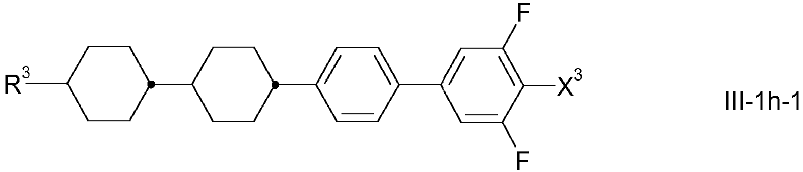 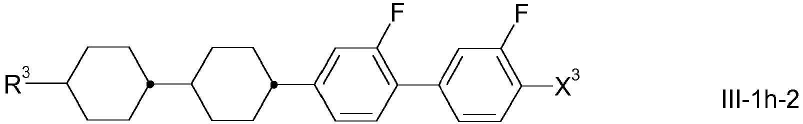 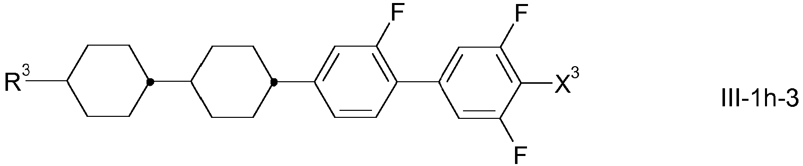 in which the parameters have the meanings given above, and X³ preferably denotes F.

The liquid-crystal medium preferably comprises one or more compounds of the formula III-1 i, which are preferably selected from the group of the compounds of the formulae III-1 i-1 and III-1 i-2, preferably of the formula III-1 i-2: 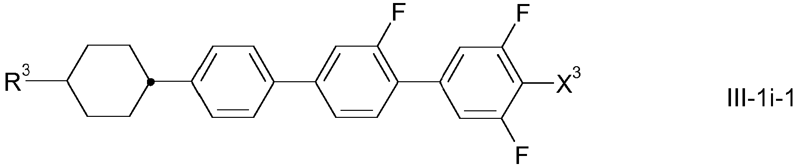 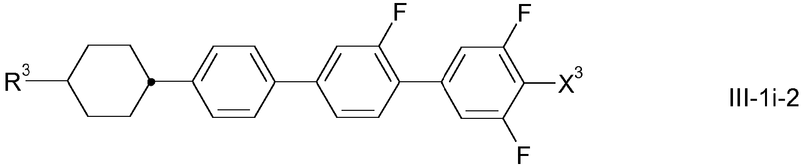 in which the parameters have the meanings given above, and X³ preferably denotes F.

The liquid-crystal medium preferably comprises one or more compounds of the formula III-1j, which are preferably selected from the group of the compounds of the formulae III-1j-1 and III-1j-2, preferably of the formula III-1j-1: 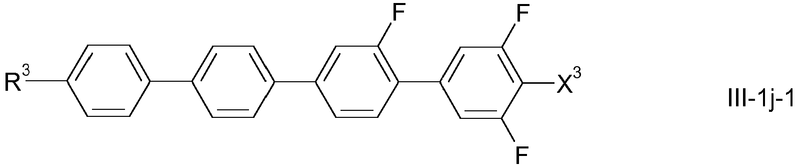 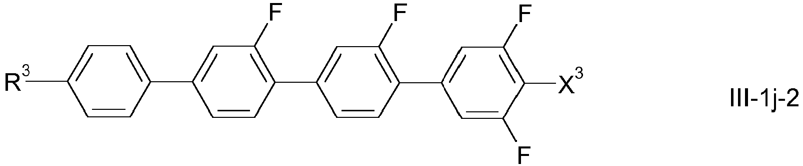 in which the parameters have the meanings given above.

The liquid-crystal medium preferably comprises one or more compounds of the formula III-2. The compounds of the formula III-2 are preferably selected from the group of the compounds of the formulae III-2a and III-2b, preferably of formula III-2b: 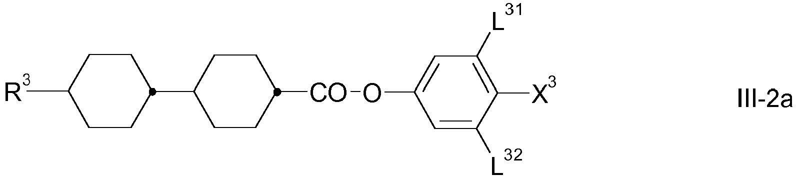 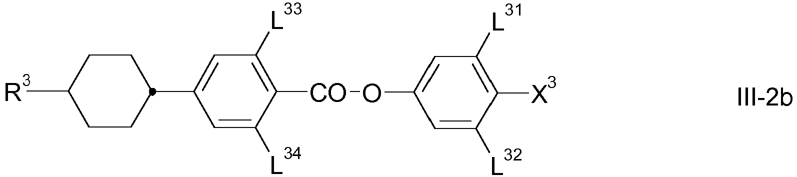 in which the parameters have the respective meanings indicated above, and the parameters L³³ and L³⁴, independently of one another and of the other parameters, denote H or F.

The liquid-crystal medium preferably comprises one or more compounds of the formula III-2a, which are preferably selected from the group of the compounds of the formulae III-2a-1 to III-2a-6: 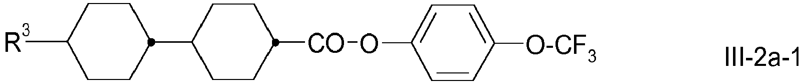 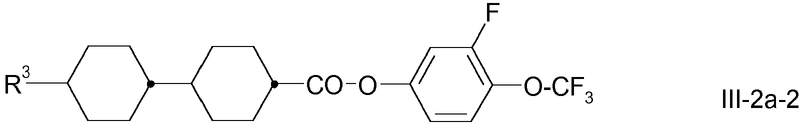 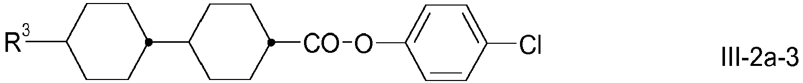 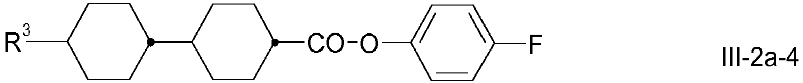 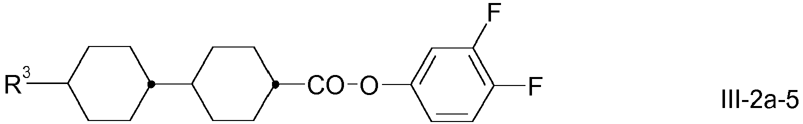 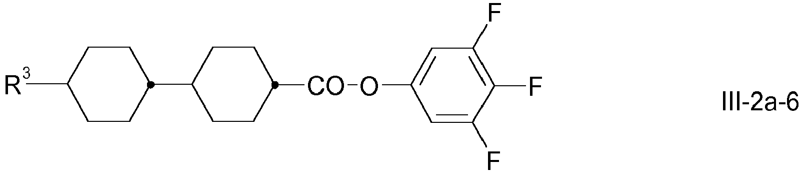 in which R³ has the meaning indicated above.

The liquid-crystal medium preferably comprises one or more compounds of the formula III-2b, which are preferably selected from the group of the compounds of the formulae III-2b-1 to III-2b-4, preferably III-2b-4: 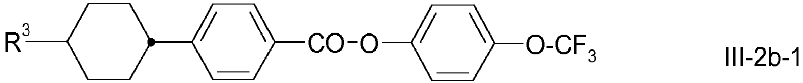 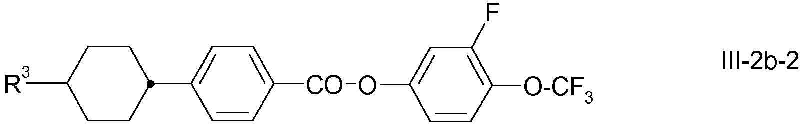 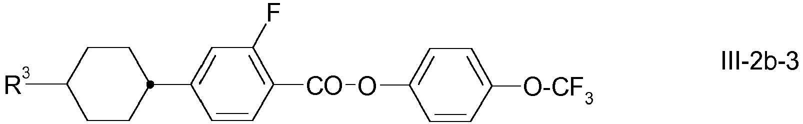 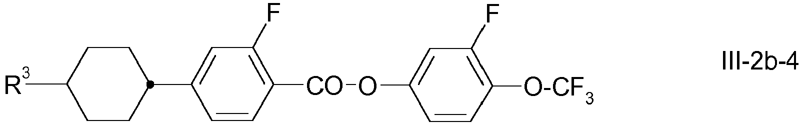 in which R³ has the meaning indicated above.

Alternatively or in addition to the compounds of the formulae III-1 and/or III-2, the media in accordance with the present invention may comprise one or more compounds of the formula III-3 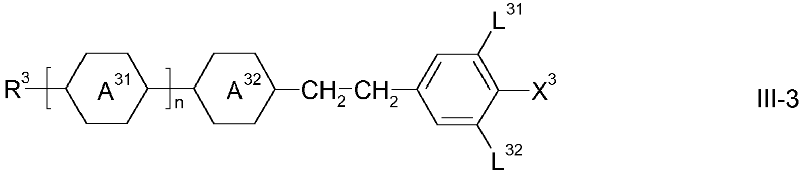 in which the parameters have the respective meanings indicated above under formula III.

These compounds are preferably selected from the group of the formulae III-3a and III-3b: 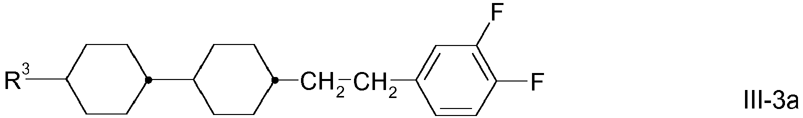 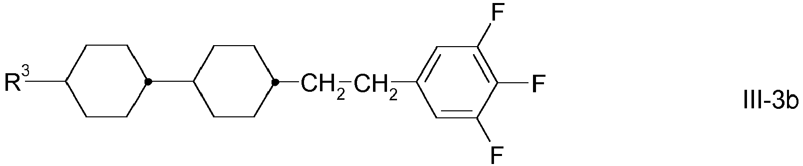 in which R³ has the meaning indicated above.

The liquid-crystalline media in accordance with the present invention preferably comprise one or more dielectrically neutral compounds having a dielectric anisotropy in the range from -1.5 to 3, preferably selected from the group of the compounds of the formulae IV and V.

Besides these, the liquid-crystalline media in accordance with the present invention preferably comprise one or more dielectrically negative compounds having a dielectric anisotropy of less than -1.5, preferably selected from the group of the compounds of the formulae VI, VII, VIII and IX.

In the present application, the elements all include their respective isotopes. In particular, one or more H in the compounds may be replaced by D, and this is also particularly preferred in some embodiments. A correspondingly high degree of substitution of hydrogen by deuterium of the corresponding compounds enables, for example, detection and recognition of the compounds. This is very helpful in some cases, in particular in the case of the compounds of formula I.

In the present application,
- alkyl: particularly preferably denotes straight-chain alkyl, in particular CH₃-, C₂H₅-, *n*-C₃H₇-, *n*-C₄H₉- or *n*-C₅H₁₁-, and
- alkenyl: particularly preferably denotes CH₂=CH-, *E*-CH₃-CH=CH-, CH₂=CH-CH₂-CH₂-, *E*-CH₃-CH=CH-CH₂-CH₂- or *E*-(*n*-C₃H₇)-CH=CH-.

In a preferred embodiment of the present invention, the media according to the invention in each case comprise one or more compounds of formula VI selected from the group of the compounds of the formulae VI-1 and VI-2, preferably one or more compounds each of formulae VI-1 and one or more compounds of formula VI-2, 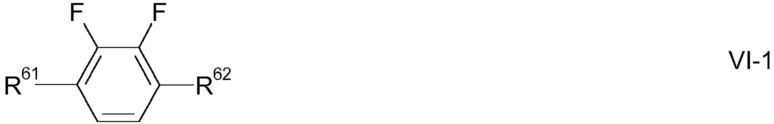 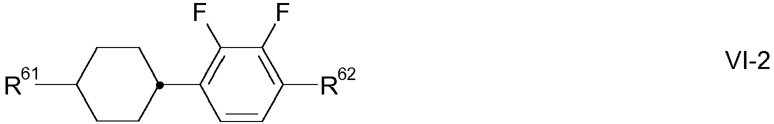 in which the parameters have the respective meanings given above under formula VI, and preferably
in formula VI-1
- R⁶¹ and R⁶²: independently of each other denote methoxy, ethoxy, propoxy, butoxy (also or pentoxy, preferably ethoxy, butoxy or pentoxy, more preferably ethoxy or butoxy and, most preferably butoxy.
in formula VI-2
- R⁶¹: preferably denotes vinyl, 1-*E*-propenyl, but-4-en-1-yl, pent-1-en-1-yl or pent-3-en-1-yl and *n*-propyl or *n*-pentyl and
- R⁶²: denotes an unsubstituted alkyl radical having 1 to 7 C atoms, preferably having 2 to 5 C atoms, or, preferably, an unsubstituted alkoxy radical having 1 to 6 C atoms, particularly preferably having 2 or 4 C atoms and, most preferably, ethoxy, and

In a preferred embodiment of the present invention, the media according to the invention in each case comprise one or more compounds of formula VII selected from the group of the compounds of the formulae VII-1 to VII-3, preferably one or more compounds each of the formulae VII-1 and one or more compounds of formula VII-2, 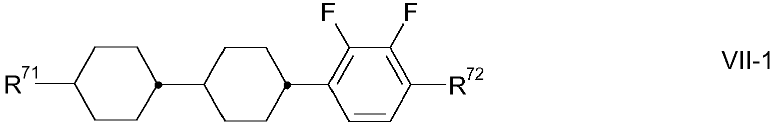 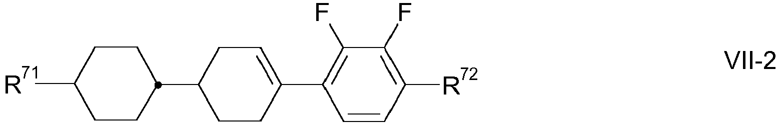 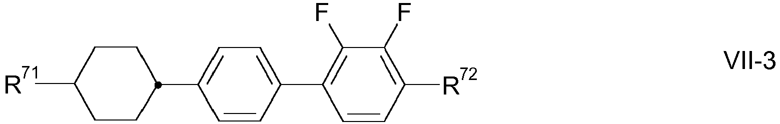 in which the parameters have the respective meanings given above under formula VII, and preferably
- R⁷¹: denotes vinyl, 1-*E*-propenyl, but-4-en-1-yl, pent-1-en-1-yl or pent-3-en-1-yl, *n*-propyl or *n*-pentyl and
- R⁷²: denotes an unsubstituted alkyl radical having 1 to 7 C atoms, preferably having 2 to 5 C atoms, or, preferably, an unsubstituted alkoxy radical having 1 to 6 C atoms, particularly preferably having 2 or 4 C atoms and, most preferably, ethoxy.

In a preferred embodiment of the present invention, the media according to the invention in each case comprise one or more compounds of formula VI-1 selected from the group of the following compounds:

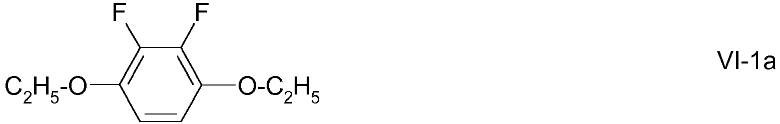

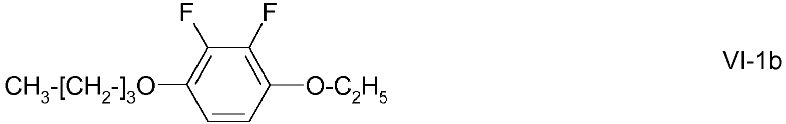

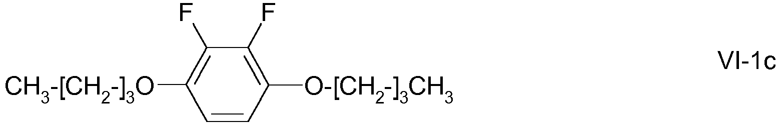

In a preferred embodiment of the present invention, the media according to the invention in each case comprise one or more compounds of formula VI-2 selected from the group of the following compounds: 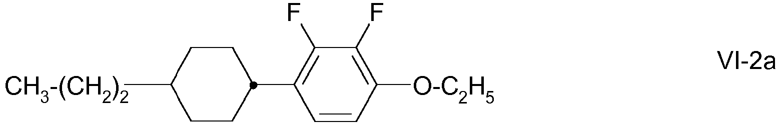 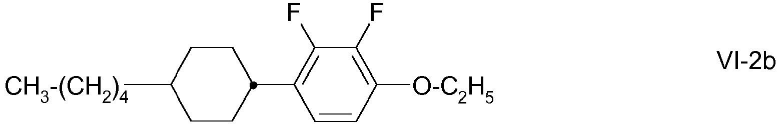 In a preferred embodiment of the present invention, the media according

In a preferred embodiment of the present invention, the media according to the invention in each case comprise one or more compounds of formula VII-1 selected from the group of the following compounds:

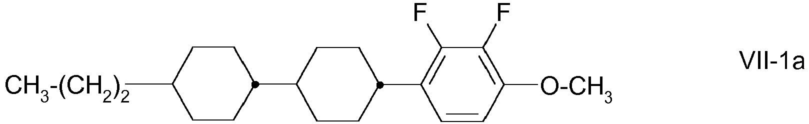

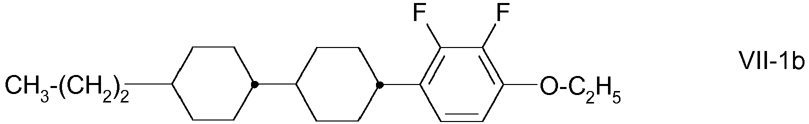

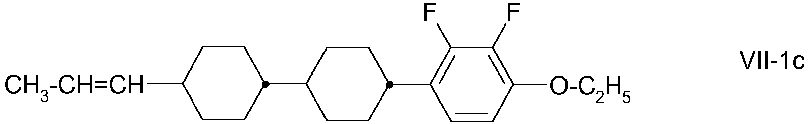

In a preferred embodiment of the present invention, the media according to the invention in each case comprise one or more compounds of formula VII-2 selected from the group of the following compounds:

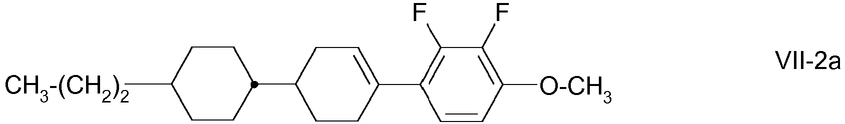

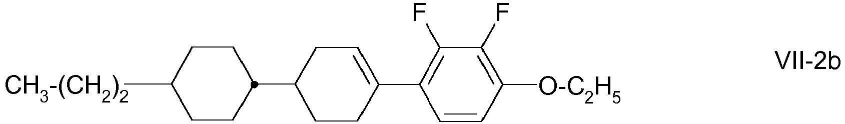

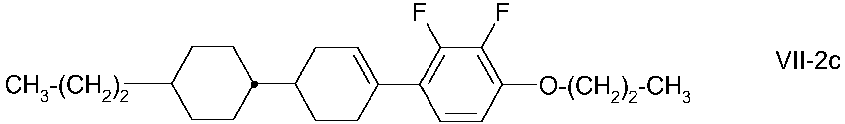

In addition to the compounds of formula I or the preferred sub-formulae thereof, the media in accordance with the present invention preferably comprise one or more dielectrically negative compounds selected from the group of compounds of the formulae VI and VII preferably in a total concentration in the range from 5% or more to 90% or less, preferably from 10% or more to 80% or less, particularly preferably from 20% or more to 70% or less.

In a preferred embodiment of the present invention, the media according to the invention in each case comprise one or more compounds of formula VIII selected from the group of the compounds of the formulae VIII-1 to VIII-3, preferably one or more compounds each of the formulae VIII-1 and/or one or more compounds of formula VIII-3, 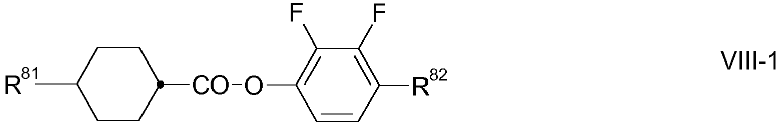 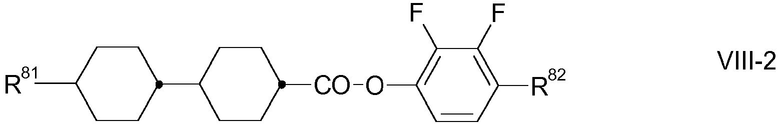 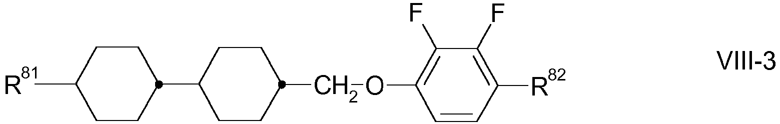 in which the parameters have the respective meanings given above under formula VIII, and preferably
- R⁸¹: denotes vinyl, 1-*E*-propenyl, but-4-en-1-yl, pent-1-en-1-yl or pent-3-en-1-yl, ethyl, *n*-propyl or *n*-pentyl, alkyl, preferably ethyl, *n*-propyl or *n*-pentyl and
- R⁸²: denotes an unsubstituted alkyl radical having 1 to 7 C atoms, preferably having 1 to 5 C atoms or an unsubstituted alkoxy radical having 1 to 6 C atoms.

In formulae VIII-1 and VIII-2 R⁸² denotes preferably akloxy having 2 or 4 C atoms and, most preferably, ethoxy and in formula VIII-3 it denotes preferably alky, preferably methyl, ethyl or n-propyl, most preferably methyl.

In a further preferred embodiment, the medium comprises one or more compounds of formula IV, preferably one or more compounds of formula IV-1 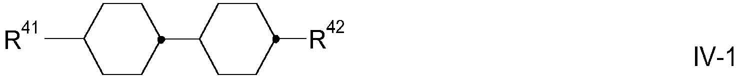 in which
- R⁴¹: denotes an unsubstituted alkyl radical having 1 to 7 C atoms or an unsubstituted alkenyl radical having 2 to 7 C atoms, preferably an *n*-alkyl radical, particularly preferably having 2, 3, 4 or 5 C atoms, and
- R⁴²: denotes an unsubstituted alkyl radical having 1 to 7 C atoms, an unsubstituted alkenyl radical having 2 to 7 C atoms, or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or 1-propenyl radical and in particular a vinyl radical.

In a particularly preferred embodiment, the medium comprises one or more compounds of formula IV-1 selected from the group of the compounds of the formulae IV-1-1 to IV-1-4, preferably of formula IV-1-1, 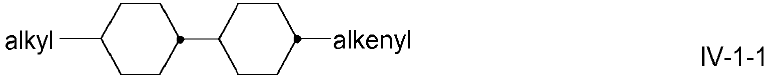 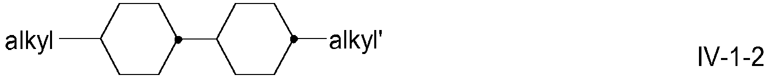 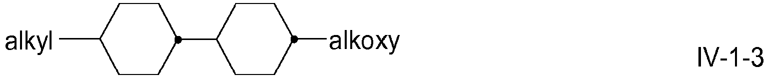 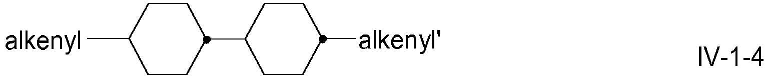 in which
- alkyl and alkyl',: independently of one another, denote alkyl having 1 to 7 C atoms, preferably having 2 to 5 C atoms,
- alkenyl and alkenyl': independently of one another, denote an alkenyl radical having 2 to 5 C atoms, preferably having 2 to 4 C atoms, particularly preferably 2 C atoms,
- alkenyl': denotes an alkenyl radical having 2 to 5 C atoms, preferably having 2 to 4 C atoms, particularly preferably having 2 to 3 C atoms, and
- alkoxy: denotes alkoxy having 1 to 5 C atoms, preferably having 2 to 4 C atoms.

In a particularly preferred embodiment, the media according to the invention comprise one or more compounds of formula IV-1 and/or one or more compounds of formula IV-2.

In a further preferred embodiment, the medium comprises one or more compounds of formula V.

The media according to the invention preferably comprise the following compounds in the total concentrations indicated:

| | |
|---|---|
| 1 - 60 % | by weight of one or more compounds selected from the group of the compounds of formula IN and |
| 0 - 60 % | preferably 1 - by 60 % weight of one or more compounds selected from the group of the compounds of formula I and/or |
| 5 - 60 % | by weight of one or more compounds of formula II, preferably selected from the group of the compounds of the formulae II-1 and II-2 and/or |
| 5 - 25 % | by weight of one or more compounds of formula III, and/or |
| 5 - 45 % | by weight of one or more compounds of formula IV and/or |
| 5 - 25 % | by weight of one or more compounds of formula V, and/or |
| 5 - 25 % | by weight of one or more compounds of formula VI, and/or |
| 5 - 20 % | by weight of one or more compounds of formula VII, and/or |
| 5 - 30 % | by weight of one or more compounds of formula VIII, preferably selected from the group of the compounds of the formulae VIII-1 and VIII-2 and/or |
| 0 - 60 % | by weight of one or more compounds of formula IX, |

where the total content of all compounds of formulae IN and I to IX, which are present, in the medium preferably is 95 % or more and, more preferably 100 %.

The latter condition holds for all media according to the present application.

In a further preferred embodiment, the media in accordance with the present invention in addition to the compounds of formula IN or the preferred sub-formulae thereof, and/or of formula I or the preferred sub-formulae thereof and to the compounds of formulae VI and/or VII and/or VIII and/or IX, preferably comprise one or more dielectrically neutral compounds selected from the group of compounds of formulae IV and V preferably in a total concentration in the range from 5 % or more to 90 % or less, preferably from 10 % or more to 80 % or less, particularly preferably from 20 % or more to 70 % or less.

The medium according to the invention in a particularly preferred embodiment comprises
one or more compounds of formula II in a total concentration in the range from 5 % or more to 50 % or less, preferably in the range from 10 % or more to 40 % or less, and/or
one or more compounds of formula VII-1 in a total concentration in the range from 5 % or more to 30 % or less, and/or
one or more compounds of formula VII-2 in a total concentration in the range from 3 % or more to 30 % or less.

Preferably the concentration of the compounds of formula IN in the media according to the invention is in the range from 1 % or more to 60 % or less, more preferably from 5 % or more to 40 % or less, most preferably from 8 % or more to 35 % or less

Preferably the concentration of the compounds of formula I, if present, in the media according to the invention is in the range from 1 % or more to 60 % or less, more preferably from 5 % or more to 40 % or less, most preferably from 8 % or more to 35 % or less

In a preferred embodiment of the present invention the media comprise one or more compounds of formula IN, preferably selected from the group of formulae IN-1, I-2, IN-3 and IN-4 and one or more compounds of formula I, preferably selected from the group of formulae I-1 to 1-10 preferably of formulae I-1 and/or I-2 and/or I-3 and/or I-4, preferably of formulae I-1 and/or I-2 I-5, I-6, I-7, I-8, I-9 and 1-10 .

In a preferred embodiment of the present invention the concentration of the compounds of formula II in the media is in the range from 3 % or more to 60 % or less, more preferably from 5 % or more to 55 % or less, more preferably from 10 % or more to 50 % or less and, most preferably, from 15 % or more to 45 % or less.

In a preferred embodiment of the present invention the concentration of the compounds of formula VII in the media is in the range from 2 % or more to 50 % or less, more preferably from 5 % or more to 40 % or less, more preferably from 10 % or more to 35 % or less and, most preferably, from 15 % or more to 30 % or less.

In a preferred embodiment of the present invention the concentration of the compounds of formula VII-1 in the media is in the range from 1 % or more to 40 % or less, more preferably either from 2 % or more to 35 % or less, or, alternatively, from 15 % or more to 25 % or less.

In a preferred embodiment of the present invention the concentration of the compounds of formula VII-2 in the media, if present, is in the range from 1 % or more to 40 % or less, more preferably from 5 % or more to 35 % or less and, most preferably, from 10 % or more to 30 % or less.

The present invention also relates to electro-optical displays or electro-optical components which contain liquid-crystalline media according to the invention. Preference is given to electro-optical displays which are based on the VA, ECB, IPS or FFS effect, preferably on the VA; IPS or FFS effect, and in particular those which are addressed by means of an active-matrix addressing device.

Accordingly, the present invention likewise relates to the use of a liquid-crystalline medium according to the invention in an electro-optical display or in an electro-optical component, and to a process for the preparation of the liquid-crystalline media according to the invention, characterised in that one or more compounds of formula I are mixed with one or more compounds of formula II, preferably with one or more compounds of the sub-formulae II-1 and/or II-2 and/or with one or more compounds of formula VII, preferably with one or more compounds of the sub-formulae VII-1 and/or VII-2, particularly preferably one or more compounds from two or more, preferably from three or more, different formulae thereof and very particularly preferably from all four of these formulae II-1, II-2, VII-1 and VII-2 and one or more further compounds, preferably selected from the group of the compounds of the formulae IV and V, more preferably with one or more compounds both of formula IV and of formula V.

In a further preferred embodiment, the medium comprises one or more compounds of formula IV, selected from the group of the compounds of the formulae IV-2 and IV-3, 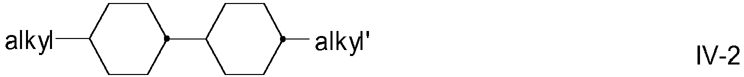 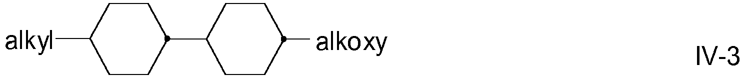 in which
- alkyl and alkyl',: independently of one another, denote alkyl having 1 to 7 C atoms, preferably having 2 to 5 C atoms,
- alkoxy: denotes alkoxy having 1 to 5 C atoms, preferably having 2 to 4 C atoms.

In a further preferred embodiment, the medium comprises one or more compounds of formula V selected from the group of the compounds of the formulae V-1 and V-2, preferably of formulae V-1, 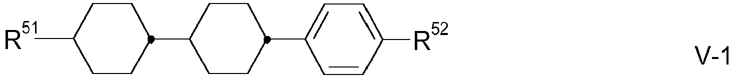 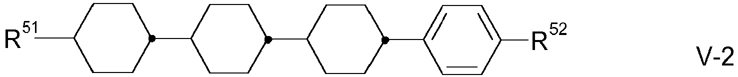 in which the parameters have the meanings given above under formula V, and preferably
- R⁵¹: denotes alkyl having 1 to 7 C atoms or alkenyl having 2 to 7 C atoms, and
- R⁵²: denotes alkyl having 1 to 7 C atoms, alkenyl having 2 to 7 C atoms or alkoxy having 1 to 6 C atoms, preferably alkyl or alkenyl, particularly preferably alkyl.

In a further preferred embodiment, the medium comprises one or more compounds of formula V-1 selected from the group of the compounds of the formulae V-1a and V-1b, 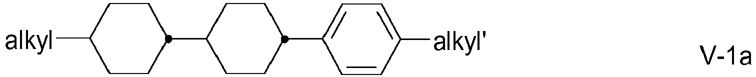 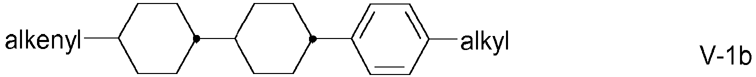 in which
- alkyl and alkyl',: independently of one another, denote alkyl having 1 to 7 C atoms, preferably having 2 to 5 C atoms, and
- alkenyl: denotes alkenyl having 2 to 7 C atoms, preferably having 2 to 5 C atoms.

In addition, the present invention relates to a method for the reduction of the wavelength dispersion of the birefringence of a liquid-crystalline medium which comprises one or more compounds of formula II, optionally one or more compounds selected from the group of the compounds of the formulae VII-1 and VII-2 and/or one or more compounds of formula IV and/or one or more compounds of formula V, characterised in that one or more compounds of formula I are used in the medium.

Besides compounds of the formulae I to V, other constituents may also be present, for example in an amount of up to 45 %, but preferably up to 35 %, in particular up to 10 %, of the mixture as a whole.

The media according to the invention may optionally also comprise a dielectrically positive component, whose total concentration is preferably 20 % or less, more preferably 10 % or less, based on the entire medium.

In a preferred embodiment, the liquid-crystal media according to the invention comprise in total, based on the mixture as a whole,
1 % or more to 50 % or less, preferably 2 % or more to 35 % or less, particularly preferably 3 % or more to 25 % or less, of the compound of formula Y,
1 % or more to 20 % or less, preferably 2 % or more to 15 % or less, particularly preferably 3 % or more to 12 % or less, of the compound of formula I.
20 % or more to 50 % or less, preferably 25 % or more to 45 % or less, particularly preferably 30 % or more to 40 % or less, of compounds of formulae II and/or III, and
0 % or more to 35 % or less, preferably 2 % or more to 30 % or less, particularly preferably 3 % or more to 25 % or less, of compounds of formulae IV and/ or V, and
5 % or more to 50 % or less 10 % or more to 45 % or less, preferably 15 % or more to 40 % or less of compounds of the formulae VI and/or VII and/or VIII and/or IX.

The liquid-crystal media in accordance with the present invention may comprise one or more chiral compounds.

Particularly preferred embodiments of the present invention meet one or more of the following conditions,
where the acronyms (abbreviations) are explained in Tables A to C and illustrated by examples in Table D.

Preferably the media according to the present invention fulfil one or more of the following conditions.
i. The liquid-crystalline medium has a birefringence of 0.060 or more, particularly preferably 0.070 or more.
ii. The liquid-crystalline medium has a birefringence of 0.200 or less, particularly preferably 0.180 or less.
iii. The liquid-crystalline medium has a birefringence in the range from 0.090 or more to 0.160 or less, preferably to 0.120 or less.
iv. The liquid-crystalline medium comprises one or more particularly preferred compounds of formulae I-2 and/or I-4.
v. The total concentration of the compounds of formula IV in the mixture as a whole is 25% or more, preferably 30% or more, and is preferably in the range from 25% or more to 49% or less, particularly preferably in the range from 29% or more to 47% or less, and very particularly preferably in the range from 37% or more to 44% or less.
vi. The liquid-crystalline medium comprises one or more compounds of formula IV selected from the group of the compounds of the following formulae: CC-n-V and/or CC-n-Vm and/or CC-V-V and/or CC-V-Vn and/or CC-nV-Vn, particularly preferably CC-3-V, preferably in a concentration of up to 60 % or less, particularly preferably up to 50 % or less, and optionally additionally CC-3-V1, preferably in a concentration of up to 15% or less, and/or CC-4-V, preferably in a concentration of up to 24 % or less, particularly preferably up to 30 % or less.
vii. The media comprise the compound of formula CC-n-V, preferably CC-3-V, preferably in a concentration of 1 % or more to 60 % or less, more preferably in a concentration of 3 % or more to 35 % or less.
viii. The total concentration of the compounds of formula CC-3-V in the mixture as a whole preferably either is 15 % or less, preferably 10 % or less or 20 % or more, preferably 25 % or more.
ix. The total concentration of the compounds of formula Y-nO-Om in the mixture as a whole is 2 % or more to 30 % or less, preferably 5 % or more to 15 % or less.
x. The total concentration of the compounds of formula CY-n-Om in the mixture as a whole is 5 % or more to 60 % or less, preferably 15% or more to 45 % or less.
xi. The total concentration of the compounds of formula CCY-n-Om and/ or CCY-n-m, preferably of CCY-n-Om, in the mixture as a whole is 5 % or more to 40 % or less, preferably 1 % or more to 25 % or less.
xii. The total concentration of the compounds of formula CLY-n-Om in the mixture as a whole is 5 % or more to 40 % or less, preferably 10 % or more to 30 % or less.
xiii. The liquid-crystalline medium comprises one or more compounds of formula IV, preferably of the formulae IV-1 and/or IV-2, preferably in a total concentration of 1 % or more, in particular 2 % or more, and very particularly preferably 3 % or more to 50 % or less, preferably 35 % or less.
xiv. The liquid-crystalline medium comprises one or more compounds of formula V, preferably of the formulae V-1 and/or V-2, preferably in a total concentration of 1 % or more, in particular 2 % or more, and very particularly preferably 15 % or more to 35 %or less, preferably to 30 % or less.
xv. The total concentration of the compounds of formula CCP-V-n, preferably CCP-V-1, in the mixture as a whole preferably is 5 % or more to 30 % or less, preferably 15% or more to 25 % or less.
xvi. The total concentration of the compounds of formula CCP-V2-n, preferably CCP-V2-1, in the mixture as a whole preferably is 1 % or more to 15 % or less, preferably 2 % or more to 10 % or less.

The invention furthermore relates to an electro-optical display having active-matrix addressing based on the VA, ECB, IPS, FFS or UB-FFS effect, characterised in that it contains, as dielectric, a liquid-crystalline medium in accordance with the present invention.

The liquid-crystal mixture preferably has a nematic phase range having a width of at least 70 degrees.

The rotational viscosity γ₁ is preferably 350 mPa·s or less, preferably 250 mPa·s or less and, in particular, 150 mPa·s or less.

The mixtures according to the invention are suitable for all IPS and FFS-TFT applications using dielectrically positive liquid crystalline media, such as, e.g. SG-FFS (Super Grip FFS).

The liquid-crystalline media according to the invention preferably virtually completely consist of 4 to 18, in particular 5 to 15, and particularly preferably 12 or less, compounds. These are preferably selected from the group of the compounds of the formulae Y, I, II III,IV, V, VI, VII, VIII and IX.

The liquid-crystalline media according to the invention may optionally also comprise more than 18 compounds. In this case, they preferably comprise 18 to 25 compounds.

In a preferred embodiment, the liquid-crystal media according to the invention predominantly consist of, preferably essentially consist of and, most preferably, virtually completely consist of compounds, which do not comprise a cyano group.

In a preferred embodiment, the liquid-crystal media according to the invention comprise compounds selected from the group of the compounds of the formulae IN, I, II and III, IV and V and VI to IX, preferably selected from the group of the compounds of the formulae IN-1, IN-2, IN-3, IN-4, I-1, I-2, I-3, I-4, I-5, I-6, I-7, I-8, I-9. 1-10, 11-1, II-2, III-1, III-2, IV, V, VII-1, VII-2, VIII and IX; they preferablyconsist predominantly, particularly preferably essentially and very particularly preferably virtually completely of the compounds of the said formulae.

The liquid-crystal media according to the invention preferably have a nematic phase from in each case at least -10°C or less to 70°C or more, particularly preferably from -20°C or less to 80°C or more, very particularly preferably from -30°C or less to 85°C or more and most preferably from -40°C or less to 90°C or more.

The expression "have a nematic phase" here means on the one hand that no smectic phase and no crystallisation are observed at low temperatures at the corresponding temperature and on the other hand that no clearing occurs on heating out of the nematic phase. The investigation at low temperatures is carried out in a flow viscometer at the corresponding temperature and checked by storage in test cells having a cell thickness corresponding to the electro-optical application for at least 100 hours. If the storage stability at a temperature of -20°C in a corresponding test cell is 1000 h or more, the medium is regarded as stable at this temperature. At temperatures of -30°C and -40°C, the corresponding times are 500 h and 250 h respectively. At high temperatures, the clearing point is measured in capillaries by conventional methods.

In a preferred embodiment, the liquid-crystal media according to the invention are characterised by optical anisotropy values in the moderate to low range. The birefringence values are preferably in the range from 0.075 or more to 0.130 or less, particularly preferably in the range from 0.085 or more to 0.120 or less and very particularly preferably in the range from 0.090 or more to 0.115 or less.

In this embodiment, the liquid-crystal media according to the invention have a positive dielectric anisotropy and relatively high absolute values of the dielectric anisotropy Δε, which preferably is in the range from 0.5 or more, preferably of 1.0 or more, more preferably of 2.0 or more to 20 or less, more preferably to 15 or less, more preferably from 3.0 or more to 10 or less, particularly preferably from 4.0 or more to 9.0 or less and very particularly preferably from 4.5 or more to 8.0 or less.

The liquid-crystal media according to the invention preferably have relatively low values for the threshold voltage (V₀) in the range from 1.0 V or more to 2.5 V or less, preferably from 1.2 V or more to 2.2 V or less, particularly preferably from 1.3 V or more to 2.0 V or less.

In a further preferred embodiment, the liquid-crystal media according to the invention preferably have relatively high values of the average dielectric constant (ε_{av.} = (ε_{||} + 2ε_{⊥})/3) which are preferably in the range from 8.0 or more to 25.0 or less, preferably from 8.5 or more to 20.0 or less, still more preferably from 9.0 or more to 19.0 or less, particularly preferably from 10.0 or more to 18.0 or less and very particularly preferably from 11.0 or more to 16.5 or less.

In addition, the liquid-crystal media according to the invention have high values for the VHR in liquid-crystal cells.

In freshly filled cells at 20°C in the cells, these values of the VHR are greater than or equal to 95 %, preferably greater than or equal to 97 %, particularly preferably greater than or equal to 98 % and very particularly preferably greater than or equal to 99 %, and after 5 minutes in the oven at 100°C in the cells, these are greater than or equal to 90 %, preferably greater than or equal to 93 %, particularly preferably greater than or equal to 96 % and very particularly preferably greater than or equal to 98 %.

In general, liquid-crystal media having a low addressing voltage or threshold voltage here have a lower VHR than those having a higher addressing voltage or threshold voltage, and vice versa.

These preferred values for the individual physical properties are preferably also in each case maintained by the media according to the invention in combination with one another.

In the present application, the term "compounds", also written as "compound(s)", means both one and also a plurality of compounds, unless explicitly indicated otherwise.

In a preferred embodiment, the liquid-crystalline media according to the invention comprise
one or more compounds of formula IN and
one or more compounds of formula I and/or
one or more compounds of formula II, preferably of the formulae PUQU-n-F, CDUQU-n-F, APUQU-n-F and PGUQU-n-F, and/or
one or more compounds of formula III, preferably of the formulae CCP-n-OT, CLP-n-T, CGG-n-F, and CGG-n-OD, and/or
one or more compounds of formula IV, preferably of the formulae CC-n-V, CC-n-Vm, CC-n-m, and CC-V-V and/or
one or more compounds of formula V, preferably of the formulae CCP-n-m, CCP-V-n, CCP-V2-n, CLP-V-n, CCVC-n-V, and CGP-n-m and/or
one or more compounds of formula VI, preferably of the formulae Y-n-Om, Y-nO-Om and/or CY-n-Om, selected from the group of the compounds of the formulae Y-3-O1, Y-4O-O4, CY-3-O2, CY-3-O4, CY-5-02 and CY-5-O4, and/or
optionally, preferably obligatorily, one or more compounds of formula VII-1, preferably selected from the group of the compounds of the formulae CCY-n-m and CCY-n-Om, preferably of formula CCY-n-Om, preferably selected from the group of the compounds of the formulae CCY-3-O2, CCY-2-O2, CCY-3-O1, CCY-3-O3, CCY-4-O2, CCY-3-O2 and CCY-5-O2, and/or
optionally, preferably obligatorily, one or more compounds of formula VII-2, preferably of formula CLY-n-Om, preferably selected from the group of the compounds of the formulae CLY-2-O4, CLY-3-O2, CLY-3-03, and/or
one or more compounds of formula VIII, preferably of the formulae CZY-n-On and CCOY-n-m and/or
one or more compounds of formula IX, preferably of the formula PYP-n-m and/or
optionally, preferably obligatorily, one or more compounds of formula IV, preferably selected from the group of the compounds of the formulae CC-n-V, CC-n-Vm and CC-nV-Vm, preferably CC-3-V, CC-3-V1, CC-4-V, CC-5-V and CC-V-V, particularly preferably selected from the group of the compounds CC-3-V, CC-3-V1, CC-4-V and CC-V-V, very particularly preferably the compound CC-3-V, and optionally additionally the compound(s) CC-4-V and/or CC-3-V1 and/or CC-V-V, and/or
optionally, preferably obligatorily, one or more compounds of formula V, preferably of the formulae CCP-V-1 and/or CCP-V2-1.

In a specific preferred embodiment of the present invention, the media according to the invention comprise one or more compounds of formula IX,

The compounds of formula IX, are also highly suitable as stabilisers in liquid-crystal mixtures, especially in case p = q = 1 and ring A⁹ = 1,4-phenylene. In particular, they stabilise the VHR of the mixtures against UV exposure.

In a preferred embodiment the media according to the invention comprise one or more compounds of formula IX selected from one or more formulae of the group of the compounds of the formulae IX-1 to IX-4, very particularly preferably of the formulae IX-1 to IX-3, 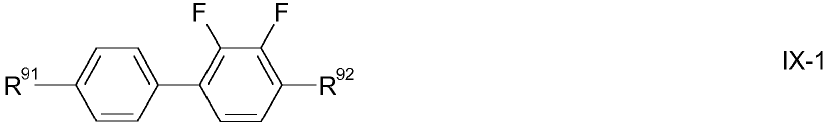 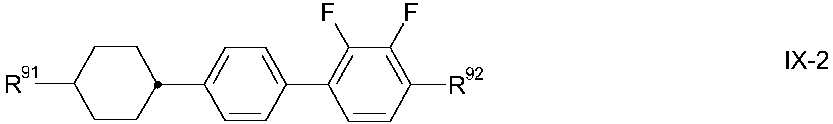 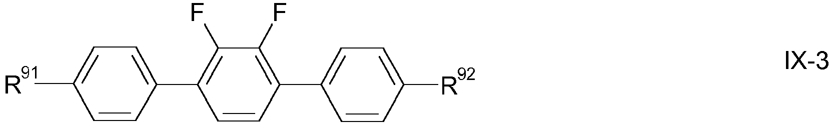 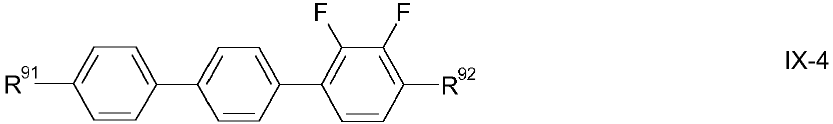 in which the parameters have the meanings given under formula IX.

In a further preferred embodiment, the medium comprises one or more compounds of formula IX-3, preferably of formula IX-3-a, 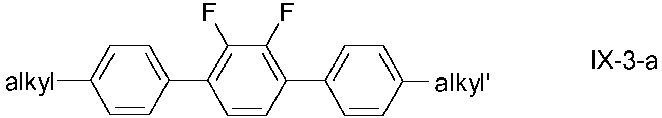 in which alkyl and alkyl', independently of one another, denote alkyl having 1 to 7 C atoms, preferably having 2 to 5 C atoms.

In case the compounds of formula IX are used in the liquid crystalline media according to the present application, they are preferably present in a concentration of 20 % or less, more preferably of 10 % or less and, most preferably, of 5 % or less and for the individual i.e. (homologous) compounds preferably in a concentration of 10 % or less and, more preferably, of 5 % or less.

For the present invention, the following definitions apply in connection with the specification of the constituents of the compositions, unless indicated otherwise in individual cases:
- "comprise": the concentration of the constituents in question in the composition is preferably 5% or more, particularly preferably 10% or more, very particularly preferably 20% or more,
- "predominantly consist of': the concentration of the constituents in question in the composition is preferably 50% or more, particularly preferably 55% or more and very particularly preferably 60% or more,
- "essentially consist of": the concentration of the constituents in question in the composition is preferably 80% or more, particularly preferably 90% or more and very particularly preferably 95% or more, and
- "virtually completely consist of": the concentration of the constituents in question in the composition is preferably 98% or more, particularly preferably 99% or more and very particularly preferably 100.0%.

This applies both to the media as compositions with their constituents, which can be components and compounds, and also to the components with their constituents, the compounds. Only in relation to the concentration of an individual compound relative to the medium as a whole does the term comprise mean: the concentration of the compound in question is preferably 1% or more, particularly preferably 2% or more, very particularly preferably 4% or more.

For the present invention, "≤" means less than or equal to, preferably less than, and "≥" means greater than or equal to, preferably greater than.

For the present invention, 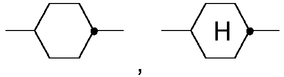 and 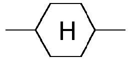 denote *trans*-1,4-cyclohexylene, and 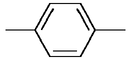 and 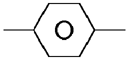 denote 1,4-phenylene.

For the present invention, the expression "dielectrically positive compounds" means compounds having a Δε of > 1.5, the expression "dielectrically neutral compounds" means those where -1.5 ≤ Δε ≤ 1.5 and the expression "dielectrically negative compounds" means those where Δε < -1.5. The dielectric anisotropy of the compounds is determined here by dissolving 10% of the compounds in a liquid-crystalline host and determining the capacitance of the resultant mixture in each case in at least one test cell having a cell thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

The host mixture used for dielectrically positive and dielectrically neutral compounds is ZLI-4792 and that used for dielectrically negative compounds is ZLI-2857, both from Merck KGaA, Germany. The values for the respective compounds to be investigated are obtained from the change in the dielectric constant of the host mixture after addition of the compound to be investigated and extrapolation to 100% of the compound employed. The compound to be investigated is dissolved in the host mixture in an amount of 10%. If the solubility of the substance is too low for this purpose, the concentration is halved in steps until the investigation can be carried out at the desired temperature.

The liquid-crystal media according to the invention may, if necessary, also comprise further additives, such as, for example, stabilisers and/or pleochroitic, e.g. dichroitic, dyes and/or chiral dopants in the usual amounts. The amount of these additives employed is preferably in total 0 % or more to 10 % or less, based on the amount of the entire mixture, particularly preferably 0.1 % or more to 6 % or less. The concentration of the individual compounds employed is preferably 0.1 % or more to 3 % or less. The concentration of these and similar additives is generally not taken into account when specifying the concentrations and concentration ranges of the liquid-crystal compounds in the liquid-crystal media.

In a preferred embodiment, the liquid-crystal media according to the invention comprise a polymer precursor which comprises one or more reactive compounds, preferably reactive mesogens, and, if necessary, also further additives, such as, for example, polymerisation initiators and/or polymerisation moderators, in the usual amounts. The amount of these additives employed is in total 0 % or more to 10 % or less, based on the amount of the entire mixture, preferably 0.1 % or more to 2 % or less. The concentration of these and similar additives is not taken into account when specifying the concentrations and concentration ranges of the liquid-crystal compounds in the liquid-crystal media.

The compositions consist of a plurality of compounds, preferably 3 or more to 30 or fewer, particularly preferably 6 or more to 20 or fewer and very particularly preferably 10 or more to 16 or fewer compounds, which are mixed in a conventional manner. In general, the desired amount of the components used in lesser amount is dissolved in the components making up the principal constituent of the mixture. This is advantageously carried out at elevated temperature. If the selected temperature is above the clearing point of the principal constituent, completion of the dissolution operation is particularly easy to observe. However, it is also possible to prepare the liquid-crystal mixtures in other conventional ways, for example using pre-mixes or from a so-called "multi-bottle system".

The mixtures according to the invention exhibit very broad nematic phase ranges having clearing points of 65°C or more, very favourable values for the capacitive threshold, relatively high values for the holding ratio and at the same time very good low-temperature stabilities at - 30°C and -40°C. Furthermore, the mixtures according to the invention are distinguished by low rotational viscosities γ₁.

It goes without saying to the person skilled in the art that the media according to the invention for use in VA, IPS, FFS or PALC displays may also comprise compounds in which, for example, H, N, O, Cl, F have been replaced by the corresponding isotopes.

The structure of the liquid-crystal displays according to the invention corresponds to the usual geometry, as described, for example, in EP-A 0 240 379.

The liquid-crystal phases according to the invention can be modified by means of suitable additives in such a way that they can be employed in any type of, for example, IPS and FFS LCD display that has been disclosed to date.

Table E below indicates possible dopants which can be added to the mixtures according to the invention. If the mixtures comprise one or more dopants, it is (they are) employed in amounts of 0.01 % to 4 %, preferably 0.1 % to 1.0 %.

Stabilisers which can be added, for example, to the mixtures according to the invention, preferably in amounts of 0.01 % to 6 %, in particular 0.1 % to 3 %, are shown below in Table F.

For the purposes of the present invention, all concentrations are, unless explicitly noted otherwise, indicated in per cent by weight and relate to the corresponding mixture as a whole or to the respective mixture component, again as a whole, unless explicitly indicated otherwise. In this context the term "the mixture" describes the liquid crystalline medium.

All temperature values indicated in the present application, such as, for example, the melting point T(C,N), the smectic (S) to nematic (N) phase transition T(S,N) and the clearing point T(N,I), are indicated in degrees Celsius (°C) and all temperature differences are correspondingly indicated in differential degrees (° or degrees), unless explicitly indicated otherwise.
For the present invention, the term "threshold voltage" relates to the capacitive threshold (V₀), also known as the Freedericks threshold, unless explicitly indicated otherwise.

All physical properties are and have been determined in accordance with "Merck Liquid Crystals, Physical Properties of Liquid Crystals", status Nov. 1997, Merck KGaA, Germany, and apply for a temperature of 20°C, and Δn is determined at 436 nm, 589 nm and at 633 nm, and Δε at 1 kHz, unless explicitly indicated otherwise in each case.

The electro-optical properties, for example the threshold voltage (V₀) (capacitive measurement), are, as is the switching behaviour, determined in test cells produced at Merck Japan. The measurement cells have soda-lime glass substrates and are constructed in an ECB or VA configuration with polyimide alignment layers (SE-1211 with diluent **26 (mixing ratio 1:1), both from Nissan Chemicals, Japan), which have been rubbed perpendicularly to one another and effect homeotropic alignment of the liquid crystals. The surface area of the transparent, virtually square ITO electrodes is 1cm².

Unless indicated otherwise, a chiral dopant is not added to the liquid-crystal mixtures used, but the latter are also particularly suitable for applications in which doping of this type is necessary.

The rotational viscosity is determined using the rotating permanent magnet method and the flow viscosity in a modified Ubbelohde viscometer. For liquid-crystal mixtures ZLI-2293, ZLI-4792 and MLC-6608, all products from Merck KGaA, Darmstadt, Germany, the rotational viscosity values determined at 20°C are 161 mPa·s, 133 mPa·s and 186 mPa·s respectively, and the flow viscosity values (v) are 21 mm²·s⁻¹, 14 mm²·s⁻¹ and 27 mm²·s⁻¹, respectively.

The dispersion of the refractive index of the materials may for practical purposes be conveniently characterized in the following way, which is used throughout this application unless explicitly stated otherwise. The values of the birefringence are determined at a temperature of 20°C at several fixed wavelengths using a modified Abbe refractometer with homeotropically aligning surfaces on the sides of the prisms in contact with the material. The birefringence values are determined at the specific wavelength values of 436 nm (respective selected spectral line of a low pressure mercury lamp), 589 nm (sodium "D" line) and 633 nm (wavelength of a HE-Ne laser (used in combination with an attenuator/diffusor in order to prevent damage to the eyes of the observers. In the following table Δn is given at 589 nm and Δ(Δn) is given as Δ(Δn) = Δn(436 nm) - Δn(633 nm).

The following symbols are used, unless explicitly indicated otherwise:
- V₀: threshold voltage, capacitive [V] at 20°C,
- nₑ: extraordinary refractive index measured at 20°C and 589 nm,
- nₒ: ordinary refractive index measured at 20°C and 589 nm,
- Δn: optical anisotropy measured at 20°C and 589 nm,
- λ: wavelength λ [nm],
- Δn(λ): optical anisotropy measured at 20°C and wavelength λ,
- Δ(Δn): change in optical anisotropy defined as: Δn(20°C,436 nm) - Δn(20°C, 633 nm),
- Δ(Δn*): "relative change in optical anisotropy" defined as: Δ(Δn)/Δn(20°C, 589 nm),
- ε_{⊥}: dielectric susceptibility perpendicular to the director at 20°C and 1 kHz,
- ε_{||}: dielectric susceptibility parallel to the director at 20°C and 1 kHz,
- Δε: dielectric anisotropy at 20°C and 1 kHz,
- T(N,I) or clp.: clearing point [°C],
- v: flow viscosity measured at 20°C [mm²·s⁻¹],
- γ₁: rotational viscosity measured at 20°C [mPa.s],
- k₁₁: elastic constant, "splay" deformation at 20°C [pN],
- k₂₂: elastic constant, "twist" deformation at 20°C [pN],
- k₃₃: elastic constant, "bend" deformation at 20°C [pN],
- LTS: low-temperature stability of the phase, determined in test cells,
- VHR: voltage holding ratio,
- ΔVHR: decrease in the voltage holding ratio, and
- Sᵣₑₗ: relative stability of the VHR,

The following examples explain the present invention without limiting it. However, they show the person skilled in the art preferred mixture concepts with compounds preferably to be employed and the respective concentrations thereof and combinations thereof with one another. In addition, the examples illustrate the properties and property combinations that are accessible.

For the present invention and in the following examples, the structures of the liquid-crystal compounds are indicated by means of acronyms, with the transformation into chemical formulae taking place in accordance with Tables A to C below. All radicals CₙH₂ₙ₊₁, CₘH₂ₘ₊₁ and CₗH₂ₗ₊₁ or CₙH₂ₙ, CₘH₂ₘ and CₗH₂ₗ are straight-chain alkyl radicals or alkylene radicals, in each case having n, m and I C atoms respectively. Preferably n, m and I are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 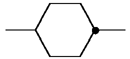 | | |
| **D** | 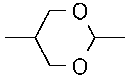 | **DI** | 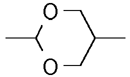 |
| **A** | 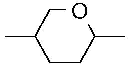 | **AI** | 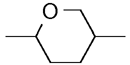 |
| **P** | 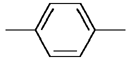 | | |
| **G** | 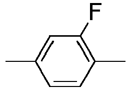 | **GI** | 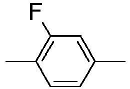 |
| **U** | 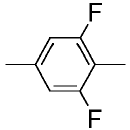 | **UI** | 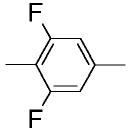 |
| **Y** | 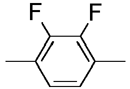 | | |
| **P(F, CI)Y** | 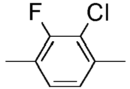 | **P(CI,F)Y** | 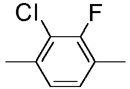 |
| **np** | 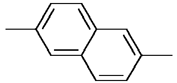 | | |
| **n3f** | 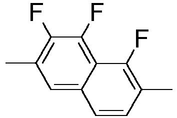 | **n3fl** | 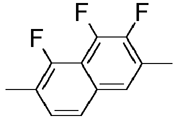 |
| **th** | 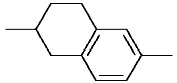 | **thl** | 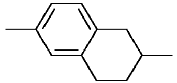 |
| **tH2f** | 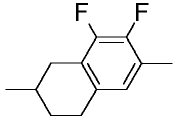 | **tH2fl** | 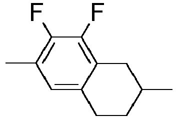 |
| **o2f** | 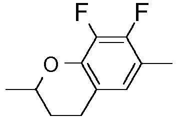 | **o2fl** | 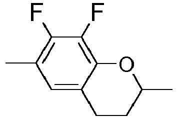 |
| **dh** | 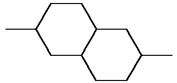 | | |
| **B** | 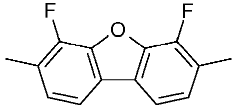 | **B(S)** | 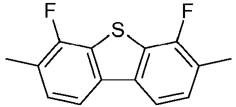 |
| **K** | 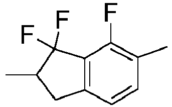 | **KI** | 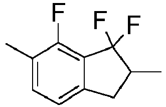 |
| **fK** | 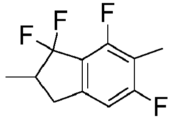 | **fKI** | 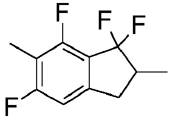 |
| **L** | 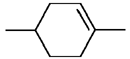 | **LI** | 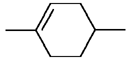 |
| **F** | 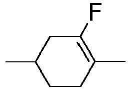 | **FI** | 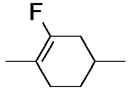 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C=C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **On the left only in combination** | | **On the right only in combination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...Zl...** | -O-CO- |
| **-...K...-** | -CO- | **-...K...** | -CO- |
| **-...W...-** | -CF=CF- | **-...W...** | -CF=CF- |

| | | | |
|---|---|---|---|
| in which n and m are each integers, and the three dots "..." are place-holders for other abbreviations from this table. | | | |

Besides the compounds of formula I, the mixtures according to the invention preferably comprise one or more compounds of the compounds mentioned below.

The following abbreviations are used:
(n, m and I are, independently of one another, each an integer, preferably 1 to 6, I possibly also 0 and preferably 0 or 2)

**Table D**

| |
|---|
| Exemplary, preferred compounds of formula IN-A having a high ε_{⊥}: |
| 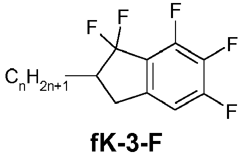 |
| 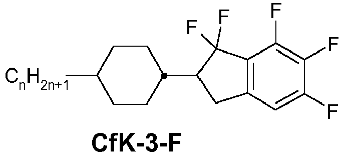 |
| 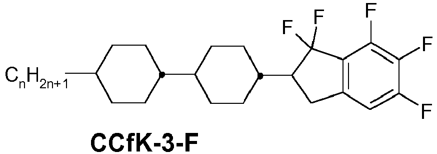 |
| Exemplary, preferred compounds of formula IN-B having a high ε_{⊥}: |
| 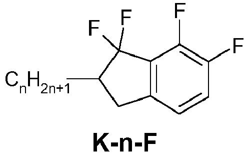 |
| 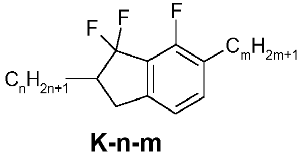 |
| 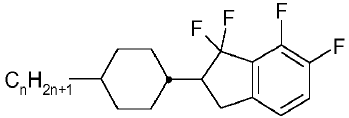 |
| 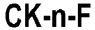 |
| 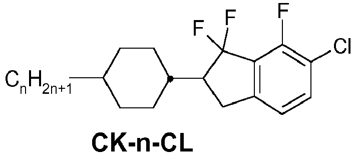 |
| 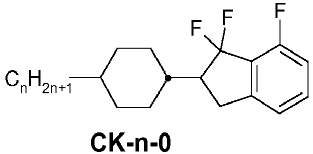 |
| 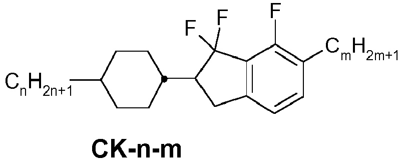 |
| 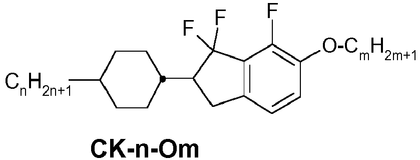 |
| 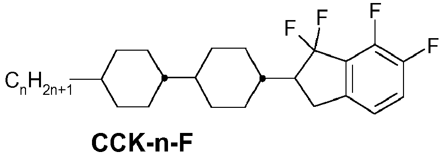 |
| 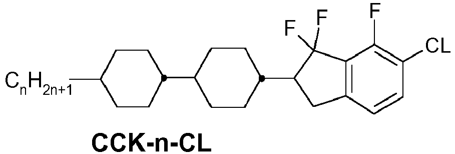 |
| 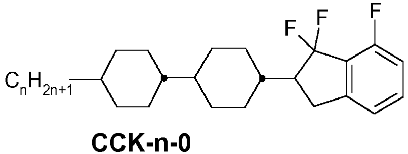 |
| 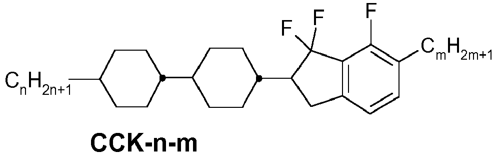 |
| 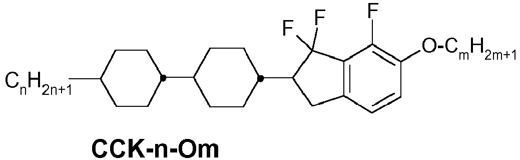 |
| 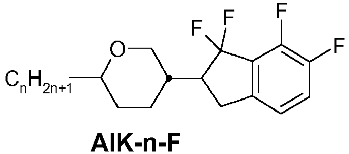 |
| Exemplary, preferred compounds of formula I having a high ε_{⊥}: |
| 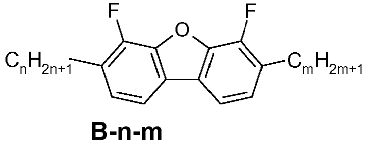 |
| 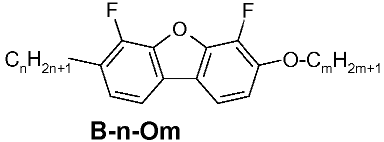 |
| 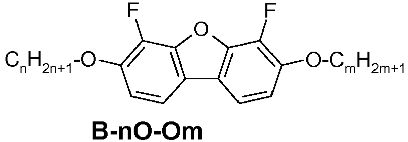 |
| 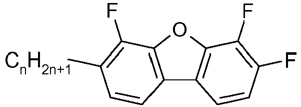 |
| 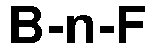 |
| 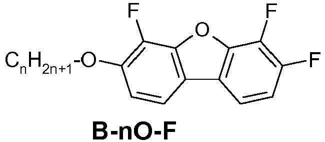 |
| 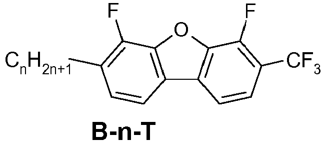 |
| 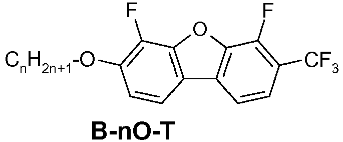 |
| 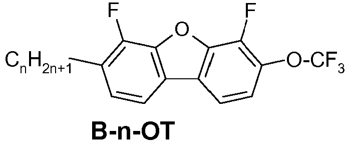 |
| 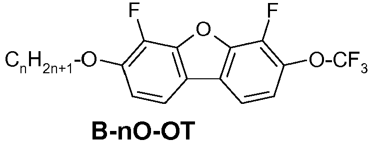 |
| 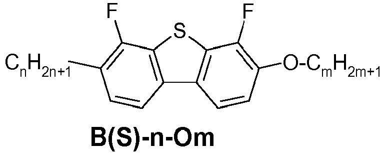 |
| 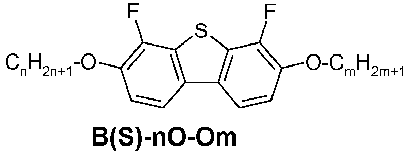 |
| 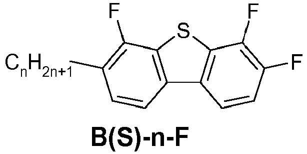 |
| 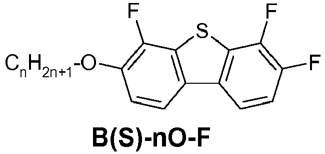 |
| 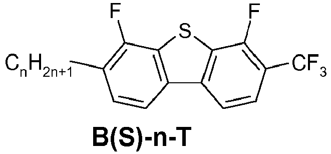 |
| 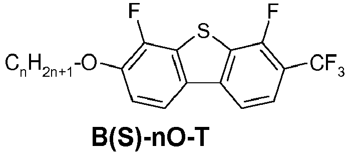 |
| 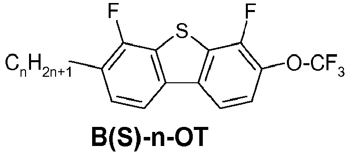 |
| 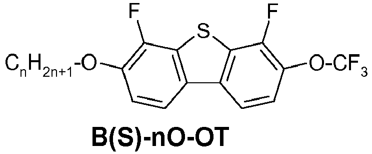 |
| 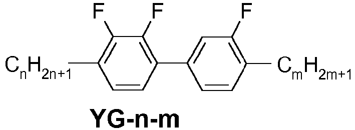 |
| 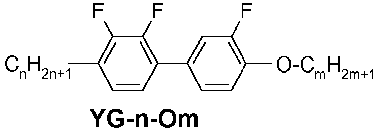 |
| 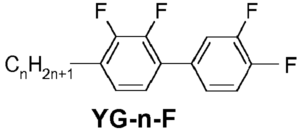 |
| 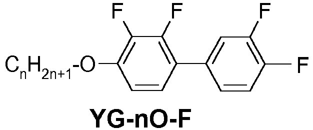 |
| 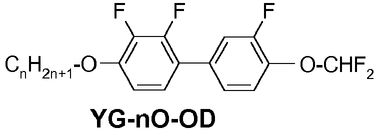 |
| 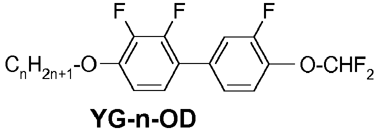 |
| 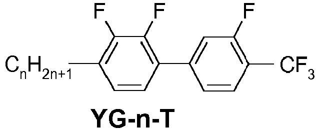 |
| 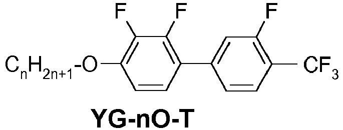 |
| 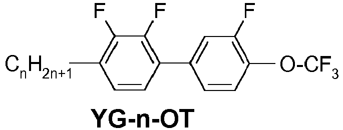 |
| 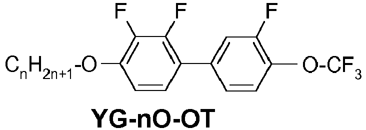 |
| 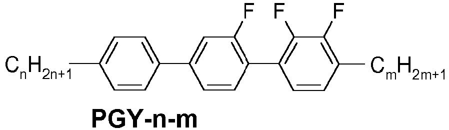 |
| 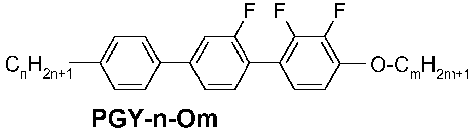 |
| 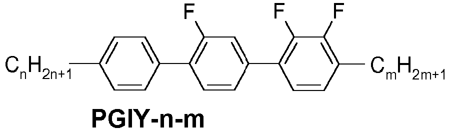 |
| 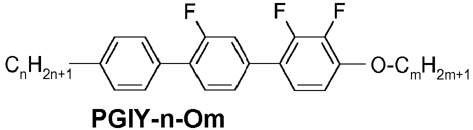 |
| Exemplary, preferred dielectrically positive compounds |
| 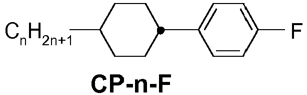 |
| 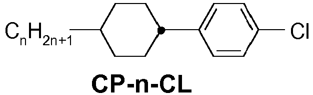 |
| 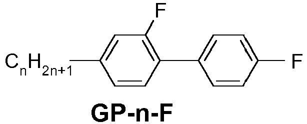 |
| 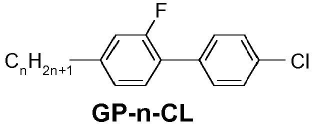 |
| 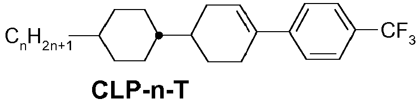 |
| 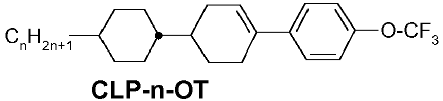 |
| 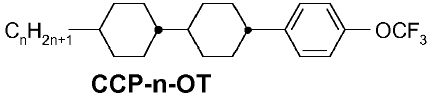 |
| 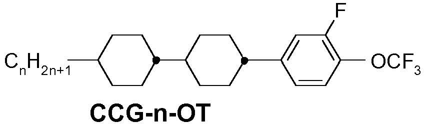 |
| 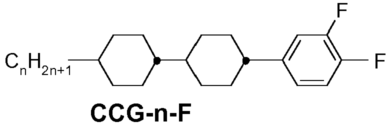 |
| 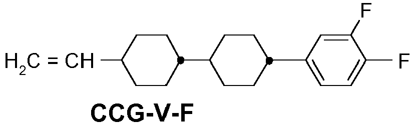 |
| |
| 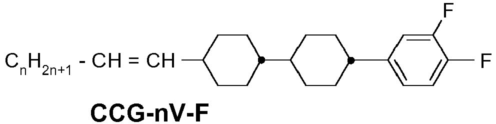 |
| 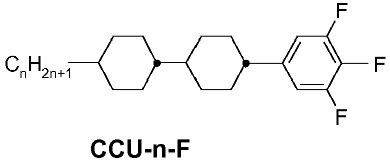 |
| 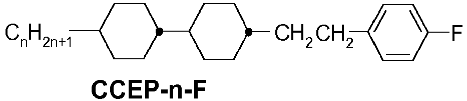 |
| 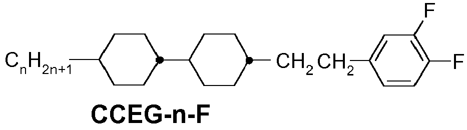 |
| 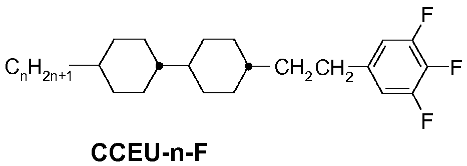 |
| 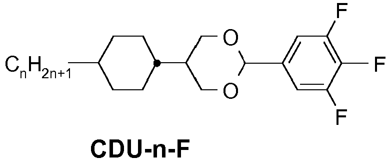 |
| 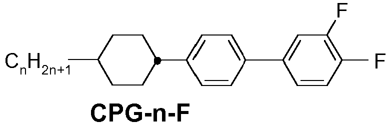 |
| 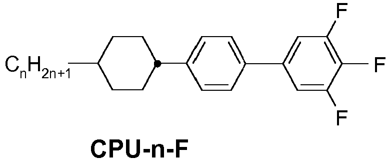 |
| 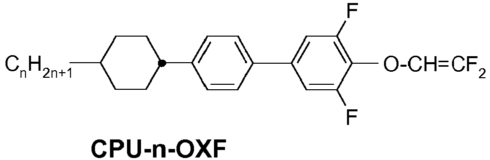 |
| 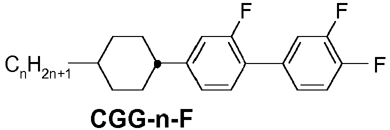 |
| 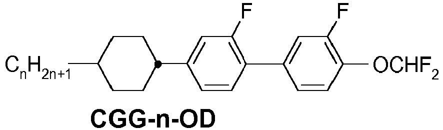 |
| 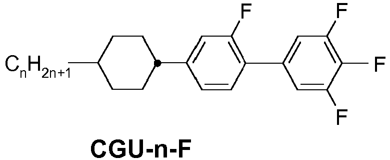 |
| 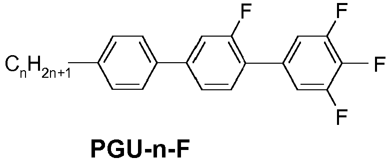 |
| 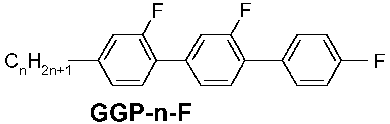 |
| 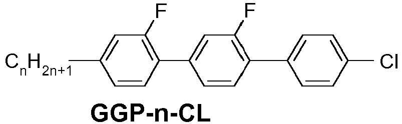 |
| 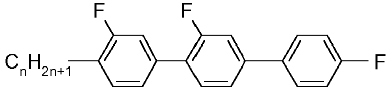 |
| 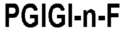 |
| 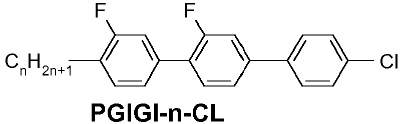 |
| 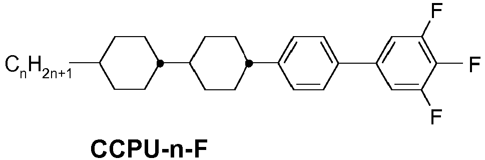 |
| 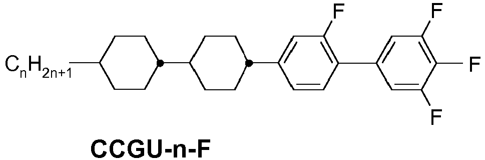 |
| 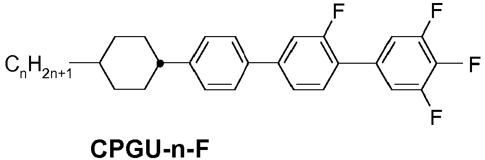 |
| 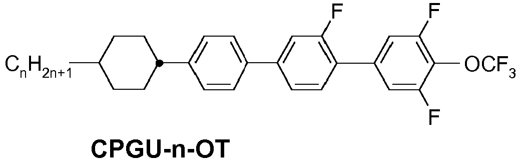 |
| 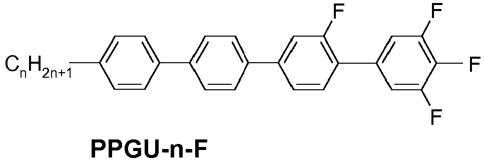 |
| 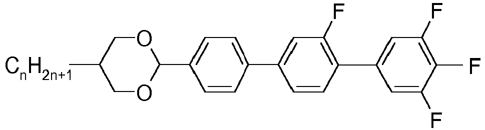 |
| 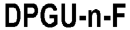 |
| 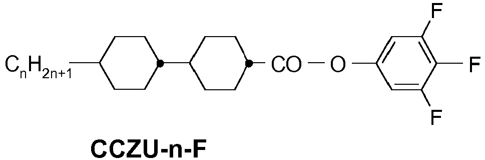 |
| 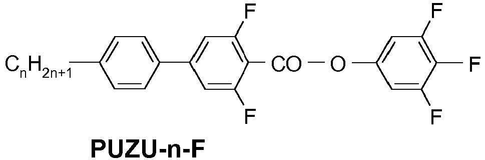 |
| 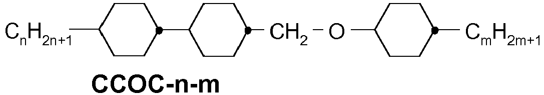 |
| 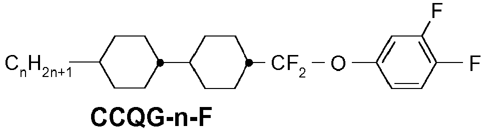 |
| 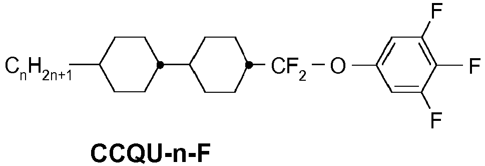 |
| 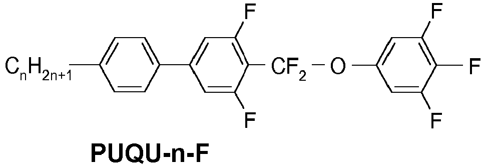 |
| 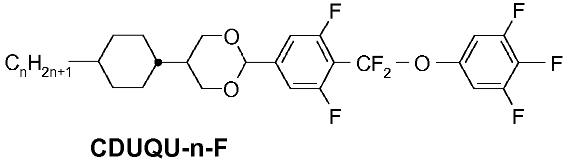 |
| 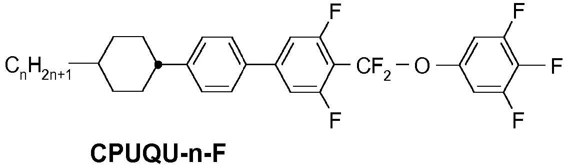 |
| 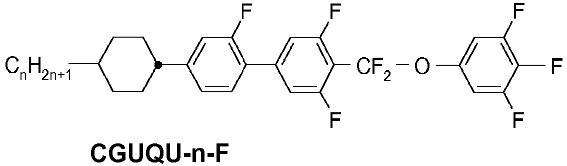 |
| 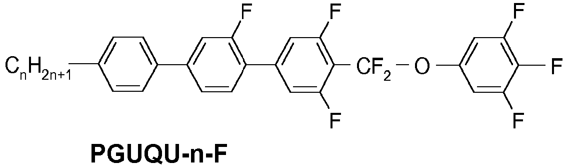 |
| 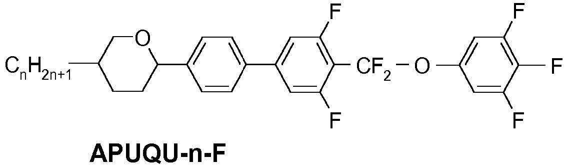 |
| 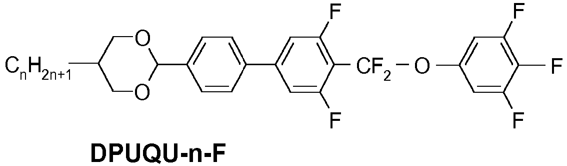 |
| 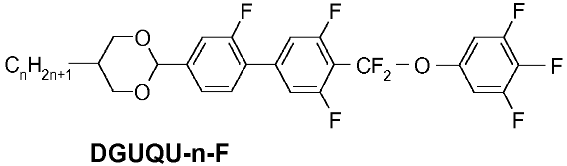 |
| 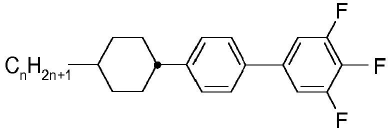 |
| 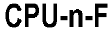 |
| 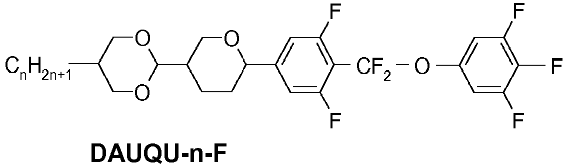 |
| 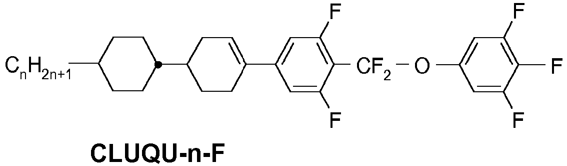 |
| 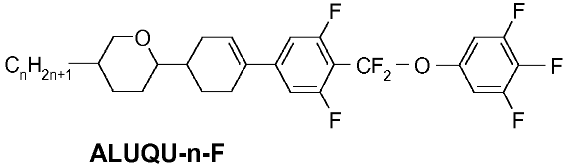 |
| 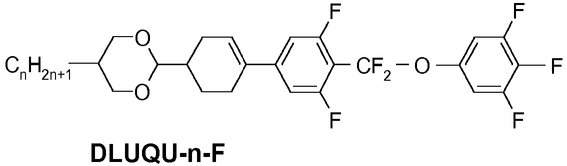 |
| 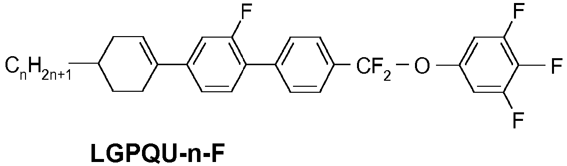 |
| Exemplary, preferred dielectrically neutral compounds |
| 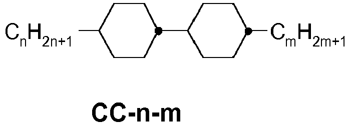 |
| 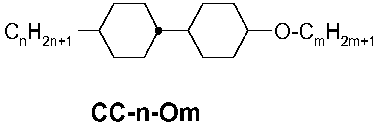 |
| 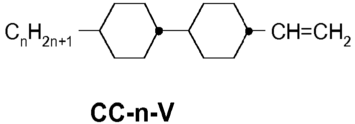 |
| 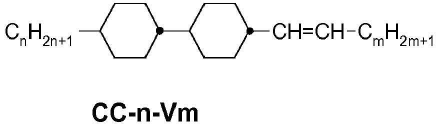 |
| 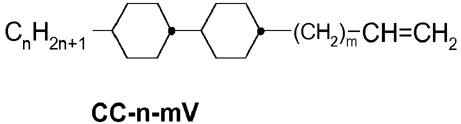 |
| 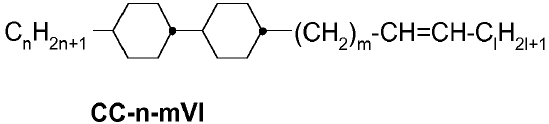 |
| 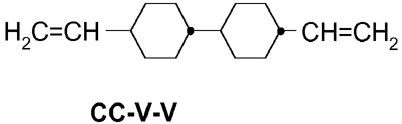 |
| 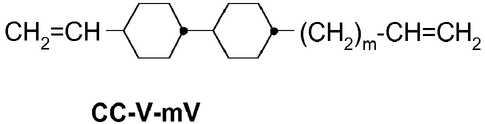 |
| 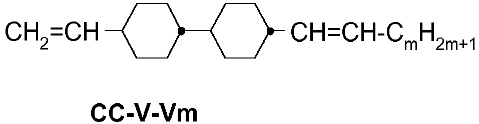 |
| 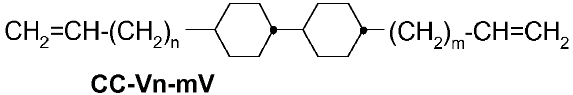 |
| 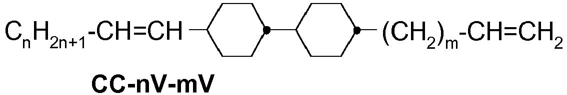 |
| 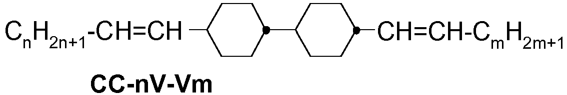 |
| 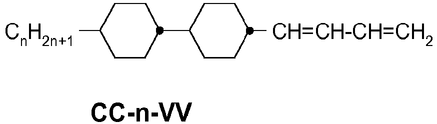 |
| 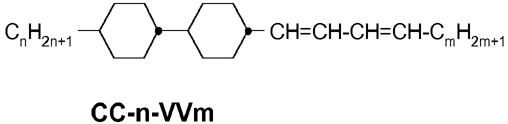 |
| 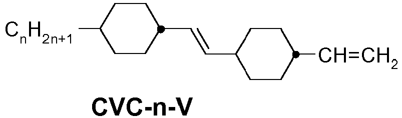 |
| 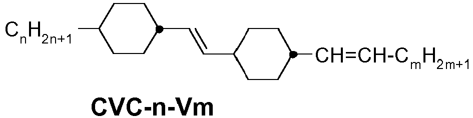 |
| 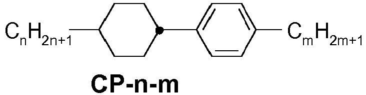 |
| 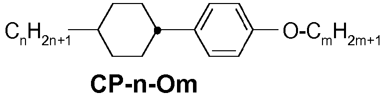 |
| 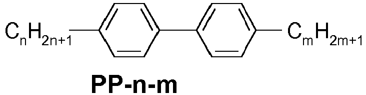 |
| 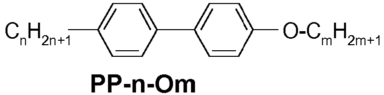 |
| 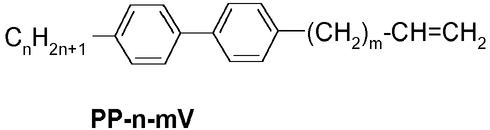 |
| 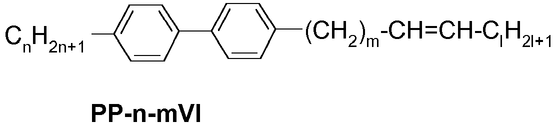 |
| 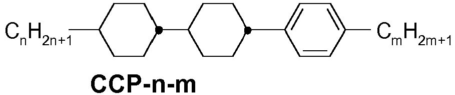 |
| 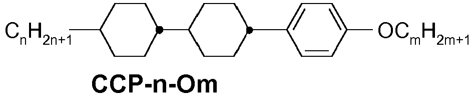 |
| 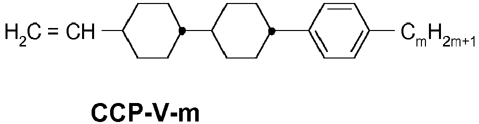 |
| 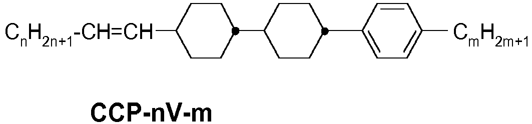 |
| 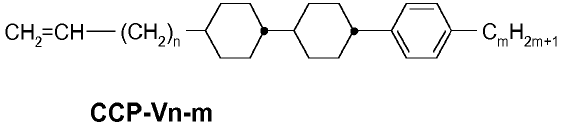 |
| 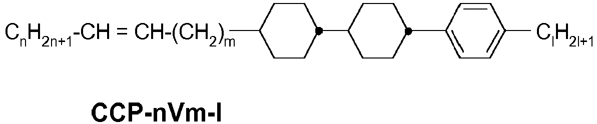 |
| 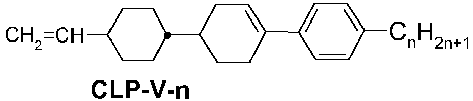 |
| 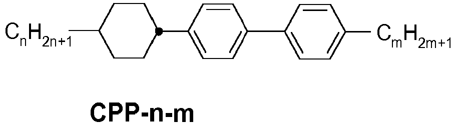 |
| 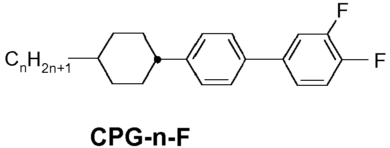 |
| 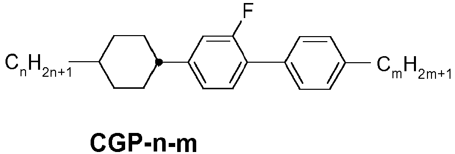 |
| 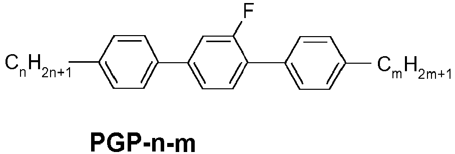 |
| 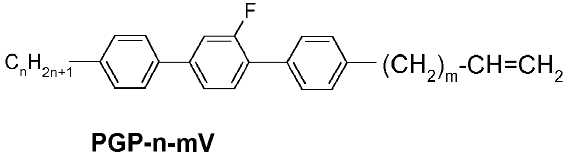 |
| 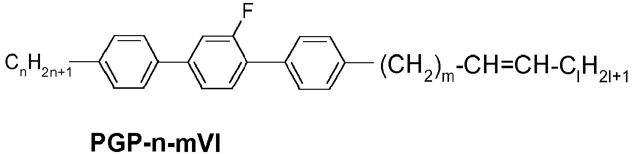 |
| 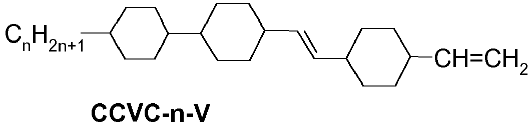 |
| 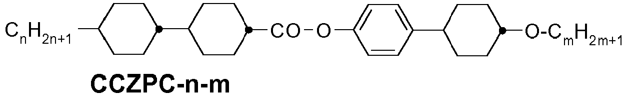 |
| 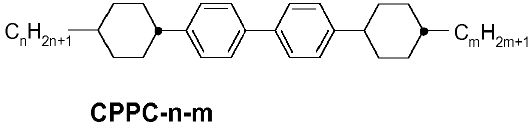 |
| 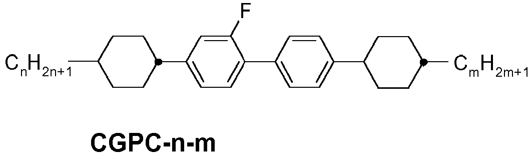 |
| 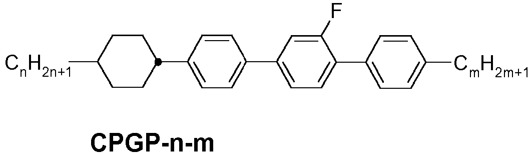 |
| Exemplary, preferred dielectrically negative compounds |
| 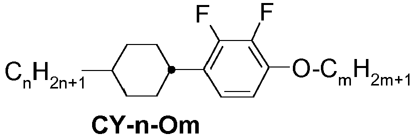 |
| 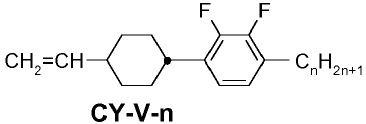 |
| 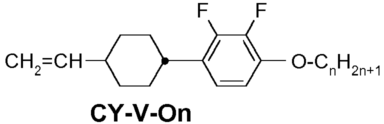 |
| 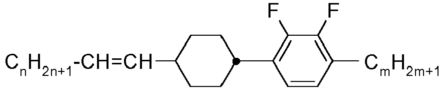 |
| 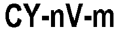 |
| 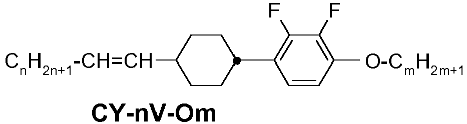 |
| 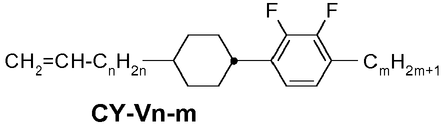 |
| 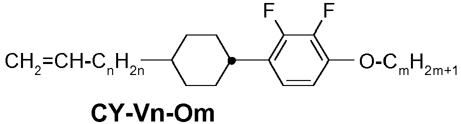 |
| 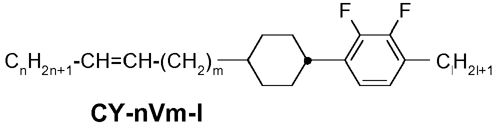 |
| 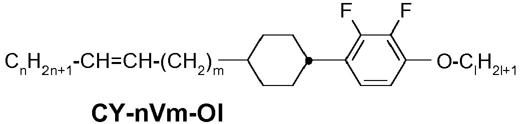 |
| 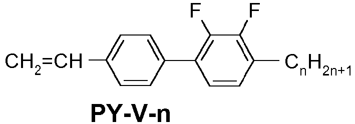 |
| 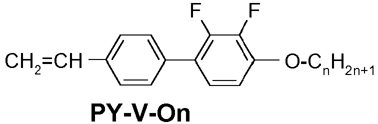 |
| 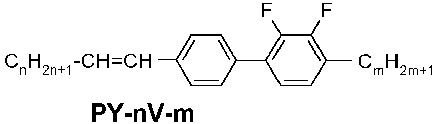 |
| 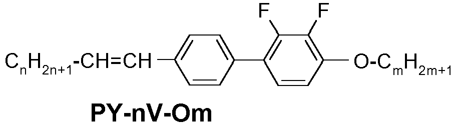 |
| 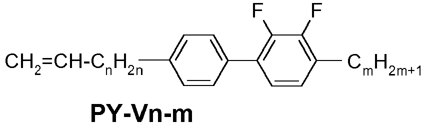 |
| 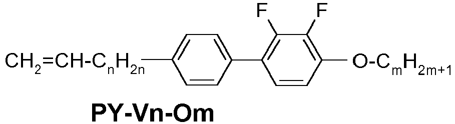 |
| 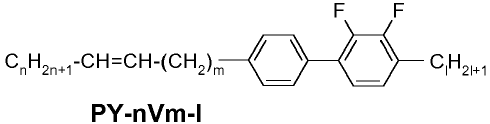 |
| 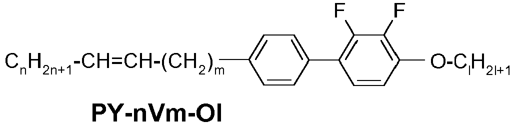 |
| 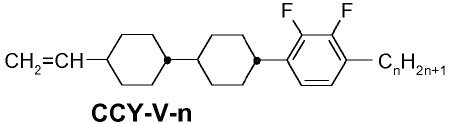 |
| 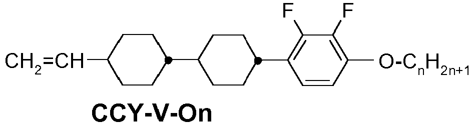 |
| 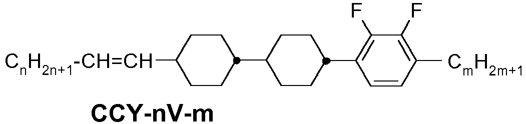 |
| 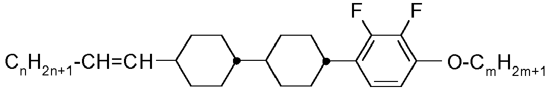 |
| 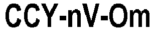 |
| 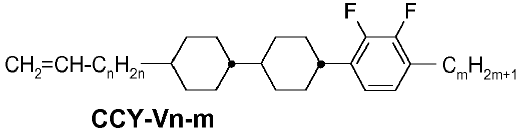 |
| 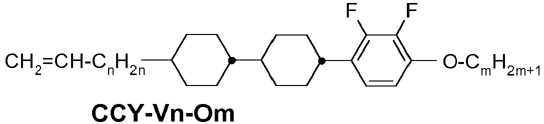 |
| 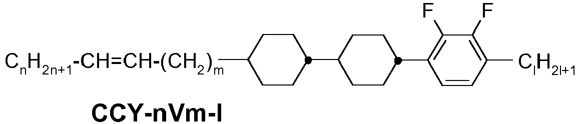 |
| 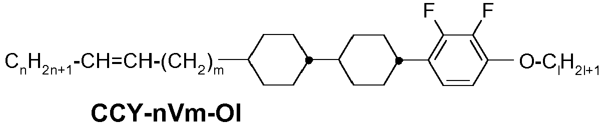 |
| 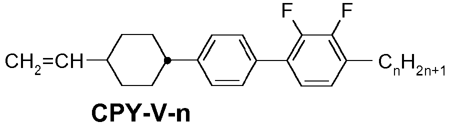 |
| 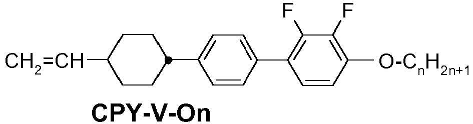 |
| 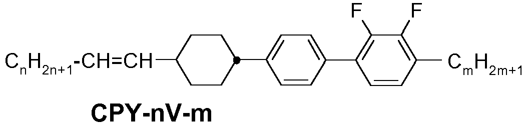 |
| 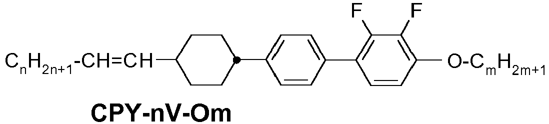 |
| 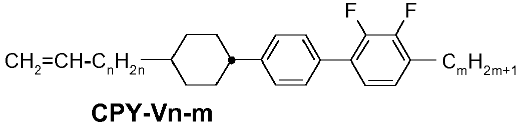 |
| 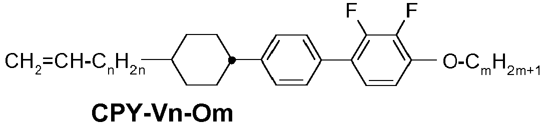 |
| 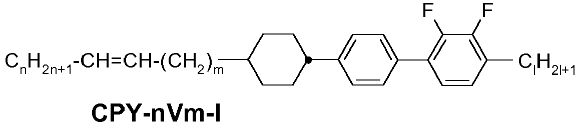 |
| 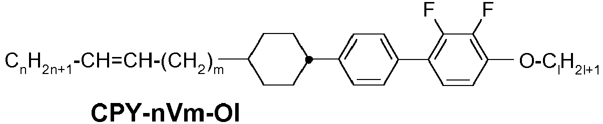 |
| 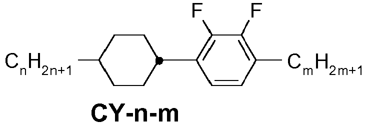 |
| 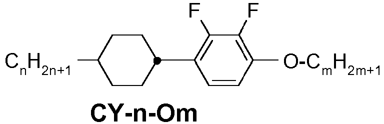 |
| 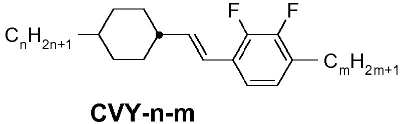 |
| 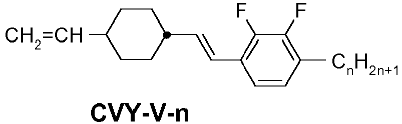 |
| 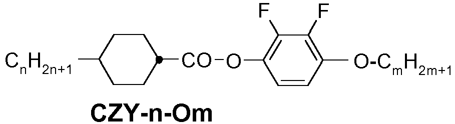 |
| 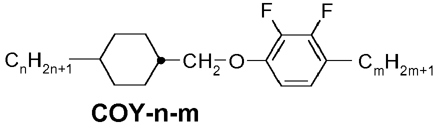 |
| 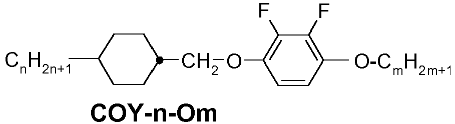 |
| 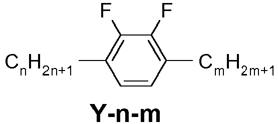 |
| 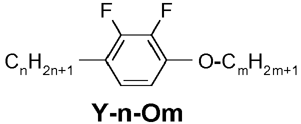 |
| 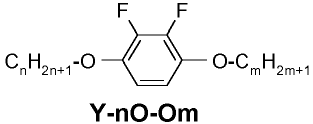 |
| 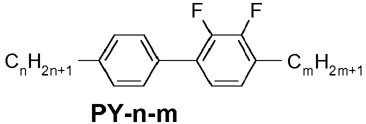 |
| 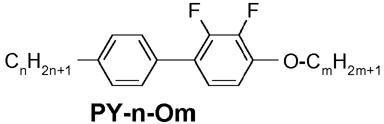 |
| 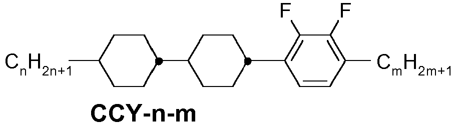 |
| 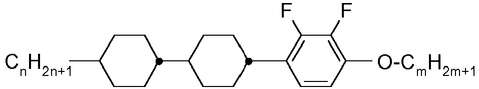 |
| 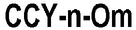 |
| 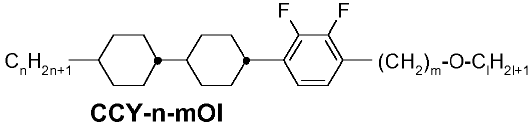 |
| 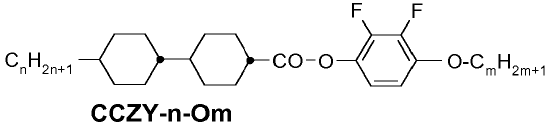 |
| 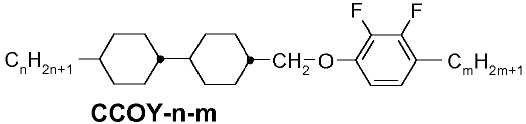 |
| 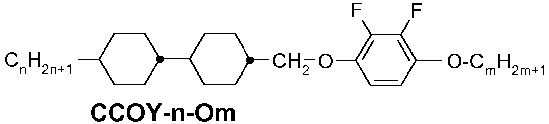 |
| 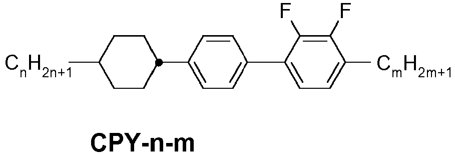 |
| 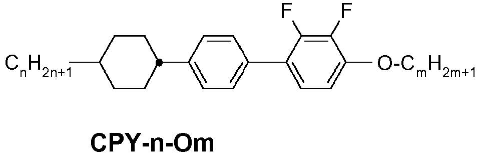 |
| 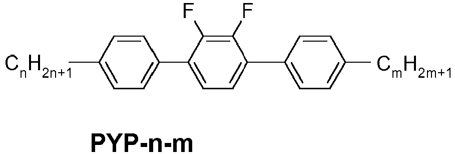 |
| 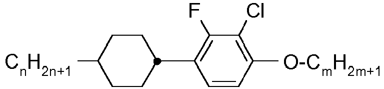 |
| 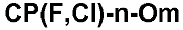 |
| 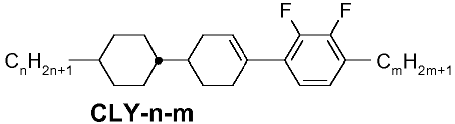 |
| 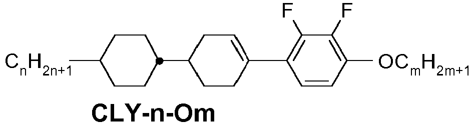 |

Table E shows chiral dopants which are preferably employed in the mixtures according to the invention.

**Table E**

| |
|---|
| 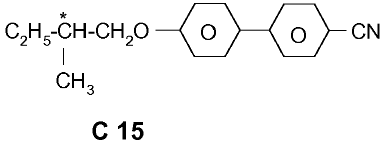 |
| 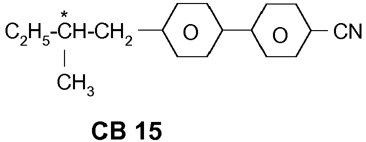 |
| 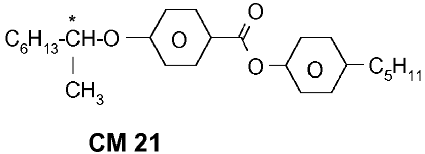 |
| 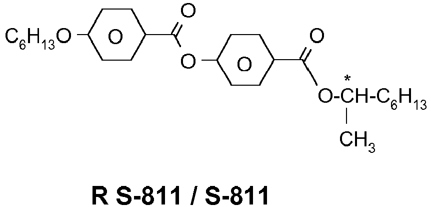 |
| 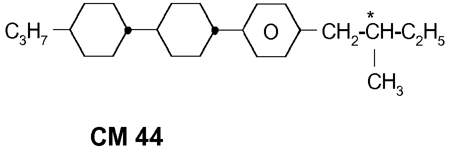 |
| 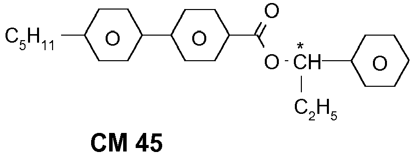 |
| 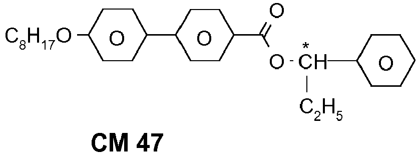 |
| 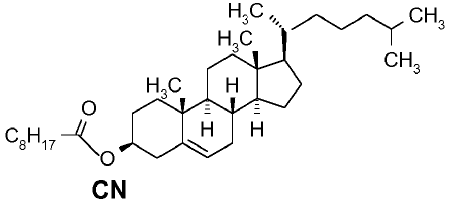 |
| 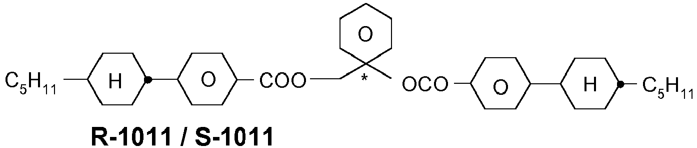 |
| 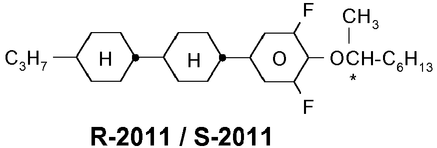 |
| 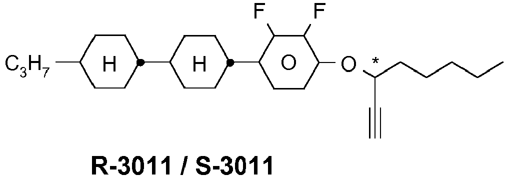 |
| 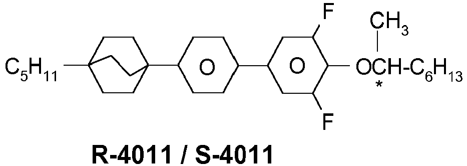 |
| 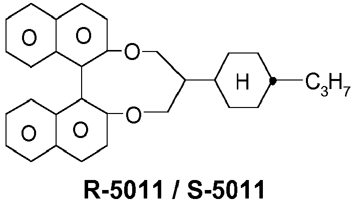 |

In a preferred embodiment of the present invention, the media according to the invention comprise one or more compounds selected from the group of the compounds from Table E.

Table F shows stabilisers which can preferably be employed in the mixtures according to the invention in addition to the compounds of formula I. The parameter n here denotes an integer in the range from 1 to 12. In particular, the phenol derivatives shown can be employed as additional stabilisers since they act as antioxidants.

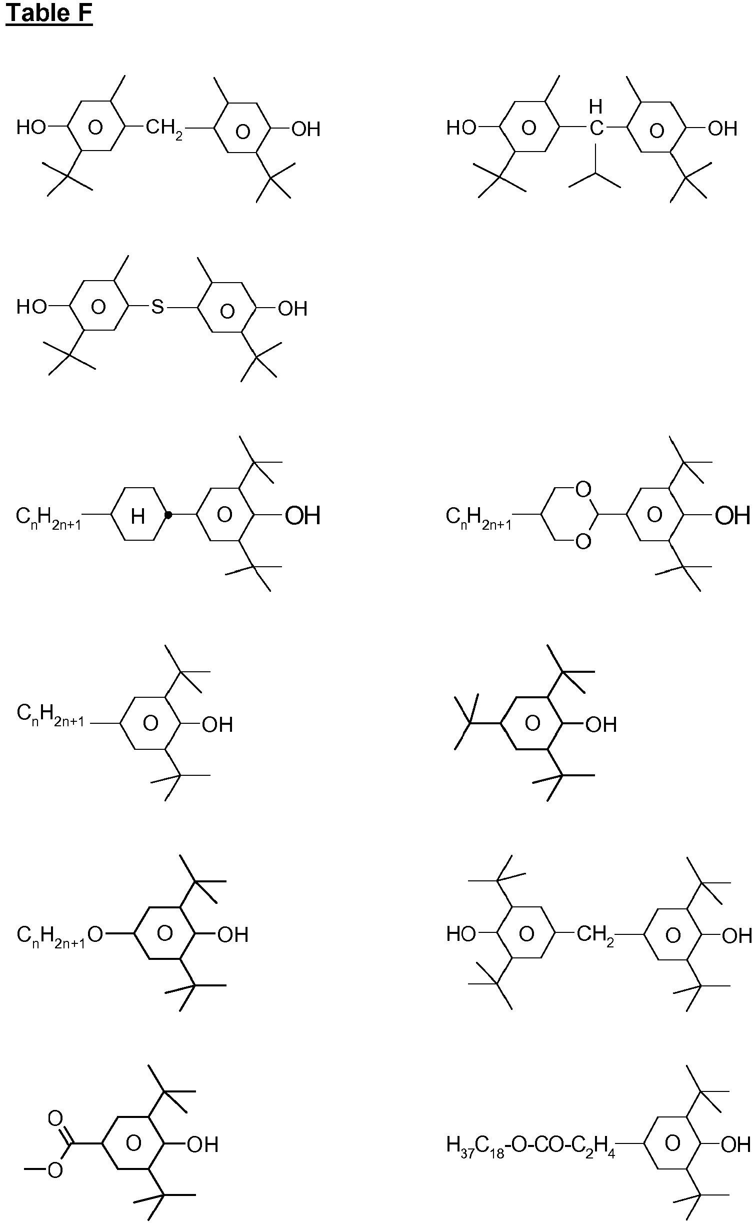

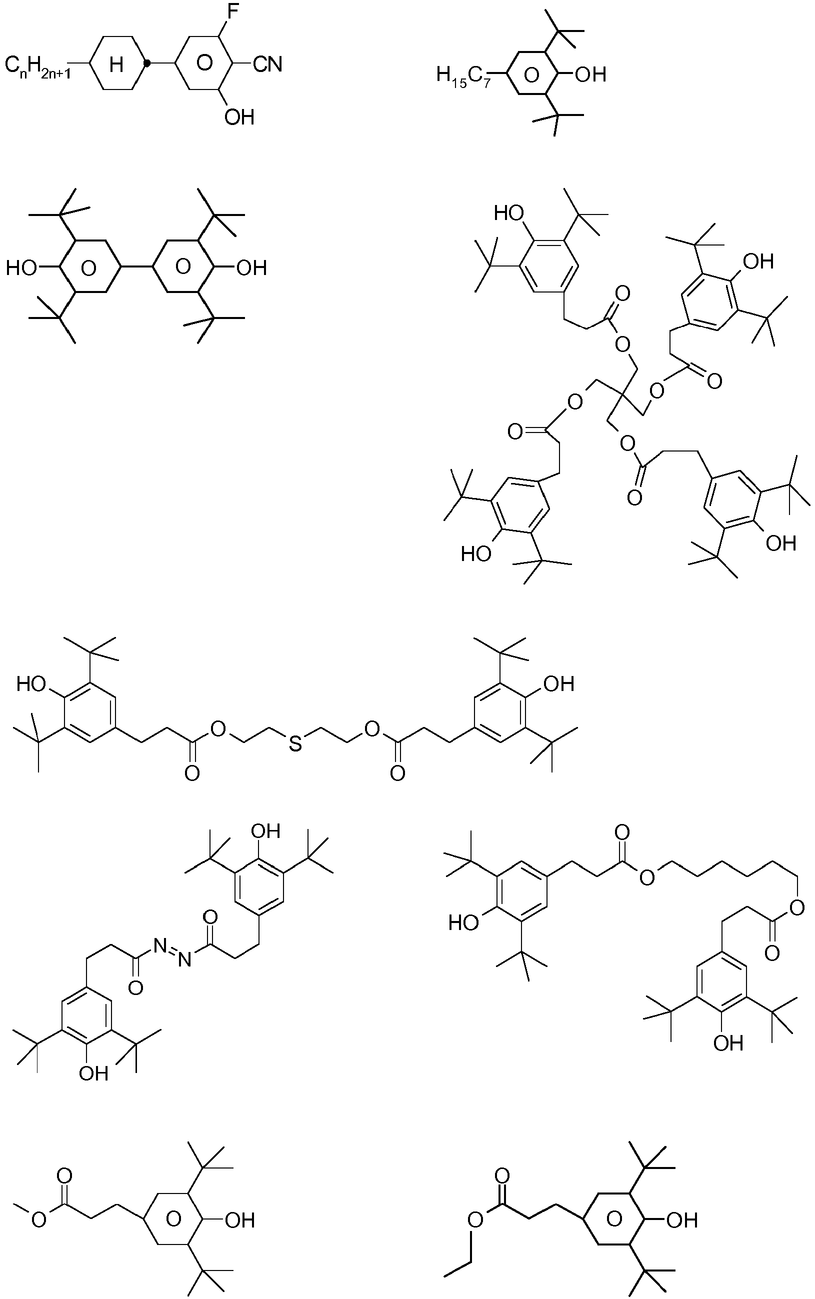

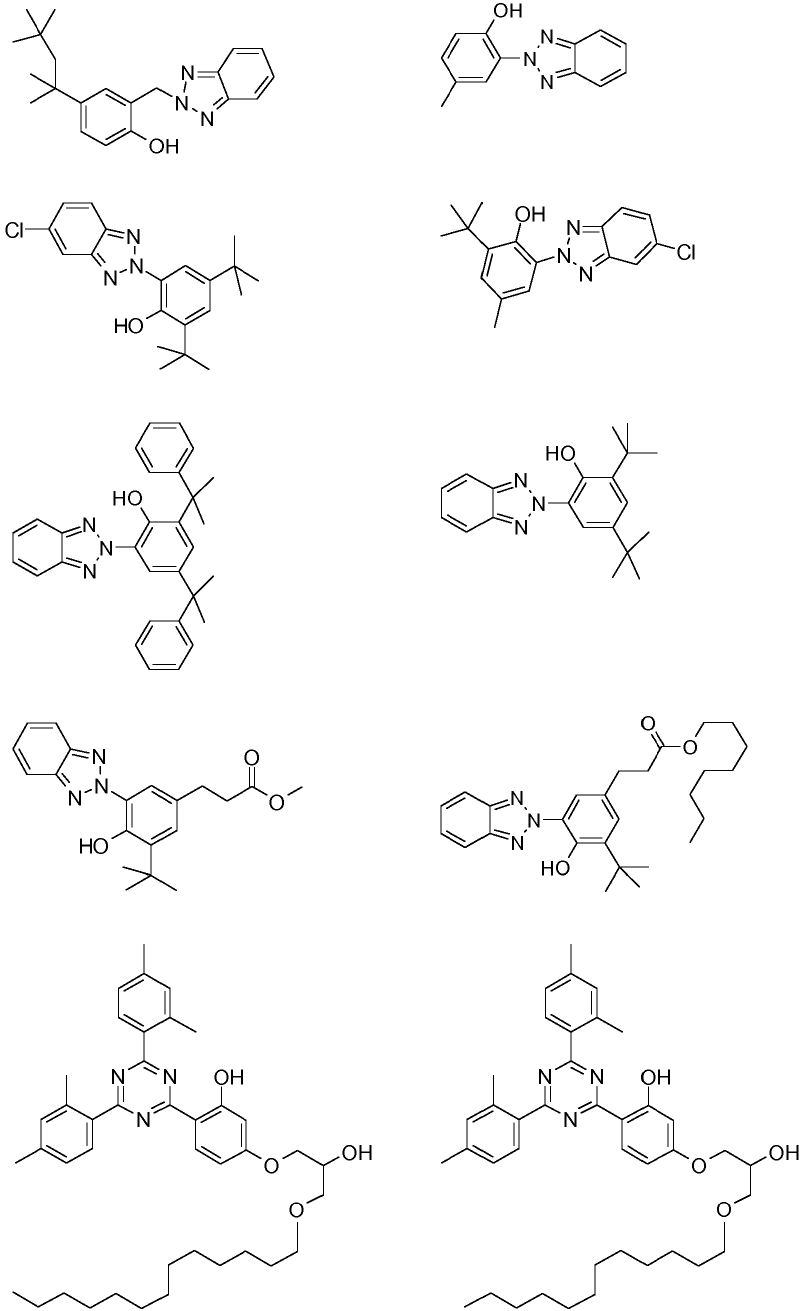

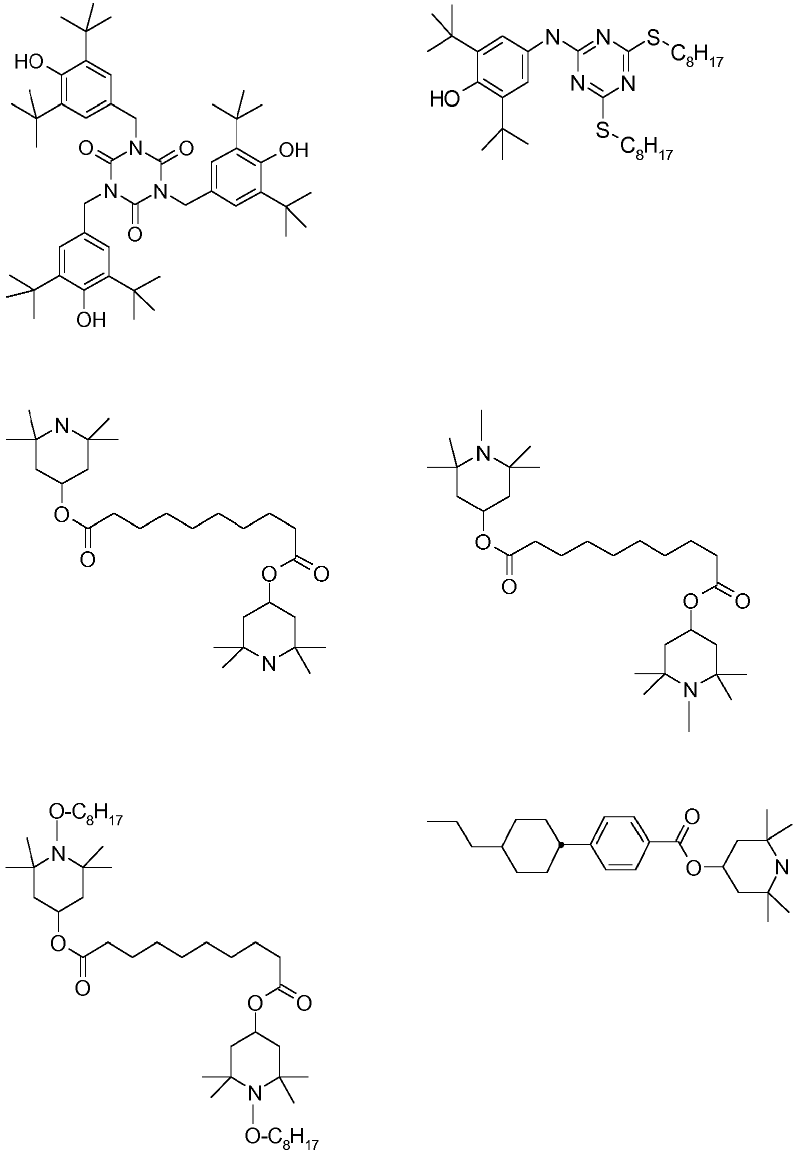

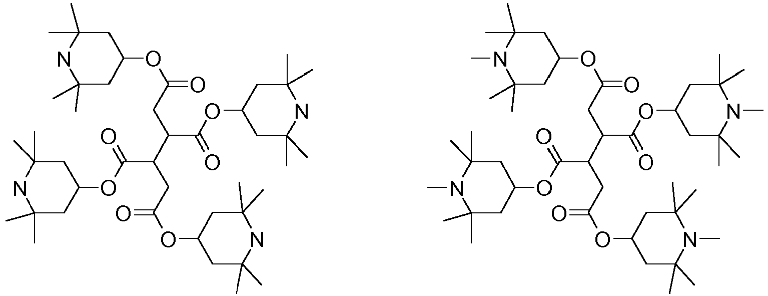

wherein n is 1, 2, 3, 4, 5, 6 or 7and preferably 3.

In a preferred embodiment of the present invention, the media according to the invention comprise one or more compounds selected from the group of the compounds from Table F, in particular one or more compounds selected from the group of the compounds of the following two formulae

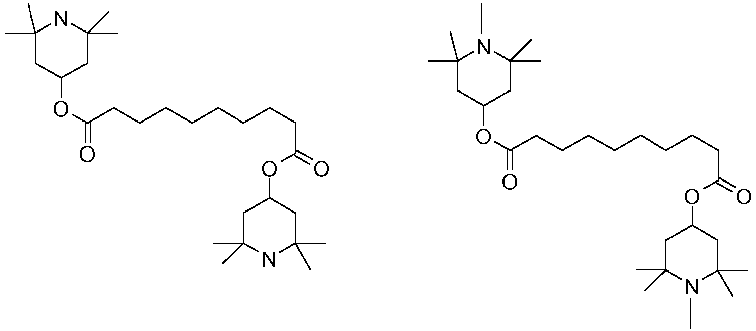

### Examples

The following examples explain the present invention without restricting it in any way. However, the physical properties make it clear to the person skilled in the art what properties can be achieved and in what ranges they can be modified. In particular, the combination of the various properties which can preferably be achieved is thus well defined for the person skilled in the art.

### Synthesis examples

Exemplary compounds if formula IN-A having a high dielectric constant perpendicular to the director (ε_{⊥}) and a high average dielectric constant (ε_{av.}) are synthesised.

### Synthesis Example 1

### Synthesis of 1,1,5,6,7-Pentafluoro-2-(trans-4-n-propyl-cyclohexyl)-indane:

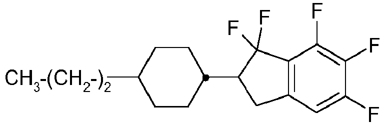

### Step 1.1:

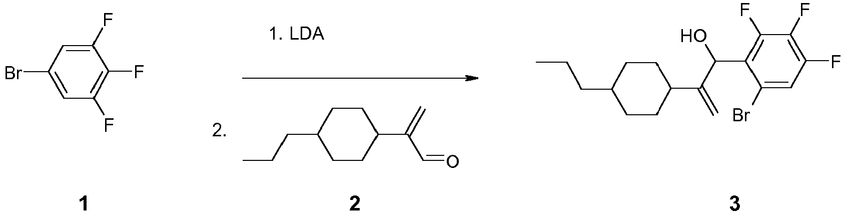

Diisopropylamine (59.6 ml, 420 mmol) in 600 ml tetrahydrofuran is cooled to -40°C and 264 ml (420 mmol) of a solution of 15 % butyllithium in hexane is added dropwise within 15 min. and then the reaction mixture is stirred for 30 min. at that temperature. The mixture subsequently is cooled to -75°C and 1-bromo-3,4,5-trifluorobenzene (compound **1,** 84.9 g, 403 mmol) is added as a solution in 110 ml tetrahydrofuran. After stirring for 1 h at -70°C the aldehyde **2** (69.6 g, 350 mmol) in 110 ml tetrahydrofuran is added dropwise. (The aldehyde (compound **2**) is prepared as described in e.g. in M. Bremer and L. Lietzau, New J. Chem. 2005, 29, p. 72-74.) The reaction mixture is stirred for another 30 min. at this temperature and then allowed to warm to ambient temperature and worked up as usual. Throughout this application the term ambient temperature signifies a temperature of approximately 20°C, say 20°C +/- 2°C unless explicitly stated otherwise. The allylic alcohol (compound **3**) is obtained as a yellow oil.

### Step 1.2:

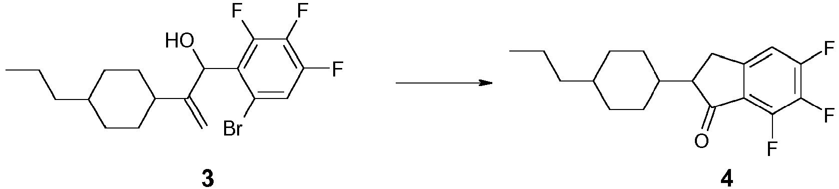

The allylic alcohol **3** (298 mmol) from the previous step is dissolved in 530 ml 1,4-dioxane and N-ethyl-diisopropyl amine (206,4 ml), palladium(II)chloride (2.6 g, 15 mmol) and tris(o-tolylphosphin) (13.7 g, 45 mmol) are added. The mixture is heated to reflux for 16 h. After the usual workup, the crude indanone (compound **4**) is obtained.

### Step 1.3:

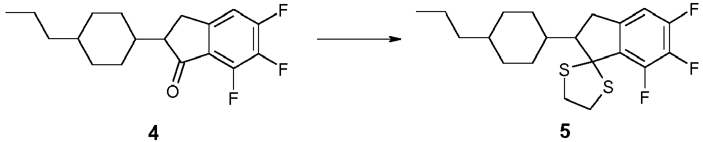

The indanone **4** (143 mmol) from the previous step and 1,2-ethanediol (16.8 ml, 200 mmol) are dissolved in 360 ml toluene, 2.1 ml trifluoromethane sulfonic acid is added and the mixture is heated to reflux for 4 h while the water generated is collected in a Dean-Stark apparatus. After the usual workup the intermediate product the thioketal (compound **5**) is obtained as colorless crystals.

### Step 1.4:

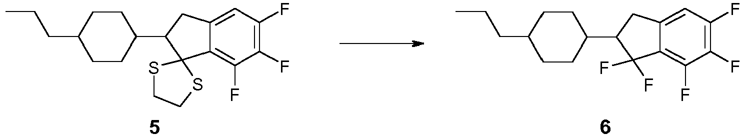

In a Teflon vessel, N-iodosuccinimide (91.9 g, 369 mmol) is suspended in 550 ml dichloromethane, cooled to -70°C, and hydrogen fluoride in pyridine (65% solution, 96.0 ml) is added, in such a way that the temperature always stays below -35°C. The mixture is then cooled again to -70°C. Then, the thioketal 5 (35 g, 89 mmol) of the previous step dissolved in 180 ml dichloromethane is added dropwise. The mixture is stirred for 2 h and subsequently allowed to warm to ambient temperature. A mixture of 420 ml aqueous sodium hydroxide (32 %), 200 ml aqueous sodium bisulfite (39 %) and 4.4 L ice water is prepared and the reaction solution is poured into it. After the usual workup the product, compound **6,** is obtained as colorless crystals. It is identified via ¹H NMR spectroscopy as follows:
¹H NMR (500 MHz, Chloroform-d) δ 6.84 (t, *J* = 7.5 Hz, 1H), 3.04 (ddd, *J* = 16.2, 8.2, 3.5 Hz, 1H), 2.70 (d, *J* = 11.5 Hz, 1H), 2.39 (ddt, *J* = 25.5, 17.4, 9.0 Hz, 1H), 2.18 (dq, *J* = 13.0, 3.1 Hz, 1H), 1.83 - 1.73 (m, 2H), 1.76 - 1.62 (m, 1H), 1.32 (h, *J* = 7.3 Hz, 2H), 1.26 - 0.85 (m, 8H).

This compound (CfK-3-F) has a phase transition of K 72°C I, a Δn of 0.072, a Δε of -2.1 and a high ε_{⊥} of 12.2.

### Synthesis Example 2

### Synthesis of 1,1,6,7-Tetrafluoro-2-octylindane:

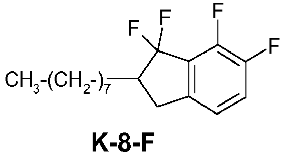

### Step 2.1:

Freshly distilled decanal (39 g, 250 mmol) and dimethylmethylene imminium chloride (73 g, 757 mmol) are suspended in 250 ml of dichloromethane at ambient temperature. Triethylamine (35.7 ml, 250 mmol) is slowly added while the temperature rose to 45 °C. After stirring for 16 h, the mixture is worked up as usual and distilled under reduced pressure. The product of this step has a boiling point of 65°C at a pressure of 0.1 bar.

### Step 2.2:

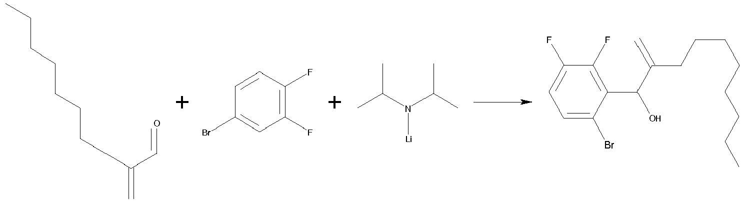

3,4-Difluoro-1-bromobenzene (38 g, 197 mmol) is dissolved in 350 ml tetrahydrofuran and cooled to -74°C. Lithiumdiisopropyl amide is added (100 ml of a 2 M solution in cyclohexane, ethylbenzene and tetrahydrofuran, 194 mmol) and stirred for 1 h. 2-Methylenedecanal (26.8 g) in 75 ml tetrahydrofuran is slowly added and the mixture is warmed to ambient temperature overnight. After the usual workup the allylic alcohol is obtained.

### Steps 2.3 to 2.5:

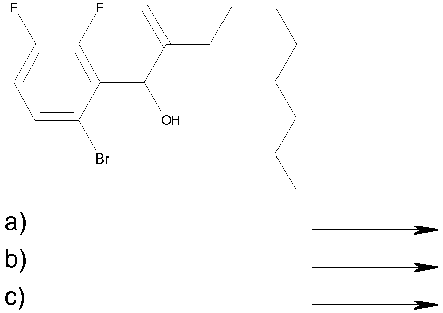

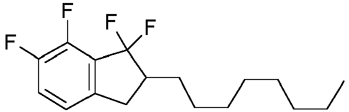

The subsequent Heck-cyclization (a), thioacetalization (b) and fluorination (c) are carried out as described previously in M. Bremer, L. Lietzau, New J. Chem. 2005, 29, p. 72-74.

This compound (K-8-F) has a phase transition of K 17°C I, a Δε of -3.2 and a high ε_{⊥} of 14.2.

### Synthesis Example 3

### Synthesis of 2-n-pentyl-5-(1,1,6,7-tetrafluorindane-2yl)-tetrahydropyran:

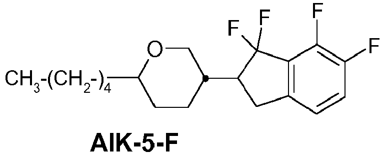

### Step 3.1: Syntheses of 6-n-pentyl-tetrahydro-pyran-2-ole:

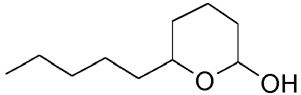

127 g (0.727mol) 6-*n*-pentyl-tetrahydro-pyran-2-one is dissolved in 800 ml dichloromethane and cooled to -70°C under an atmosphere of argon. At a temperature in the range from -70°C to -65°C 800 ml diisobutylaluminiumhydrid (1 M in dichlormethane) is added dropwise within 1 h. Then the reaction mixture is stirred for 3 h at -70°C and subsequently, still at the same temperature, 800 ml saturated solution of sodium bicarbonate is added dropwise within 10 min. at a temperature in the range from -70°C to 0°C to hydrolyse the intermediate product. The crude product is filtered using a "Seitz" filter and washed thoroughly with dichloromethane. The organic phase is separated, dried, filtered and the solvent evaporated at 40°C and a maximum pressure of 400 mbar.

The crude product is distilled. The product of this step has a boiling point at 0.1 mbar of about 143 to 148°C.

### Step 3.2: Synthesis of 2-n-pentyl-3,4-dihydro-2H-pyran:

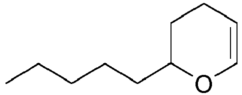

1 mol 6-*n*-pentyl-tetrahydro-pyran-2-ol is dissolved in 750 ml dichloromethane, 2.5 mol triethylamine and 0.02 mol 4-(dimethylamino)-pyridine are added. The reaction mixture is cooled to 10°C and 1.1 mol methanesulfonylchloride is added dropwise at a temperature of 10 to 15°C. The mixture is then stirred for 30 min. Then it is heated under reflux for 2 h and subsequently cooled and poured into 1,000 ml of a mixture of ice and water and then stirred for 15 min. The organic phase is separated, dried and the dichloromethane distilled off. The crude product is worked up the usual way.

### Step 3.3: Synthesis of 6-n-pentyl-tetrahydro-pyran-3-ole:

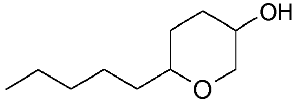

1 mol 2-*n*-pentyl-3,4-dihydro-2H-pyran is dissolved in 500 ml THF and cooled to -18°C. 1.35 mol borane-THF-complex (1M in THF) is added dropwise at a temperature of -18 to -13°C. The reaction mixture is stirred for 1 h at -15°C. Then it is allowed to warm to ambient temperature and stirred for another 1 h. Then 5 mol ethanol are added dropwise under strong evolution of gas. The temperature rises up to 48°C. Then 1.75 mol sodiumhydroxide dissolved in 250 ml water are added dropwise, and a white slimy precipitate is formed. Then 4 mol hydrogen peroxide (35% in water) are added dropwise. The reaction mixture starts to foam strongly and heats up to its boiling temperature. It is heated for 2 h under reflux and allowed to cool to ambient temperature under stirring over 16 h. The reaction mixture is poured into water, the organic phase is separated, and reduced to the remaining crude product, which is subjected to the usual work up.

### Step 3.4: Synthesis of 6-n-pentyl-dihydro-pyran-3-one:

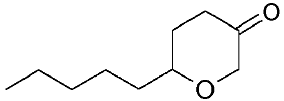

1.5 mol pyridinium chlorochromate and 500 g Celite (Merck # 102693) are placed together with 2,000 ml dichloromethane in a reaction vessel. Then 1 mol 6-*n*-pentyl-tetrahydro-pyran-3-ol dissolved in 500 ml dichloromethane is added dropwise at a temperature of 22 to 32°C. The reaction mixture is stirred at ambient temperature for 16 h. Then it is filtered and washed thoroughly with dichloromethane. The filtrate is worked up in the usual way. The product of this step has a boiling point of about 94 to 95°C at a pressure of 4 mbar.

### Step 3.5: Synthesis of 5-(methoxy-meth-(E)-ylidene)-2-n-pentyl-tetrahydropyran:

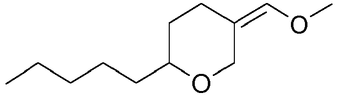

1 mol 6-*n*-pentyl-dihydro-pyran-3-one and 1.2 mol methoxymethyl triphenylphosphonium chloride are placed together with in 2000 ml THF in a reaction vessel and cooled to -15°C. Then 1.1 mol potassium-*tert-*butylate is added in small portions at a temperature in the range from - 15 to max. -10°C. The reaction mixture is allowed to warm to ambient temperature and stirred at ambient temperature for 16 h. Then it is poured into 2,000 ml of a mixture of ice and water, neutralised (to pH = 6.8), the organic phase separated, and the produced subjected to the usual work up.

### Step 3.6: Synthesis of 6-n-pentyl-tetrahydro-pyran-3-carbaldehyde:

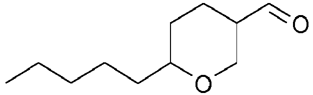

1 mol 5-(methoxy-meth-(*E*)-ylidene)-2-*n*-pentyl-tetrahydropyran is dissolved in 600 ml THF under an inert atmosphere, 0.6 mol hydrochloric acid (HCI, conc. = 2 mol/L) is added. The reaction mixture is stirred at ambient temperature for 16 h. Then 40 ml of concentrated hydrochloric acid is added. Then 1 L of a saturated solution of sodiumchloride is added and the product is extracted with MTB-ether. The organic phase is separated, dried the solvent removed and the crude product subjected to the usual work up. The product of this step has a purity of 97.7 % (by GC) and distribution of the respective stereoisomers of cis/trans = 3:2.

### Step 3.7: Synthesis of trans-6-n-pentyl-tetrahydro-pyran-3-carbaldehyde:

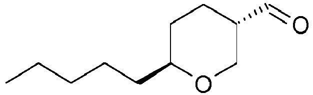

1 mol 6-*n*-pentyl-tetrahydro-pyran-3-carbaldehyde is dissolved in 1,000 ml methanol and 0.35 mol of NaOH as 16 % aqueous solution is added. The reaction mixture is stirred at ambient temperature for 4 h, then treated with 1 L of a mixture of ice and water and neutralized (to pH = 7) with 1 N hydrochloric acid. The reaction mixture is exctracted three times with MTB-ether. The organic phase is separated, reduced and the crude product worked up the usual way. Here the distribution of the respective stereoisomers of the product of this step is cis/trans = 2:8.

### Step 3.8: Synthesis of 5-((E)-2-methoxy-vinyl)-2-n-pentyl-tetrahydropyran:

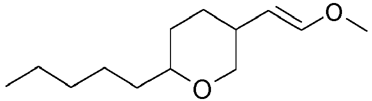

1 mol *trans* 6-*n*-pentyl-tetrahydro-pyran-3-carbaldehyde and 1.2 mol methoxymethyl triphenylphosphonium chloride are placed with 2.000 ml THF in a reaction vessel under inert gas and cooled to -10°C. In a temperature range of -10 to max. 0°C 1.2 mol potassium-*tert*-butylate is added. Then the reaction mixture is stirred for 24 h, at ambient temperature. Subsequently, the reaction mixture is poured into 2,000 ml of a saturated solution of ammonium chloride. The organic phase is separated, reduced and the crude product worked up as usual. The purity of the product of this step is 91.5 % (by GC).

### Step 3.9: Synthesis of 6-n-pentyl-tertahydro-pyran-3-yl-acetaldehyde:

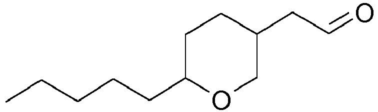

0.15 mol 5-((E)-2-methoxy-vinyl)-2-*n*-pentyl-tetrahydropyran is dissolved in 300 ml THF, 25 ml of hydrochloric acid (conc. = 18 %) is added and the reaction mixture is stirred at ambient temperature for 2 h. The progress of the reaction is monitored from time to time by thin layer chromatography. Then a solution of potassium chloride is added and the reaction mixture is extracted three times with MTB-ether. The organic phase is separated, reduced and the crude product worked up as usual. The purity of the product of this step is 87 % (by GC).

### Step 3.10: Synthesis of 2-(6-n-pentyl-tetrahydro-pyran-yl)-propenal:

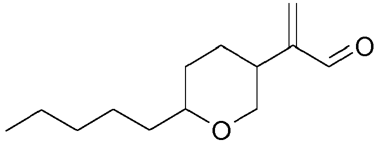

0.1 mol 6-*n*-pentyl-tertahydro-pyran-3-yl-acetaldehyde and 0.4 mol N,N-dimethylmethylene iminium chloride and 300 ml dichloromethane are placed in a reaction vessel and 0.1 mol triethylamine is added slowly dropwise at ambient temperature. The reaction mixture is poured into 500 ml of water. The organic phase is separated and washed once each with dilute hydrochloric acid and with a solution of sodium chloride, dried, filtered, reduced and the crude product worked up as usual. The purity of the product of this step is 88 % (by GC).

### Step 3.11: Synthesis of 1-(6-bromo-2,3-difluoro-phenyl)-2-(6-n-pentyl-tetrahydro-pyrano-3-yl)prop-2-en-1-ol:

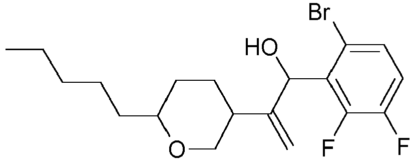

This reaction step is performed using two separate apparatuses at the same time.

**In the first apparatus** 0.14 mol diisopropylamine and 125 ml of tetrahydrofuran are placed in a reaction vessel, cooled to -50 °C and 0.14 mol butyllithium (15 % in hexane) is added dropwise. Then the reaction mixture is stirred for 30 min. at -50°C, then it is cooled to -75°C. The resultant solution is called Solution 1.

**In the second apparatus** 0.12 mol 1-bromo-3,4-difluorobenzene and 125 ml THF are combined and cooled to -75°C. Then Solution 1 is added dropwise. The reaction mixture is stirred for 1 h at -75°C. Then, at the same temperature 0.1 mol 2-(6-*n*-pentyl-tetrahydro-pyran-yl)-propenal dissolved 125 ml THF is added dropwise. The reaction mixture is stirred for 1h at -70°C, allowed to warm up to ambient temperature and the stirred for 16 h at this temperature. Then the reaction mixture is poured into 500 ml of a mixture of ice and water, comprising 75 ml hydrochloric acid (conc. 18 %): The organic phase is separated, and reduced. The crude product is worked up as usual. The purity of the product of this step is 84 % (by GC).

### Step 3.12: Synthesis of 6,7-difluoro-2-(6-n-pentyl-tetrahydro-pyran-3-yl)indane-1-one:

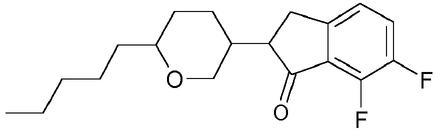

0.1 mol 1-(6-bromo-2,3-difluoro-phenyl)-2-(6-*n*-pentyl-tetrahydro-pyran-3-yl)prop-2-en-1-ol and 250 ml dioxane are placed in a reaction vessel under an inert atmosphere. 0.05 mol palladium(II)-chloride and 0.1 mol tris(*o*-tolyl)phosphine and 0.4 mol N-ethyldiisopropylamine are added. The reaction mixture is heated under reflux for 24 h, cooled down and reduced. The residue is taken up in 200 ml each of MTB-ether and water and stirred for 10 min. The organic phase is separated, dried, filtered and reduced. The crude product is worked up as usual. The purity of the product of this step is 98.7 % (by GC).

### Step 3.13: Synthesis of: 5-(6',7'-difluorospiro[1,3-dithiolane-2,1'-indane]-2'-yl)-2-pentyl-tetrahydropyran:

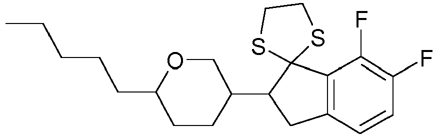

0.02 mol 6,7-difluoro-2-(6-*n*-pentyl-tetrahydro-pyran-3-yl)indane-1-one and 0.08 mol 1,2-ethanediol are dissolved in 100 ml dichloromethane and at ambient temperature 0.04 mol *perchloric acid*/*silica gel;* 0.5 mmol/ g are added. The reaction mixture is stirred at ambient temperature for 4 h. Additional 0.12 mol *perchloric acid*/*silica gel;* 0.5 mmol/ g are added and the rection mixture is stirred for another 48 h, at ambient temperature, filtered and washed with dichloromethane. The solution in dichloromethane is reduced and the crude product worked up as usual. The purity of the product of this step is 99.8 % (by GC).

### Step 3.14: Synthesis of: 2-n-pentyl-5-(1,1,6,7-tetrafluorindane-2yl)-tetrahydro-pyran:

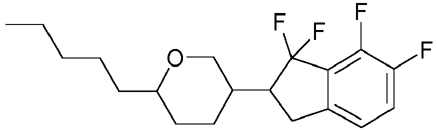

0.08 mol 1,3-dibromo-5,5-dimethylhydantoin and 100 ml dichloromethane are placed in a reaction vessel and cooled to -50°C. At a temperature in the range from -50 to -45°C 0.8 mol hydrogen fluoride (HF) as a solution in pyridine (conc. 65 %) is added dropwise. The mixture is cooled to -75°C and at this temperature 0.02 mol 5-(6',7'-difluorospiro[1,3-dithiolane-2,1'-indane]-2'-yl)-2-pentyl-tetrahydropyran dissolved in 100 ml dichloromethane is added dropwise over a time of 30 min. The reaction mixture is stirred for 6 h at -75°C and allowed to warm up to ambient temperature for 16 h. The reaction mixture is poured into 500 ml of ice cold 2 N NaOH, which contains 80 ml of a solution of potassium bisulfite in water (conc. = 39 %). The organic phase is separated, dried, filtered, reduced and the crude product worked up as usual. The purity of the final product of this last step is 99.8 % (by GC).

This compound (AIK-5-F0) has a phase transition of K 79°C, a Δn of 0.068, a Δε of -15.1 and a high ε_{⊥}.

### Compound examples

Exemplary compounds having a high dielectric constant perpendicular to the director (ε_{⊥}) and a high average dielectric constant (εₐᵥ.) are exemplified in the following compound examples. The transition temperatures have been determined for the pure compounds. All other respective values, have been extrapolated for a respective mixture of the compound in the host mixture ZLI-4792, unless explicitly stated otherwise.

### Compound example I.

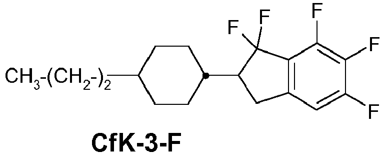

This compound (CfK-3-F) has a phase transition of K 72°C I, a Δn of 0.072, a Δε of -2.1 and a high ε_{⊥} of 12.2.

### Compound examples A to Z

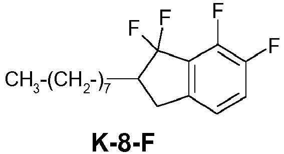

This compound, the compound of synthesis example 1 (K-8-F), has a phase transition of K 17°C I, a Δε of -3.2 and a high ε_{⊥} of 14.2.

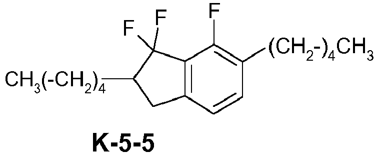

This compound (K-5-5), has a phase transition of T_{g} -86°C K -14°C I, a Δε of -3.8 and a high ε_{⊥} of 14.2.

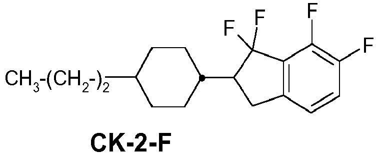

This compound (CK-2-F) has a phase transition of K 98°C I, a Δn of 0.075, a Δε of -7.9 and a very high ε_{⊥}.

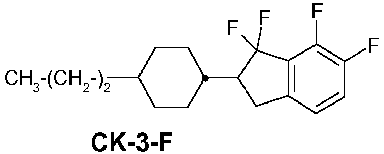

This compound (CK-3-F) has a phase transition of K 85°C I, a Δn of 0.075, a Δε of -8.4 and a very high ε_{⊥} of 16.2.

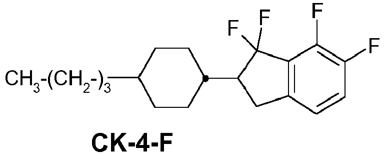

This compound (CK-4-F) has a phase transition of K 89°C I, a Δn of 0.61, a Δε of -7.4 and a high ε_{⊥}.

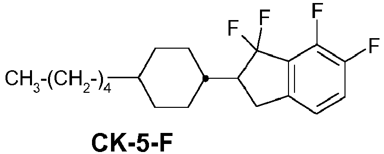

This compound (CK-5-F) has a phase transition of K 74°C N (63.7°C) I, a Δn of 0.070, a Δε of -7.8 and a high ε_{⊥} of 14.8.

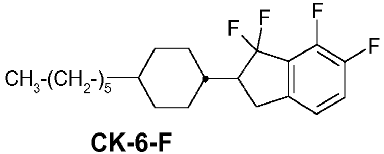

This compound (CK-6-F) has a phase transition of K 89°C N (62.3°C) I, a Δn of 0.071, a Δε of -7.4 and a high ε_{⊥}.

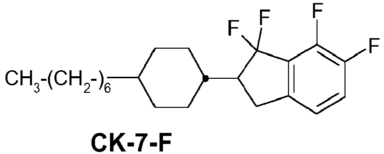

This compound (CK-7-F) has a phase transition of K 78°C N (68.2°C) I, a Δn of 0.063, a Δε of -7.3 and a high ε_{⊥}.

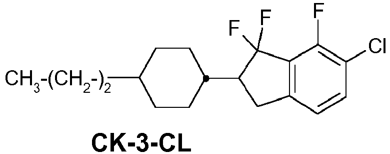

This compound (CK-3-CL) has a phase transition of K 99°C I, a Δn of 0.100, a Δε of -7.7 and a very high ε_{⊥}.

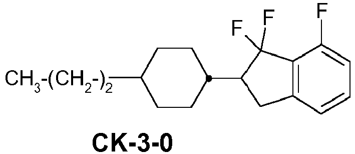

This compound (CK-3-0) has a phase transition of K 100°C I, a Δn of 0.068, a Δε of -6.4 and a very high ε_{⊥}.

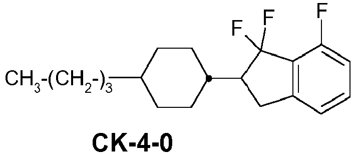

This compound (CK-4-0) has a phase transition of K 59°C I, a Δn of 0.62, a Δε of -6.3 and a high ε_{⊥}.

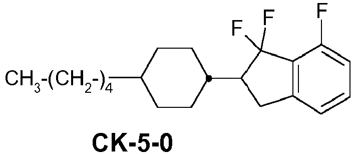

This compound (CK-5-0) has a phase transition of K 72°C, a Δn of 0.066, a Δε of -6.5 and a high ε_{⊥}.

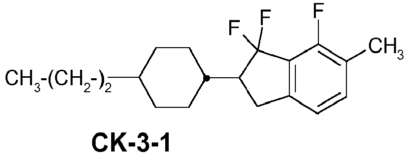

This compound (CK-3-1) has a phase transition of K 102°C I, a Δn of 0.086, a Δε of -6.8 and a very high ε_{⊥}.

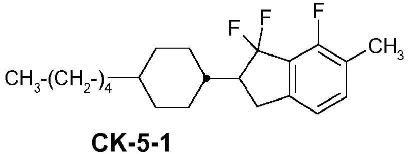

This compound (CK-5-1) has a phase transition of K 88°C N (61.7°C) I, a Δn of 0.089, a Δε of -6.18 and a high ε_{⊥}.

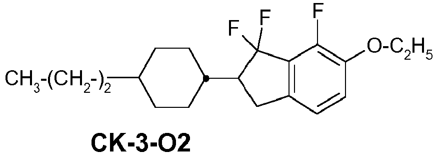

This compound (CK-3-O2) has a phase transition of K 104°C I, a Δn of 0.099, a Δε of -10.6 and a very high ε_{⊥}.

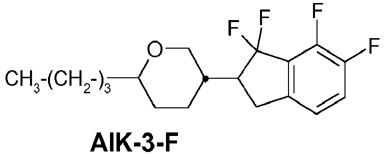

This compound (AIK-3-F) has a suitable phase transition, a moderate Δn, a negative Δε and a high ε_{⊥}.

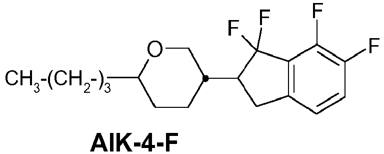

This compound (AIK-4-F) has a phase transition of K 70°C I, a Δn of 0.60, a Δε of -15.1 and a high ε_{⊥}.

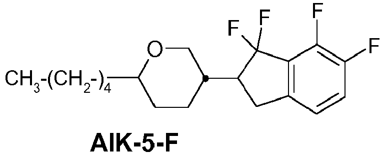

This compound, the compound of synthesis example 2 (AlK-5-F0), has a phase transition of K 79°C, a Δn of 0.068, a Δε of -15.1 and a high ε_{⊥}.

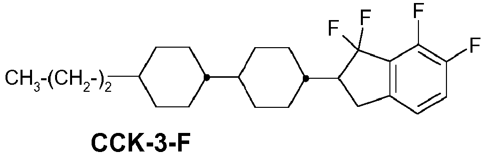

This compound (CCK-3-F) has a phase transition of K 130°C S_{B} 168°C N 203.7°C I, a Δn of 0.099, a Δε of -8.9 and a very high ε_{⊥}.

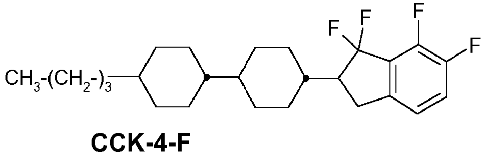

This compound (CCK-4-F) has a phase transition of K 110°C S_{B} 181°C N 200.2°C I, a Δn of 0.098, a Δε of -8.1 and a very high ε_{⊥}.

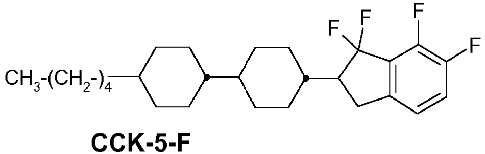

This compound (CCK-5-F) has a phase transition of K 110°C S_{B} 183°C N 203.2°C I, a Δn of 0.095, a Δε of -8.2 and a very high ε_{⊥}.

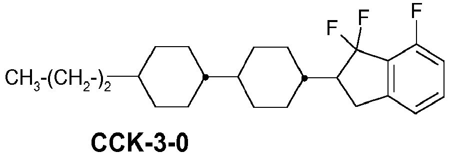

This compound (CCK-3-0) has a phase transition of K 171°C S_{B} (170°C) N (170.7)°C) I, a Δn of 0.099, a Δε of -8.9 and a very high ε_{⊥}.

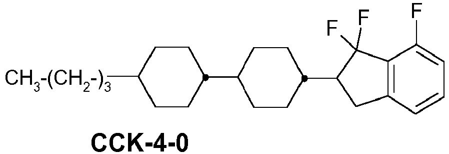

This compound (CCK-4-0) has a phase transition of K 112°C S_{B} 178°C I, a Δn of 0.100, a Δε of -6.3 and a very high ε_{⊥}.

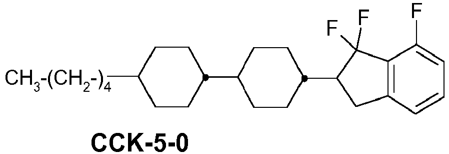

This compound (CCK-5-0) has a phase transition of K 108°C S_{B} 178°C I, a Δn of 0.098, a Δε of -6.0 and a very high ε_{⊥}.

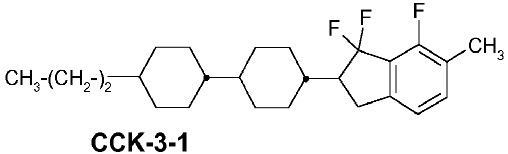

This compound (CCK-3-1) has a phase transition of K 110°C S_{A}(A) 168°C SA 171°C N 207.0°C I, a Δn of 0.106, a Δε of -6.1 and a very high ε_{⊥}.

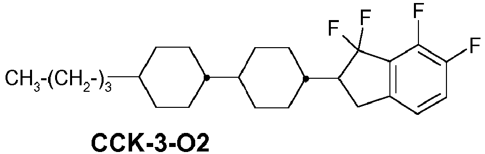

This compound (CCK-3-O2) has a phase transition of K 109°C S_{A}(A)156°C S_{A} 183°C N 220.7°C I, a Δn of 0.121, a Δε of -7.4 and a very high ε_{⊥}.

### Compound examples 1 to 28

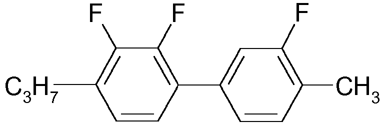

This compound (YG-3-1) has a phase transition of T_{g} -79°C K -3°C, a Δn of 0.088, a Δε of -3.4 and a high ε_{⊥} of 8.3.

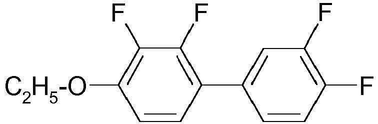

This compound (YG-20-F) has a melting point of 69°C, a Δn of 0.105, a Δε of 4.1 and a high ε_{⊥} of 13.5.

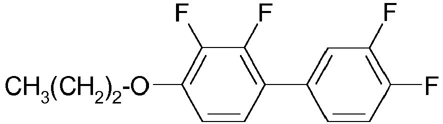

This compound (YG-30-F) has a melting point of 50°C, a Δn of 0.094, a Δε of 3.3 and a high ε_{⊥} of 13.0.

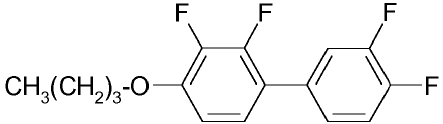

This compound (YG-40-F) has a melting point of 37°C, a Δn of 0.094, a Δε of 2.4 and a high ε_{⊥} of 12.5.

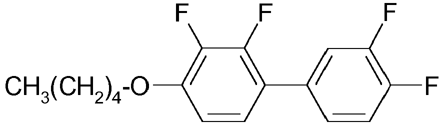

This compound (YG-50-F) has a melting point of 29°C, a Δn of 0.089, a Δε of 1.9 and a high ε_{⊥} of 12.1.

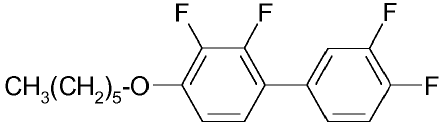

This compound (YG-60-F) has a melting point of 25°C, a Δn of 0.089, a Δε of 1.4 and a high ε_{⊥} of 11.6.

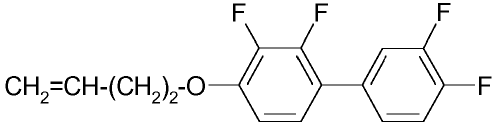

This compound (YG-V2O-F) has a melting point of 51°C, a Δn of 0.079, a Δε of 2.7 and a high ε_{⊥} of 12.0.

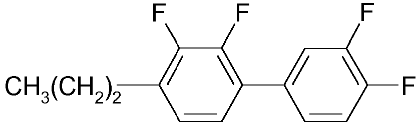

This compound (YG-3-F) has a phase transition of T_{g} -82°C K -5°C, a Δn of 0.075, a Δε of 2.6 and a high ε_{⊥} of 9.5. 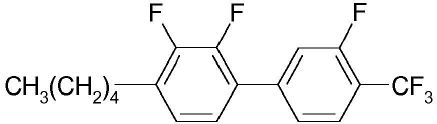 This compound (YG-5-T) has a glass transition temperature (T_{g}) of -79°C, a Δn of 0.060, a Δε of 8.3 and a high ε_{⊥} of 9.3.

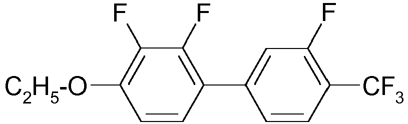

This compound (YG-20-T) has a melting point of 73°C, a Δn of 0.099, a Δε of 11.1 and a high ε_{⊥} of 13.6. 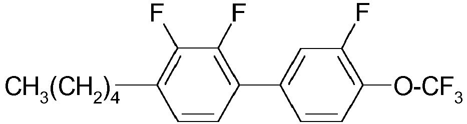 This compound (YG-5-OT) has a glass transition temperature (T_{g}) of -86°C, a Δn of 0.068, a Δε of 5.3 and a high ε_{⊥} of 8.3.

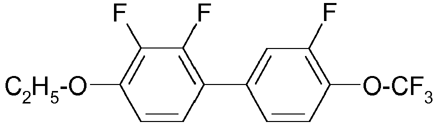

This compound (YG-2O-OT) has a melting point of 48°C, a Δn of 0.107, a Δε of 6.0 and a high ε_{⊥} of 12.3.

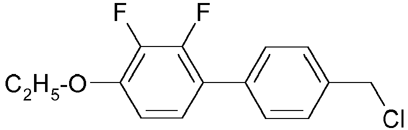

This compound (YP-2O-1Cl) has a melting point of 87°C, a Δn of 0.141, a Δε of -1.8 and a high ε_{⊥} of 12.7.

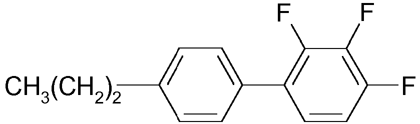

This compound (PY-3-F) has a melting point of 7°C, a Δn of 0.083, a Δε of 2.7 and a relatively high ε_{⊥} of 8.0.

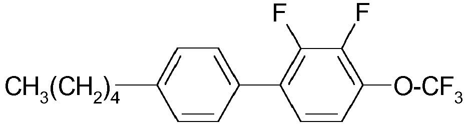

This compound (PY-5-OT) has a melting point of -21°C, a Δn of 0.082, a Δε of 3.4 and a relatively high ε_{⊥} of 7.1.

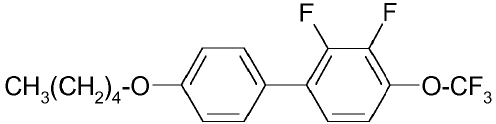

This compound (PY-5O-OT) has a phase sequence of K 39°C S_{A} (22°C) I, (i.e. a melting point of 39°C), a Δn of 0.108, a Δε of 5.5 and a relatively high ε_{⊥} of 7.3.

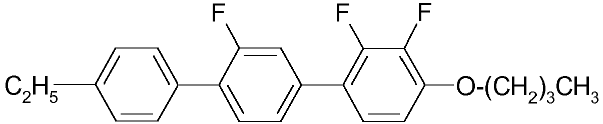

This compound (PGIY-2-O4) has a phase sequence of K 85°C N 122.2°C, (i.e. a melting point of 85°C), a Δn of 0.228, a Δε of 2.0 and a relatively high ε_{⊥} of 6.1.

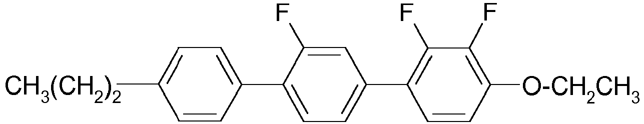

This compound (PGIY-3-O2) has a phase sequence of K 106°C N 153°C I, (i.e. a melting point of 106°C), a Δn of 0.248, a Δε of -1.4 and a high ε_{⊥} of 9.9.

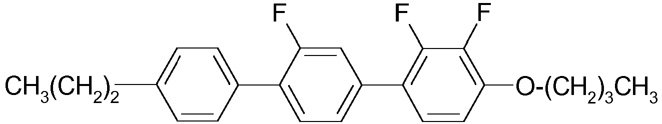

This compound (PGIY-3-O4) has a phase sequence of K 74°C N 136°C I, (i.e. a melting point of 74°C), a Δn of 0.230, a Δε of -1.5 and a high ε_{⊥} of 9.4.

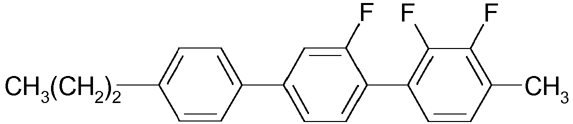

This compound (PGY-3-1) has a phase sequence of K 75°C N 84.2°C, (i.e. a melting point of 75°C), a Δn of 0.234, a Δε of 1.7 and a relatively high ε_{⊥} of 6.8.

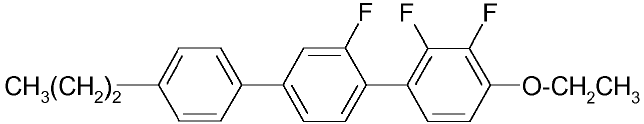

This compound (PGY-3-O2) has a phase sequence of K 107°C N 138.7°C, (i.e. a melting point of 107°C), a Δn of 0.249, a Δε of -2.5 and a relatively high ε_{⊥} of 10.0.

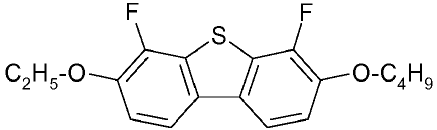

This compound (B(S)-2O-O4) has a melting point of 79°C, a Δn of 0.213, a Δε of -4.0 and a high ε_{⊥} of 17.1.

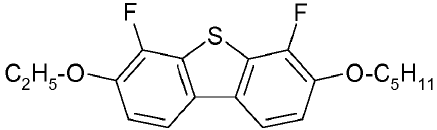

This compound (B(S)-2O-O5) has a melting point of 77°C, a Δn of 0.196, a Δε of -4.9 and a high ε_{⊥} of 16.7.

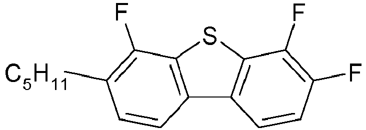

This compound (B(S)-5-F) has a melting point of 53°C, a Δn of 0.129, a Δε of +0.74 and a high ε_{⊥} of 10.3.

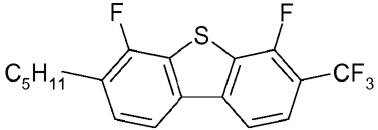

This compound (B(S)-5-T) has a melting point of 65°C, a Δn of 0.139, a Δε of 6.8 and a high ε_{⊥} of 10.7.

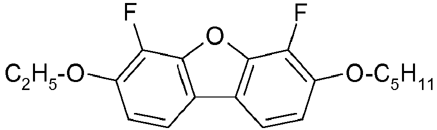

This compound (B-2O-O5) has a melting point of 57°C, a Δn of 0.181, a Δε of -6.1 and a high ε_{⊥} of 18.8.

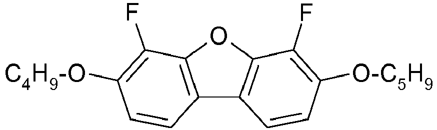

This compound (B-4O-O5) has a melting point of 76°C and a Δn of 0.181.

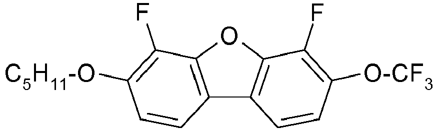

This compound (B-5O-OT) has a melting point of 68°C, a Δn of 0.136, a Δε of 2.3 and a high ε_{⊥} of 15.7.

### Mixture Examples

In the following are exemplary mixtures disclosed.

### Comparative Example 2

The following mixture (M-1) is prepared and investigated.

| Mixture M-1 | | | | | | |
|---|---|---|---|---|---|---|
| Composition | | | Physical properties | | | |
| Compound | | Concentration | T(N, I) | = | 78.5 | °C |
| No. | Abbreviation | /% by weight | nₑ(20°C, 589 nm) | = | 1.5828 | |
| 1 | CK-3-F | 3.0 | Δn(20°C, 589 nm) | = | 0.1016 | |
| 2 | CK-4-F | 3.0 | ε_{∥}(20°, 1 kHz) | = | 11.1 | |
| 3 | CK-5-F | 3.0 | ε_{⊥}(20°, 1 kHz) | = | 5.1 | |
| 4 | CCY-3-F | 5.0 | Δε(20°, 1 kHz) | = | 6.0 | |
| 5 | CLY-2-1 | 7.0 | εₐᵥ.(20°, 1 kHz) | = | 7.1 | |
| 6 | CLY-3-1 | 7.0 | γ₁(20°C) | = | 112 | mPa·s |
| 7 | PYP-2-3 | 3.0 | k₁₁(20°C) | = | 13.1 | pN |
| 8 | CC-3-V | 32.0 | k₂₂(20°C) | = | 6.6 | pN |
| 9 | CC-3-V1 | 6.0 | k₃₃(20°C) | = | 16.1 | pN |
| 10 | CCP-V-1 | 7.0 | V₀(20°C) | = | 1.56 | V |
| 11 | CGG-3-F | 3.0 | | | | |
| 12 | GUQGG-3-T | 5.0 | | | | |
| 13 | GUQGG-4-T | 8.0 | | | | |
| 141 | GUQGG-5-T | 8.0 | | | | |
| ∑ | | 100.0 | | | | |

This mixture, mixture M-1, has a dielectric ratio (ε_{⊥}/Δε) of 0.85, a ratio of (γ₁/k₁₁) of 9.54 mPa·s / pN and is characterized by a very good transmission in an FFS display and shows a very short response time.

### Comparative Example 1

The following mixture (C-1) is prepared and investigated.

| Mixture C-1 | | | | | | |
|---|---|---|---|---|---|---|
| Composition | | | Physical properties | | | |
| Compound | | Concentration | T(N, I) | = | 78.5 | °C |
| No. | Abbreviation | /% by weight | nₑ(20°C, 589 nm) | = | 1.5875 | |
| 1 | CC-3-V | 31.5 | Δn(20°C, 589 nm) | = | 0.1000 | |
| 2 | CC-3-V1 | 6.5 | ε_{\|\|}(20°, 1 kHz) | = | 8.9 | |
| 3 | PP-1-2V1 | 5.0 | ε_{⊥}(20°, 1 kHz) | = | 3.0 | |
| 4 | CCP-V-1 | 12.0 | Δε(20°, 1 kHz) | = | 6.0 | |
| 5 | CCP-V2-1 | 12.0 | ε_{av.}(20°, 1 kHz) | = | 5.0 | |
| 6 | CCP-3-3 | 6.0 | γ₁(20°C) | = | 63 | mPa·s |
| 7 | CPGP-5-2 | 2.0 | k₁₁(20°C) | = | 13.3 | pN |
| 8 | PUQU-3-F | 20.0 | k₂₂(20°C) | = | 6.7 | pN |
| 9 | APUQU-2-F | 5.0 | k₃₃(20°C) | = | 15.2 | pN |
| ∑ | | 100.0 | V₀(20°C) | = | 1.58 | V |

This mixture, mixture C-1, has a dielectric ratio (ε_{⊥}/Δε) of 0.50, a ratio of (γ₁/k₁₁) of 4.74 mPa·s / pN and is characterized by an just acceptable transmission in an FFS display and shows a very short response time.

### Comparative Example 3

The following mixture (C-2) is prepared and investigated.

| Mixture C-2 | | | | | | |
|---|---|---|---|---|---|---|
| Composition | | | Physical properties | | | |
| Compound | | Concentration | T(N, I) | = | 79.5 | °C |
| No. | Abbreviation | /% by weight | nₑ(20°C, 589 nm) | = | 1.5874 | |
| 1 | CY-3-O2 | 9.0 | Δn(20°C, 589 nm) | = | 0.1051 | |
| 2 | CPY-3-O2 | 3.0 | ε_{\|\|}(20°, 1 kHz) | = | 8.5 | |
| 3 | PYP-2-3 | 3.0 | ε_{⊥}(20°, 1 kHz) | = | 3.9 | |
| 4 | CC-3-V | 42.0 | Δε(20°, 1 kHz) | = | 4.6 | |
| 5 | CC-3-V1 | 5.5 | εₐᵥ.(20°, 1 kHz) | = | 5.4 | |
| 6 | CCP-V-1 | 4.0 | γ₁(20°C) | = | 65 | mPa·s |
| 7 | PGP-2-2V | 6.5 | k₁₁(20°C) | = | 12.9 | pN |
| 8 | CCP-3-OT | 7.0 | k₂₂(20°C) | = | 6.6 | pN |
| 9 | CPGU-3-OT | 5.0 | k₃₃(20°C) | = | 14.3 | pN |
| 10 | PGUQU-3-F | 4.0 | V₀(20°C) | = | 1.77 | V |
| 11 | APUQU-2-F | 3.0 | | | | |
| 12 | APUQU-3-F | 8.0 | | | | |
| ∑ | | 100.0 | | | | |

This comparative mixture, mixture C-2, has a dielectric ratio (ε_{⊥}/Δε) of 0.85, a ratio of (γ₁/ k₁₁) of 5.04 mPa·s / pN and is characterized by a moderately good transmission in an FFS display but shows a significantly longer response time compared to comparative example 1.

### Comparative Example 4

The following mixture (M-2) is prepared and investigated.

| Mixture M-2 | | | | | | |
|---|---|---|---|---|---|---|
| Composition | | | Physical properties | | | |
| Compound | | Concentration | T(N, I) | = | 75.5 | °C |
| No. | Abbreviation | /% by weight | nₑ(20°C, 589 nm) | = | 1.5910 | |
| 1 | CK-3-F | 6.0 | Δn(20°C, 589 nm) | = | 0.1062 | |
| 2 | CK-4-F | 5.0 | ε_{\|\|}(20°, 1 kHz) | = | 13.0 | |
| 3 | CK-5-F | 7.0 | ε_{⊥}(20°, 1 kHz) | = | 6.6 | |
| 4 | CCY-2-1 | 8.0 | Δε(20°, 1 kHz) | = | 6.4 | |
| 5 | CCY-3-1 | 8.0 | εₐᵥ.(20°, 1 kHz) | = | 8.7 | |
| 6 | PYP-2-3 | 6.0 | γ₁(20°C) | = | 113 | mPa·s |
| 7 | CC-3-V | 17.0 | k₁₁(20°C) | = | 11.8 | pN |
| 8 | CCP-V-1 | 17.0 | k₂₂(20°C) | = | t.b.d. | pN |
| 9 | PUQU-3-F | 18.0 | k₃₃(20°C) | = | 13.7 | pN |
| 10 | DGUQU-4-F | 8.0 | V₀(20°C) | = | 1.44 | V |
| ∑ | | 100.0 | | | | |

This mixture, mixture M-2, has a dielectric ratio (ε_{⊥}/Δε) of 1.03, a ratio of (γ₁/k₁₁) of 9.58mPa·s / pN and is characterized by a good transmission in an FFS display and shows a short response time considering its low threshold voltage.

### Comparative Example 5

The following mixture (M-3) is prepared and investigated.

| Mixture M-3 | | | | | | |
|---|---|---|---|---|---|---|
| Composition | | | Physical properties | | | |
| Compound | | Concentration | T(N, I) | = | 79.0 | °C |
| No. | Abbreviation | /% by weight | nₑ(20°C, 589 nm) | = | 1.5816 | |
| 1 | CK-4-F | 6.0 | Δn(20°C, 589 nm) | = | 0.1058 | |
| 2 | CK-5-F | 10.5 | ε_{\|\|}(20°, 1 kHz) | = | 19.6 | |
| 3 | CY-3-O4 | 20.0 | ε_{⊥}(20°, 1 kHz) | = | 12.3 | |
| 4 | CCY-3-O1 | 8.0 | Δε(20°, 1 kHz) | = | 7.2 | |
| 5 | CCY-3-O2 | 12.0 | εₐᵥ.(20°, 1 kHz) | = | 14.7 | |
| 6 | CCY-3-O3 | 10.0 | γ₁(20°C) | = | 325 | mPa·s |
| 7 | PUQU-3-F | 12.0 | k₁₁(20°C) | = | 11.9 | pN |
| 8 | CDUQU-3-F | 6.0 | k₂₂(20°C) | = | t.b.d. | pN |
| 9 | APUQU-3-F | 7.5 | k₃₃(20°C) | = | 14.9 | pN |
| 10 | DGUQU-4-F | 8.0 | V₀(20°C) | = | 1.35 | V |
| ∑ | | 100.0 | | | | |

This mixture, mixture M-3, has a dielectric ratio (ε_{⊥}/Δε) of 1.71, a ratio of (γ₁/k₁₁) of 27.3 mPa·s / pN and is characterized by a good transmission in an FFS display and shows a short response time considering its low threshold voltage.

### Comparative Example 6

The following mixture (M-4) is prepared and investigated.

| Mixture M-4 | | | | | | |
|---|---|---|---|---|---|---|
| Composition | | | Physical properties | | | |
| Compound | | Concentration | T(N, I) | = | 79.0 | °C |
| No. | Abbreviation | /% by weight | nₑ(20°C, 589 nm) | = | 1.5838 | |
| 1 | CK-3-F | 6.0 | Δn(20°C, 589 nm) | = | 0.1060 | |
| 2 | CY-3-O2 | 8.0 | ε_{\|\|}(20°, 1 kHz) | = | 17.3 | |
| 3 | CY-3-O4 | 15.0 | ε_{⊥}(20°, 1 kHz) | = | 10.9 | |
| 4 | CCY-2-1 | 12.5 | Δε(20°, 1 kHz) | = | 6.4 | |
| 5 | CCY-3-O1 | 7.0 | εₐᵥ.(20°, 1 kHz) | = | 13.0 | |
| 6 | CCY-3-O2 | 12.0 | γ₁(20°C) | = | 296 | mPa·s |
| 7 | CCY-3-O3 | 8.0 | k₁₁(20°C) | = | 11.9 | pN |
| 8 | PUQU-3-F | 12.0 | k₂₂(20°C) | = | t.b.d. | pN |
| 9 | CDUQU-3-F | 6.0 | k₃₃(20°C) | = | 15.3 | pN |
| 10 | APUQU-3-F | 6.5 | V₀(20°C) | = | 1.43 | V |
| 11 | DGUQU-4-F | 7.0 | | | | |
| ∑ | | 100.0 | | | | |

This mixture, mixture M-4, has a dielectric ratio (ε_{⊥}/Δε) of 1.70, a ratio of (γ₁/k₁₁) of 24.9 mPa·s / pN and is characterized by a good transmission in an FFS display and shows a short response time.

### Comparative Example 7

The following mixture (M-5) is prepared and investigated.

| Mixture M-5 | | | | | | |
|---|---|---|---|---|---|---|
| Composition | | | Physical properties | | | |
| Compound | | Concentration | T(N, I) | = | 78.0 | °C |
| No. | Abbreviation | /% by weight | nₑ(20°C, 589 nm) | = | 1.5927 | |
| 1 | CK-3-F | 6.0 | Δn(20°C, 589 nm) | = | 0.1147 | |
| 2 | CK-5-F | 6.0 | ε_{\|\|}(20°, 1 kHz) | = | 20.5 | |
| 3 | YG-20-F | 5.0 | ε_{⊥}(20°, 1 kHz) | = | 14.0 | |
| 4 | B-2O-O5 | 5.5 | Δε(20°, 1 kHz) | = | 6.5 | |
| 5 | CY-3-O4 | 14.0 | εₐᵥ.(20°, 1 kHz) | = | 16.2 | |
| 6 | CCY-3-O1 | 8.0 | γ₁(20°C) | = | 342 | mPa·s |
| 7 | CCY-3-O2 | 12.0 | k₁₁(20°C) | = | 12.1 | pN |
| 8 | CCY-3-O4 | 12.0 | k₂₂(20°C) | = | 6.5 | pN |
| 9 | PUQU-3-F | 11.0 | k₃₃(20°C) | = | 14.0 | pN |
| 10 | CDUQU-3-F | 6.5 | V₀(20°C) | = | 1.42 | V |
| 11 | APUQU-3-F | 6.0 | | | | |
| 12 | DGUQU-4-F | 8.0 | | | | |
| ∑ | | 100.0 | | | | |

This mixture, mixture M-5, has a dielectric ratio (ε_{⊥}/Δε) of 2.0, a ratio of (γ₁/k₁₁) of 28.3 mPa·s / pN and is characterized by a good transmission in an FFS display and shows a short response time.

### Comparative Example 8

The following mixture (M-6) is prepared and investigated.

| Mixture M-6 | | | | | | |
|---|---|---|---|---|---|---|
| Composition | | | Physical properties | | | |
| Compound | | Concentration | T(N, I) | = | 77.0 | °C |
| No. | Abbreviation | /% by weight | nₑ(20°C, 589 nm) | = | 1.5935 | |
| 1 | CK-3-F | 6.0 | Δn(20°C, 589 nm) | = | 0.1161 | |
| 2 | CK-5-F | 6.0 | ε_{\|\|}(20°, 1 kHz) | = | 19.8 | |
| 3 | YG-20-F | 2.0 | ε_{⊥}(20°, 1 kHz) | = | 14.6 | |
| 4 | B-2O-O5 | 6.0 | Δε(20°, 1 kHz) | = | 5.2 | |
| 5 | B-5O-OT | 4.0 | εₐᵥ.(20°, 1 kHz) | = | 16.3 | |
| 6 | CY-3-O4 | 14.0 | γ₁(20°C) | = | 353 | mPa·s |
| 7 | CCY-3-O1 | 8.0 | k₁₁(20°C) | = | 12.5 | pN |
| 8 | CCY-3-O2 | 12.0 | k₂₂(20°C) | = | t.b.d. | pN |
| 9 | CCY-3-O3 | 12.0 | k₃₃(20°C) | = | 14.5 | pN |
| 10 | PUQU-3-F | 11.0 | V₀(20°C) | = | 1.63 | V |
| 11 | CDUQU-3-F | 6.0 | | | | |
| 12 | APUQU-3-F | 6.0 | | | | |
| 13 | DGUQU-4-F | 7.0 | | | | |
| ∑ | | 100.0 | | | | |

This mixture, mixture M-6, has a dielectric ratio (ε_{⊥}/Δε) of 2.81, a ratio of (γ₁/k₁₁) of 28.2 mPa·s / pN and is characterized by a good transmission in an FFS display and shows a short response time.

### Comparative Example 9

The following mixture (M-7) is prepared and investigated.

| Mixture M-7 | | | | | | |
|---|---|---|---|---|---|---|
| Composition | | | Physical properties | | | |
| Compound | | Concentration | T(N, I) | = | 77.5 | °C |
| No. | Abbreviation | /% by weight | nₑ(20°C, 589 nm) | = | 1.5992 | |
| 1 | CK-3-F | 4.0 | Δn(20°C, 589 nm) | = | 0.1134 | |
| 2 | CK-4-F | 4.0 | ε_{\|\|}(20°, 1 kHz) | = | 13.3 | |
| 3 | CK-5-F | 4.0 | ε_{⊥}(20°, 1 kHz) | = | 6.1 | |
| 4 | YG-2O-F | 5.0 | Δε(20°, 1 kHz) | = | 7.3 | |
| 5 | PYP-2-3 | 11.0 | εₐᵥ.(20°, 1 kHz) | = | 8.5 | |
| 6 | CC-3-V | 25.0 | γ₁(20°C) | = | 99 | mPa·s |
| 7 | CCP-V-1 | 10.0 | k₁₁(20°C) | = | 11.7 | pN |
| 8 | CCP-3-OT | 7.0 | k₂₂(20°C) | = | t.b.d. | pN |
| 9 | CGG-3-F | 10.0 | k₃₃(20°C) | = | 13.0 | pN |
| 10 | CDUQU-3-F | 4.0 | V₀(20°C) | = | 1.34 | V |
| 11 | APUQU-3-F | 6.0 | | | | |
| 12 | DGUQU-4-F | 6.0 | | | | |
| 13 | PGUQU-4-F | 4.0 | | | | |
| ∑ | | 100.0 | | | | |

This mixture, mixture M-7, has a dielectric ratio (ε_{⊥}/Δε) of 0.84, a ratio of (γ₁/k₁₁) of 8.46 mPa·s / pN and is characterized by a good transmission in an FFS display and shows a short response time.

### Comparative Example 10

The following mixture (M-8) is prepared and investigated.

| Mixture M-8 | | | | | | |
|---|---|---|---|---|---|---|
| Composition | | | Physical properties | | | |
| Compound | | Concentration | T(N, I) | = | 78.0 | °C |
| No. | Abbreviation | /% by weight | nₑ(20°C, 589 nm) | = | 1.6074 | |
| 1 | K-8-F | 10.0 | Δn(20°C, 589 nm) | = | 0.1172 | |
| 2 | YG-20-F | 5.0 | ε_{\|\|}(20°, 1 kHz) | = | 13.2 | |
| 3 | CCY-3-O2 | 6.0 | ε_{⊥}(20°, 1 kHz) | = | 6.2 | |
| 4 | PYP-2-3 | 8.0 | Δε(20°, 1 kHz) | = | 7.0 | |
| 5 | PYP-2-4 | 6.0 | εₐᵥ.(20°, 1 kHz) | = | 8.5 | |
| 6 | CC-3-V | 22.0 | γ₁(20°C) | = | 108 | mPa·s |
| 7 | CCP-V-1 | 20.0 | k₁₁(20°C) | = | 11.5 | pN |
| 8 | DPGU-4-F | 6.0 | k₂₂(20°C) | = | t.b.d. | pN |
| 9 | APUQU-3-F | 9.0 | k₃₃(20°C) | = | 12.4 | pN |
| 10 | DGUQU-4-F | 8.0 | V₀(20°C) | = | 1.35 | V |
| ∑ | | 100.0 | | | | |

This mixture, mixture M-8, has a dielectric ratio (ε_{⊥}/Δε) of 0.89, a ratio of (γ₁/k₁₁) of 9.39 mPa·s / pN and is characterized by a good transmission in an FFS display and shows a short response time.

### Comparative Example 11

The following mixture (M-9-19) is prepared and investigated.

| Mixture M-9 | | | | | | |
|---|---|---|---|---|---|---|
| Composition | | | Physical properties | | | |
| Compound | | Concentration | T(N, I) | = | 79.0 | °C |
| No. | Abbreviation | /% by weight | nₑ(20°C, 589 nm) | = | 1.5911 | |
| 1 | K-8-F | 8.0 | Δn(20°C, 589 nm) | = | 0.1062 | |
| 2 | CC-3-V | 34.0 | ε_{\|\|}(20°, 1 kHz) | = | 8.7 | |
| 3 | CC-3-V1 | 5.0 | ε_{⊥}(20°, 1 kHz) | = | 3.7 | |
| 4 | CCP-V-1 | 18.0 | Δε(20°, 1 kHz) | = | 4.9 | |
| 5 | PGP-2-2V | 10.0 | εₐᵥ.(20°, 1 kHz) | = | 5.4 | |
| 6 | CCP-3-OT | 8.0 | γ₁(20°C) | = | 64 | mPa·s |
| 7 | APUQU-3-F | 6.0 | k₁₁(20°C) | = | 12.3 | pN |
| 8 | PGUQU-3-F | 4.0 | k₂₂(20°C) | = | t.b.d. | pN |
| 9 | PGUQU-4-F | 7.0 | k₃₃(20°C) | = | 14.1 | pN |
| ∑ | | 100.0 | V₀(20°C) | = | 1.67 | V |

This mixture, mixture M-9, has a good dielectric ratio (ε_{⊥}/Δε) of 0.76, a good ratio of (γ₁/k₁₁) of 5.20 and is characterized by a good transmission in an FFS display and shows a short response time.

### Comparative Example 12

The following mixture (M-10) is prepared and investigated.

| Mixture M-10 | | | | | | |
|---|---|---|---|---|---|---|
| Composition | | | Physical properties | | | |
| Compound | | Concentration | T(N, I) | = | 80.0 | °C |
| No. | Abbreviation | /% by weight | nₑ(20°C, 589 nm) | = | 1.5930 | |
| 1 | CK-3-F | 4.0 | Δn(20°C, 589 nm) | = | 0.1090 | |
| 2 | CK-4-F | 4.0 | ε_{\|\|}(20°, 1 kHz) | = | 12.7 | |
| 3 | B-5O-OT | 8.0 | ε_{⊥}(20°, 1 kHz) | = | 6.6 | |
| 4 | YG-2O-F | 7.0 | Δε(20°, 1 kHz) | = | 6.1 | |
| 5 | CC-3-V | 25.0 | εₐᵥ.(20°, 1 kHz) | = | 8.6 | |
| 6 | CCP-V-1 | 19.0 | γ₁(20°C) | = | t.b.d. | mPa·s |
| 7 | PGP-2-3 | 9.0 | k₁₁(20°C) | = | t.b.d. | pN |
| 8 | CCP-3-OT | 6.0 | k₂₂(20°C) | = | t.b.d. | pN |
| 9 | CDUQU-3-F | 6.0 | k₃₃(20°C) | = | t.b.d. | pN |
| 10 | APUQU-2-F | 6.0 | V₀(20°C) | = | t.b.d. | V |
| 11 | DGUQU-4-F | 6.0 | | | | |
| ∑ | | 100.0 | | | | |

This mixture, mixture M-10, has a good dielectric ratio (ε_{⊥}/Δε) of 1.08, a good ratio of (γ₁/k₁₁) and is characterized by a good transmission in an FFS display and shows a short response time.

### Example 1

The following mixture (M-11) is prepared and investigated.

| Mixture M-11 | | | | | | |
|---|---|---|---|---|---|---|
| Composition | | | Physical properties | | | |
| Compound | | Concentration | T(N, I) | = | 79.5 | °C |
| No. | Abbreviation | /% by weight | nₑ(20°C, 589 nm) | = | 1.5936 | |
| 1 | CfK-3-F | 10.0 | Δn(20°C, 589 nm) | = | 0.1176 | |
| 2 | CK-3-F | 6.0 | ε_{\|\|}(20°, 1 kHz) | = | 20.4 | |
| 3 | CK-5-F | 6.0 | ε_{⊥}(20°, 1 kHz) | = | 16.7 | |
| 4 | B-2O-O5 | 5.0 | Δε(20°, 1 kHz) | = | 3.7 | |
| 5 | B-5O-OT | 8.0 | εₐᵥ.(20°, 1 kHz) | = | 17.9 | |
| 6 | YG-20-F | 4.0 | γ₁(20°C) | = | 432 | mPa·s |
| 7 | CY-3-O4 | 11.0 | k₁₁(20°C) | = | 13.0 | pN |
| 8 | CCY-3-O1 | 10.0 | k₂₂(20°C) | = | t.b.d. | pN |
| 9 | CCY-3-O2 | 9.0 | k₃₃(20°C) | = | 14.2 | pN |
| 10 | CCY-3-O3 | 7.0 | V₀(20°C) | = | 2.03 | V |
| 11 | DPGU-4-F | 5.0 | | | | |
| 12 | CDUQU-3-F | 5.0 | | | | |
| 13 | APUQU-3-F | 6.0 | | | | |
| 14 | DGUQU-4-F | 8.0 | | | | |
| ∑ | | 100.0 | | | | |

This mixture, mixture M-11, has a dielectric ratio (ε_{⊥}/Δε) of 4.5 and is characterized by a very high transmission in an FFS display.

### Example 2

The following mixture (M-12) is prepared and investigated.

| Mixture M-12 | | | | | | |
|---|---|---|---|---|---|---|
| Composition | | | Physical properties | | | |
| Compound | | Concentration | T(N, I) | = | 80.0 | °C |
| No. | Abbreviation | /% by weight | nₑ(20°C, 589 nm) | = | 1.5981 | |
| 1 | CfK-3-F | 15.0 | Δn(20°C, 589 nm) | = | 0.1154 | |
| 2 | YG-20-F | 3.0 | ε_{\|\|}(20°, 1 kHz) | = | 13.3 | |
| 3 | B-5O-OT | 10.0 | ε_{⊥}(20°, 1 kHz) | = | 6.6 | |
| 4 | CC-3-V | 25.5 | Δε(20°, 1 kHz) | = | 6.8 | |
| 5 | CCP-V-1 | 15.0 | εₐᵥ.(20°, 1 kHz) | = | 8.9 | |
| 6 | PGP-2-2V | 8.0 | γ₁(20°C) | = | 91 | mPa·s |
| 7 | CCP-3-OT | 5.0 | k₁₁(20°C) | = | 13.4 | pN |
| 8 | DPGU-4-F | 6.0 | k₂₂(20°C) | = | t.b.d. | pN |
| 9 | APUQU-3-F | 4.5 | k₃₃(20°C) | = | 13.5 | pN |
| 10 | DGUQU-4-F | 8.0 | V₀(20°C) | = | 1.48 | V |
| ∑ | | 100.0 | | | | |

This mixture, mixture M-12, has a dielectric ratio (ε_{⊥}/Δε) of 0.97, a ratio of (γ₁/k₁₁) of 6.79 mPa·s / pN and is characterized by a good transmission in an FFS display and shows a short response time.

### Example 3

The following mixture (M-13) is prepared and investigated.

| Mixture M-13 | | | | | | |
|---|---|---|---|---|---|---|
| Composition | | | Physical properties | | | |
| Compound | | Concentration | T(N, I) | = | 82.0 | °C |
| No. | Abbreviation | /% by weight | nₑ(20°C, 589 nm) | = | 1.5993 | |
| 1 | CfK-3-F | 10.0 | Δn(20°C, 589 nm) | = | 0.1149 | |
| 2 | YG-20-F | 5.0 | ε_{\|\|}(20°, 1 kHz) | = | 12.7 | |
| 3 | CCY-3-02 | 10.0 | ε_{⊥}(20°, 1 kHz) | = | 6.1 | |
| 4 | PYP-2-3 | 8.0 | Δε(20°, 1 kHz) | = | 6.6 | |
| 5 | PYP-2-4 | 6.0 | εₐᵥ.(20°, 1 kHz) | = | 8.3 | |
| 6 | CC-3-V | 34.5 | γ₁(20°C) | = | 100 | mPa·s |
| 7 | CCP-V-1 | 4.0 | k₁₁(20°C) | = | 12.8 | pN |
| 8 | DPGU-4-F | 6.0 | k₂₂(20°C) | = | t.b.d. | pN |
| 9 | APUQU-3-F | 8.5 | k₃₃(20°C) | = | 13.8 | pN |
| 10 | DGUQU-4-F | 8.0 | V₀(20°C) | = | 1.46 | V |
| ∑ | | 100.0 | | | | |

This mixture, mixture M-13, has a dielectric ratio (ε_{⊥}/Δε) of 0.92, a ratio of (γ₁/k₁₁) of 7.81 mPa·s / pN and is characterized by a good transmission in an FFS display and shows a short response time.

### Example 4

The following mixture (M-14) is prepared and investigated.

| Mixture M-14 | | | | | | |
|---|---|---|---|---|---|---|
| Composition | | | Physical properties | | | |
| Compound | | Concentration | T(N, I) | = | 80.5 | °C |
| No. | Abbreviation | /% by weight | nₑ(20°C, 589 nm) | = | 1.5991 | |
| 1 | CfK-3-F | 14.0 | Δn(20°C, 589 nm) | = | 0.1146 | |
| 2 | YG-20-F | 5.0 | ε_{\|\|}(20°, 1 kHz) | = | 13.1 | |
| 3 | CCY-3-02 | 6.0 | ε_{⊥}(20°, 1 kHz) | = | 6.0 | |
| 4 | PYP-2-3 | 10.0 | Δε(20°, 1 kHz) | = | 7.1 | |
| 5 | CC-3-V | 33.5 | εₐᵥ.(20°, 1 kHz) | = | 8.4 | |
| 6 | CCP-V-1 | 6.0 | γ₁(20°C) | = | 93 | mPa·s |
| 7 | PGP-2-2V | 3.0 | k₁₁(20°C) | = | 12.7 | pN |
| 8 | DPGU-4-F | 6.0 | k₂₂(20°C) | = | t.b.d. | pN |
| 9 | APUQU-3-F | 8.5 | k₃₃(20°C) | = | 13.4 | pN |
| 10 | DGUQU-4-F | 8.0 | V₀(20°C) | = | 1.41 | V |
| ∑ | | 100.0 | | | | |

This mixture, mixture M-14, has a dielectric ratio (ε_{⊥}/Δε) of 0.85, a ratio of (γ₁/k₁₁) of 7.32 mPa·s / pN and is characterized by a good transmission in an FFS display and shows a short response time.

### Example 5

The following mixture (M-15) is prepared and investigated.

| Mixture 15 | | | | | | |
|---|---|---|---|---|---|---|
| Composition | | | Physical properties | | | |
| Compound | | Concentration | T(N, I) | = | 80.0 | °C |
| No. | Abbreviation | /% by weight | nₑ(20°C, 589 nm) | = | 1.6010 | |
| 1 | CfK-3-F | 15.0 | Δn(20°C, 589 nm) | = | 0.1158 | |
| 2 | YG-20-F | 3.5 | ε_{\|\|}(20°, 1 kHz) | = | 12.9 | |
| 3 | B-5O-OT | 8.0 | ε_{⊥}(20°, 1 kHz) | = | 6.2 | |
| 4 | CC-3-V | 27.5 | Δε(20°, 1 kHz) | = | 6.6 | |
| 5 | CCP-V-1 | 18.0 | εₐᵥ.(20°, 1 kHz) | = | 8.4 | |
| 6 | PGP-2-2V | 9.0 | γ₁(20°C) | = | 92 | mPa·s |
| 7 | DPGU-4-F | 6.0 | k₁₁(20°C) | = | 13.0 | pN |
| 8 | APUQU-3-F | 5.0 | k₂₂(20°C) | = | t.b.d. | pN |
| 9 | DGUQU-4-F | 8.0 | k₃₃(20°C) | = | 13.4 | pN |
| ∑ | | 100.0 | V₀(20°C) | = | 1.48 | V |

This mixture, mixture M-15, has a good dielectric ratio (ε_{⊥}/Δε) of 0.94, a good ratio of (γ₁/k₁₁) of 7.08 and is characterized by a good transmission in an FFS display and shows a short response time.

### Example 6

The following mixture (M-16) is prepared and investigated.

| Mixture M-16 | | | | | | |
|---|---|---|---|---|---|---|
| Composition | | | Physical properties | | | |
| Compound | | Concentration | T(N, I) | = | 80.0 | °C |
| No. | Abbreviation | /% by weight | nₑ(20°C, 589 nm) | = | 1.5959 | |
| 1 | CfK-3-F | 17.0 | Δn(20°C, 589 nm) | = | 0.1128 | |
| 2 | YG-20-F | 5.0 | ε_{\|\|}(20°, 1 kHz) | = | 13.1 | |
| 3 | CCY-3-02 | 7.0 | ε_{⊥}(20°, 1 kHz) | = | 6.0 | |
| 4 | CC-3-V | 35.0 | Δε(20°, 1 kHz) | = | 7.2 | |
| 5 | CCP-V-1 | 4.0 | εₐᵥ.(20°, 1 kHz) | = | 8.4 | |
| 6 | PGP-2-2V | 10.5 | γ₁(20°C) | = | 89 | mPa·s |
| 7 | DPGU-4-F | 6.0 | k₁₁(20°C) | = | 12.4 | pN |
| 8 | APUQU-3-F | 2.5 | k₂₂(20°C) | = | t.b.d. | pN |
| 9 | DGUQU-4-F | 8.0 | k₃₃(20°C) | = | 13.3 | pN |
| 10 | PGUQU-4-F | 5.0 | V₀(20°C) | = | 1.39 | V |
| ∑ | | 100.0 | | | | |

This mixture, mixture M-16, has a good dielectric ratio (ε_{⊥}/Δε) of 0.83, a good ratio of (γ₁/k₁₁) of 7.18 and is characterized by a good transmission in an FFS display and shows a short response time.

### Example 7

The following mixture (M-17) is prepared and investigated.

| Mixture M-17 | | | | | | |
|---|---|---|---|---|---|---|
| Composition | | | Physical properties | | | |
| Compound | | Concentration | T(N, I) | = | 78.5 | °C |
| No. | Abbreviation | /% by weight | nₑ(20°C, 589 nm) | = | 1.5996 | |
| 1 | CfK-3-F | 15.0 | Δn(20°C, 589 nm) | = | 0.1150 | |
| 2 | B-3-F | 3.0 | ε_{\|\|}(20°, 1 kHz) | = | 13.5 | |
| 3 | B-5O-OT | 10.0 | ε_{⊥}(20°, 1 kHz) | = | 6.6 | |
| 4 | CC-3-V | 26.0 | Δε(20°, 1 kHz) | = | 6.9 | |
| 5 | CCP-V-1 | 19.0 | εₐᵥ.(20°, 1 kHz) | = | 8.9 | |
| 6 | PGP-2-2V | 7.0 | γ₁(20°C) | = | 93 | mPa·s |
| 7 | DPGU-4-F | 6.0 | k₁₁(20°C) | = | 12.9 | pN |
| 8 | APUQU-3-F | 6.0 | k₂₂(20°C) | = | t.b.d. | pN |
| 9 | DGUQU-4-F | 8.0 | k₃₃(20°C) | = | 13.1 | pN |
| ∑ | | 100.0 | V₀(20°C) | = | 1.40 | V |

This mixture, mixture M-17, has a good dielectric ratio (ε_{⊥}/Δε) of 0.91, a good ratio of (γ₁/k₁₁) of 6.67 and is characterized by a good transmission in an FFS display and shows a short response time.

### Example 8

The following mixture (M-18) is prepared and investigated.

| Mixture M-18 | | | | | | |
|---|---|---|---|---|---|---|
| Composition | | | Physical properties | | | |
| Compound | | Concentration | T(N, I) | = | 79.5 | °C |
| No. | Abbreviation | /% by weight | nₑ(20°C, 589 nm) | = | 1.5975 | |
| 1 | CfK-3-F | 16.0 | Δn(20°C, 589 nm) | = | 0.1164 | |
| 2 | B-5O-OT | 8.0 | ε_{\|\|}(20°, 1 kHz) | = | 13.2 | |
| 3 | CLY-V-1 | 8.0 | ε_{⊥}(20°, 1 kHz) | = | 6.3 | |
| 4 | CC-3-V | 30.0 | Δε(20°, 1 kHz) | = | 6.9 | |
| 5 | CCP-V-1 | 4.0 | εₐᵥ.(20°, 1 kHz) | = | 8.6 | |
| 6 | PGP-2-2V | 9.0 | γ₁(20°C) | = | 90 | mPa·s |
| 7 | CCP-3-OT | 5.0 | k₁₁(20°C) | = | 13.5 | pN |
| 8 | DPGU-4-F | 5.0 | k₂₂(20°C) | = | t.b.d. | pN |
| 9 | APUQU-3-F | 5.0 | k₃₃(20°C) | = | 13.6 | pN |
| 10 | DGUQU-4-F | 7.0 | V₀(20°C) | = | 1.48 | V |
| 11 | PGUQU-4-F | 3.0 | | | | |
| ∑ | | 100.0 | | | | |

This mixture, mixture M-18, has a good dielectric ratio (ε_{⊥}/Δε) of 0.96, a good ratio of (γ₁/k₁₁) of 7.21 and is characterized by a good transmission in an FFS display and shows a short response time.

### Example 9

The following mixture (M-19) is prepared and investigated.

| Mixture M-19 | | | | | | |
|---|---|---|---|---|---|---|
| Composition | | | Physical properties | | | |
| Compound | | Concentration | T(N, I) | = | 81.0 | °C |
| No. | Abbreviation | /% by weight | nₑ(20°C, 589 nm) | = | 1.5926 | |
| 1 | CfK-3-F | 10.0 | Δn(20°C, 589 nm) | = | 0.1164 | |
| 2 | CK-3-F | 4.0 | ε_{\|\|}(20°, 1 kHz) | = | 18.2 | |
| 3 | CK-4-F | 3.0 | ε_{⊥}(20°, 1 kHz) | = | 17.2 | |
| 4 | CK-5-F | 6.0 | Δε(20°, 1 kHz) | = | 1.0 | |
| 5 | B-2O-O5 | 5.0 | εₐᵥ.(20°, 1 kHz) | = | 17.5 | |
| 6 | B-3-F | 4.0 | γ₁(20°C) | = | t.b.d. | mPa·s |
| 7 | B-5O-OT | 8.0 | k₁₁(20°C) | = | 13.1 | pN |
| 8 | CY-3-O4 | 10.0 | k₂₂(20°C) | = | t.b.d. | pN |
| 9 | CCY-3-O1 | 10.0 | k₃₃(20°C) | = | 14.7 | pN |
| 10 | CCY-3-O2 | 10.0 | V₀(20°C) | = | 3.61 | V |
| 11 | CCY-3-O3 | 9.0 | | | | |
| 12 | DPGU-4-F | 5.0 | | | | |
| 13 | CDUQU-3-F | 5.0 | | | | |
| 14 | APUQU-3-F | 4.0 | | | | |
| 15 | DGUQU-4-F | 7.0 | | | | |
| ∑ | | 100.0 | | | | |

This mixture, mixture M-19, has a good dielectric ratio (ε_{⊥}/Δε) of 17.2 and is characterized by very good transmission in an FFS display.

## Claims

1. Liquid-crystalline medium having a dielectric anisotropy (Δε) of 0.5 or more at a temperature of 20°C, **characterized in that** it comprises one or more compounds of formula IN-A 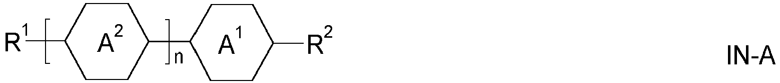 in which 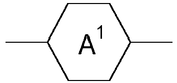 denotes 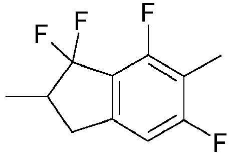 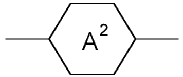 denotes, in each occurrence independently of each other, 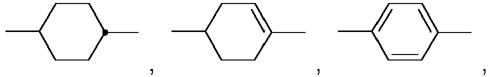 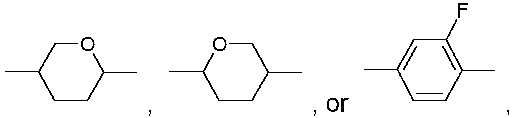
n denotes 0, 1 or 2,
R¹ and R² independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms, and R² alternatively denotes H or X¹,
X¹ denotes F, Cl, fluorinated alkyl, fluorinated alkenyl, fluorinated alkoxy or fluorinated alkenyloxy.

2. Medium according to Claim 1, **characterised in that** it comprises one or more compounds of formula IN-A, which are selected from the group of compounds of formulae IN-A-1 to IN-A-5: 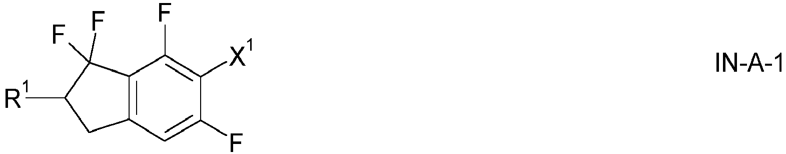 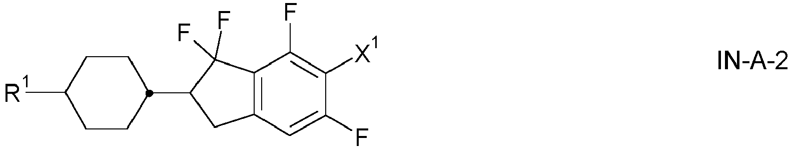 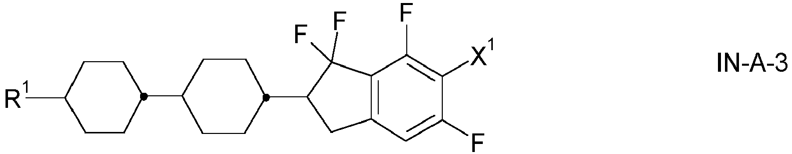 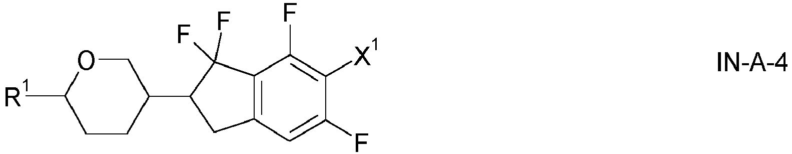 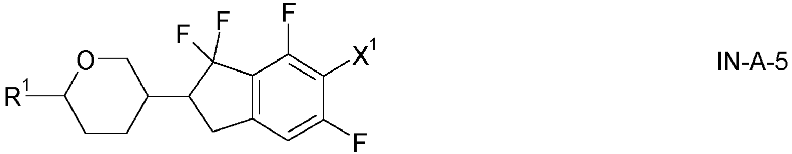 in which the parameters have the respective meanings given in claim 1.

3. Medium according to Claim 2, **characterised in that** it comprises one or more compounds of formulae IN-A-2.

4. Medium according to at least one of Claims 1 to 3, **characterised in that** it comprises one or more compounds selected of formula IN-B 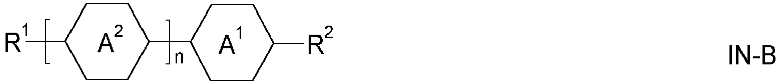 in which 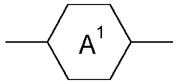 denotes 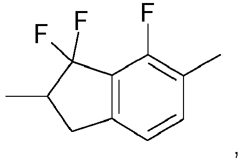 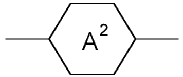 denotes, in each occurrence independently of each other, 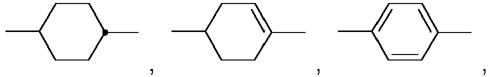 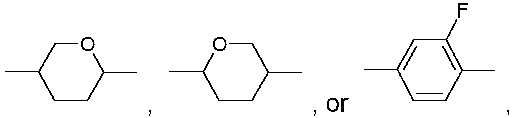
n denotes 0, 1 or 2,
R¹ and R² independently of each other denote alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms, and R² alternatively denotes H or X¹,
X¹ denotes F, Cl, fluorinated alkyl, fluorinated alkenyl, fluorinated alkoxy or fluorinated alkenyloxy.

5. Medium according to Claim 4, **characterised in that** it comprises one or more compounds of formula IN-B, which are selected from the group of compounds of formulae IN-B-1 to IN-B-5: 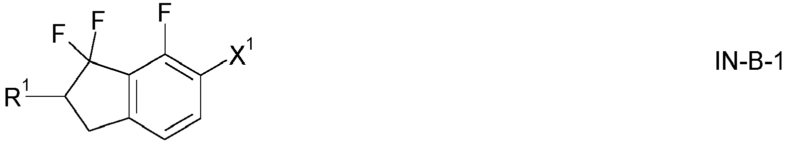 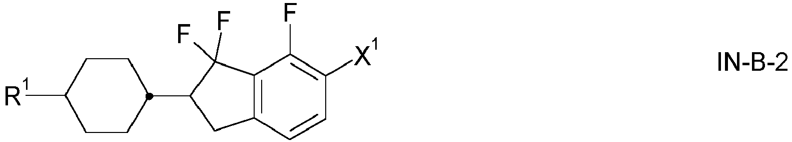 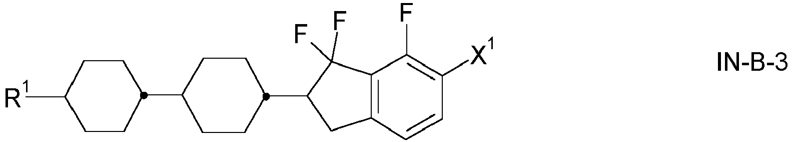 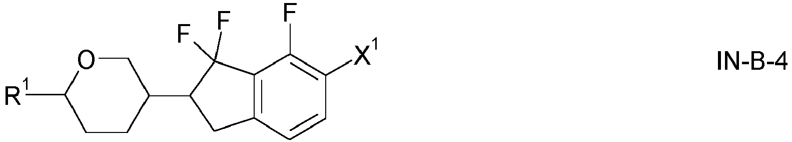 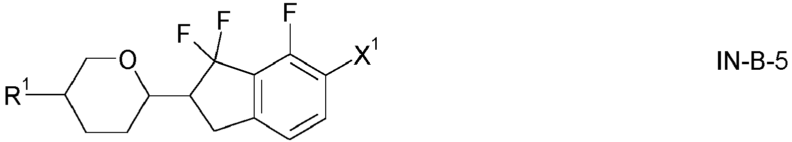 in which the parameters have the respective meanings given in claim 4.

6. Medium according to Claim 5, **characterised in that** it comprises one or more compounds of formulae IN-B-2.

7. Medium according to at least one of Claims 1 to 6, **characterised in that** it additionally comprises one or more compounds of formula I: 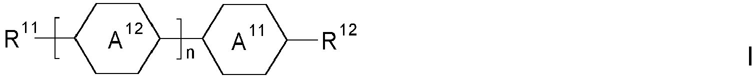 in which 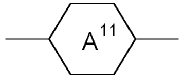 denotes 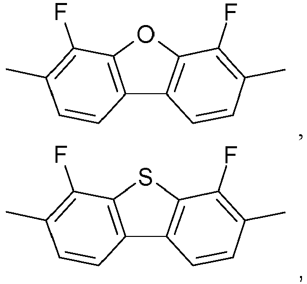 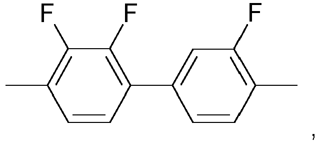 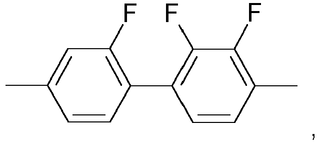 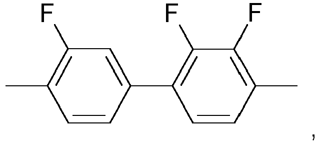 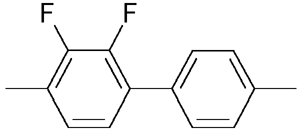 or 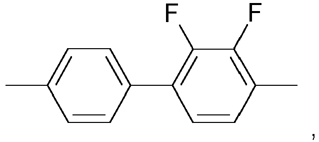 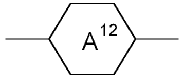 denotes 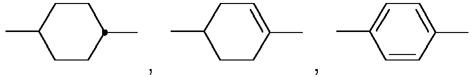 or 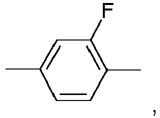
n denotes 0 or 1,
R¹¹ and R¹² independently of each other denote alkyl, alkoxy, fluorinated alkyl or fluorinated alkoxy, alkenyl, alkenyloxy, alkoxyalkyl or fluorinated alkenyl having 2 to 7 C atoms and R¹¹ alternatively denotes R¹ and R¹² alternatively denotes X¹,
R¹ denotes alkyl, alkoxy, fluorinated alkyl or fluorinated alkoxy, preferably having 1 to 7 C atoms, alkenyl, alkenyloxy, alkoxyalkyl or fluorinated alkenyl having 2 to 7 C atoms and preferably alkyl or alkenyl, and
X¹ denotes F, Cl, fluorinated alkyl, fluorinated alkenyl, fluorinated alkoxy or fluorinated alkenyloxy.

8. Medium according to at least one of Claims 1 to 7, **characterised in that** it comprises one or more compounds selected from the group of compounds of formulae II and III. 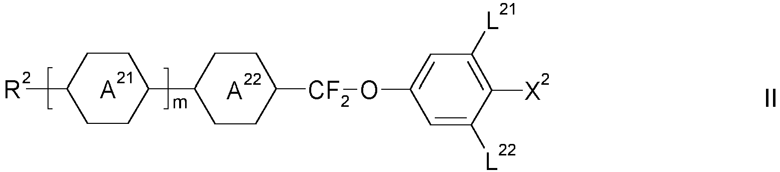 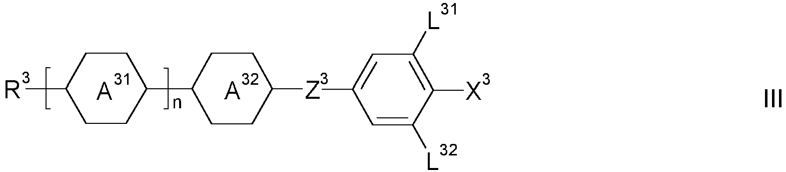 in which
R² denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 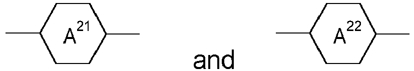 on each appearance, independently of one another, denote 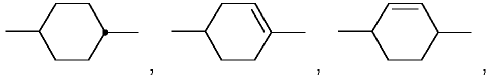 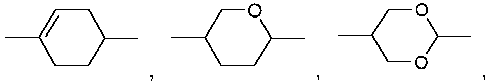 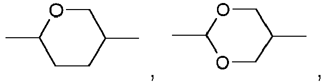 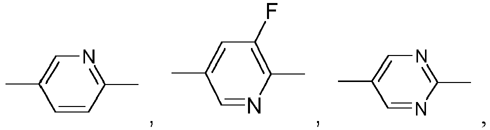 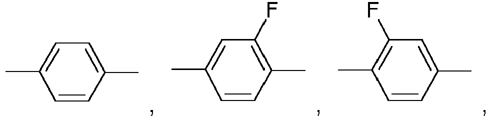 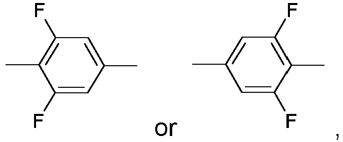
L²¹ and L²² denote H or F,
X² denotes halogen, halogenated alkyl or alkoxy having 1 to 3 C atoms or halogenated alkenyl or alkenyloxy having 2 or 3 C atoms,
m denotes 0, 1, 2 or 3,
R³ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms 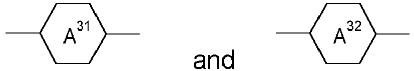 on each appearance, independently of one another, are 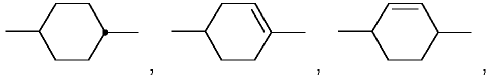 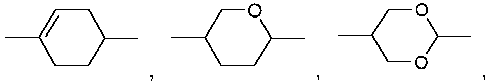 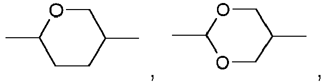 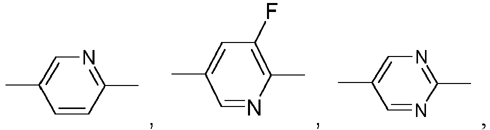 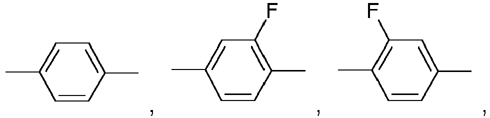 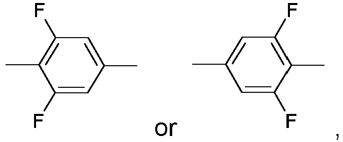
L³¹ and L³², independently of one another, denote H or F,
X³ denotes halogen, halogenated alkyl or alkoxy having 1 to 3 C atoms or halogenated alkenyl or alkenyloxy having 2 or 3 C atoms, F, Cl, -OCF₃, -OCHF₂, -O-CH₂CF₃, -O-CH=CF₂, -O-CH=CH₂ or -CF₃,
Z³ denotes -CH₂CH₂-, -CF₂CF₂-, -COO-, *trans*-CH=CH-, *trans*-CF=CF-, -CH₂O- or a single bond, and
n denotes 0, 1, 2 or 3.

9. Liquid-crystalline medium according to at least one of Claims 1 to 8, **characterised in that** it comprises one or more dielectrically neutral compounds selected from the group of formulae IV and V: 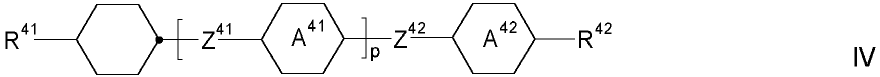 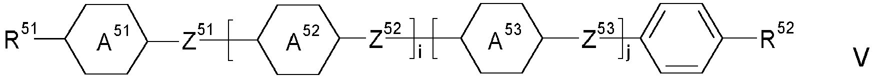 in which
R⁴¹ and R⁴², independently of one another, have the meaning indicated in claim 4 for R² under formula II, 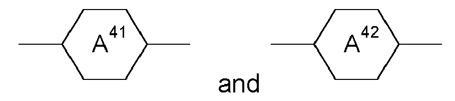 independently of one another and, if 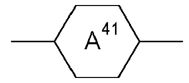 occurs twice, also these independently of one another, denote 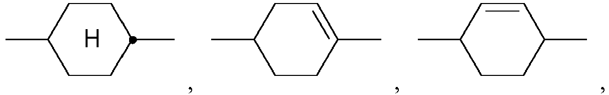 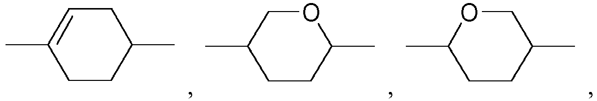 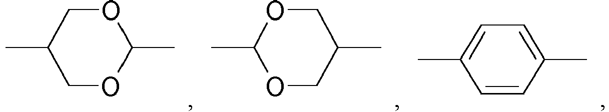 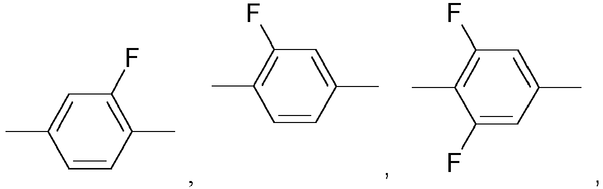 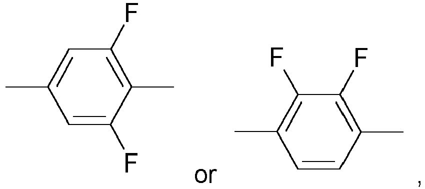
Z⁴¹ and Z⁴², independently of one another and, if Z⁴¹ occurs twice, also these independently of one another,
denote -CH₂CH₂-, -COO-, *trans*-CH=CH-, *trans-*CF=CF-, -CH₂O-, -CF₂O-, -C≡C- or a single bond,
p denotes 0, 1 or 2,
R⁵¹ and R⁵², independently of one another, have one of the meanings given in this claim for R⁴¹ and R⁴² 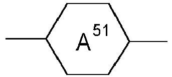 to 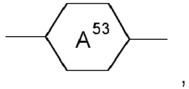 if present, each, independently of one another, denote 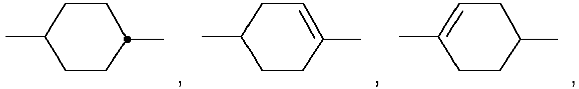 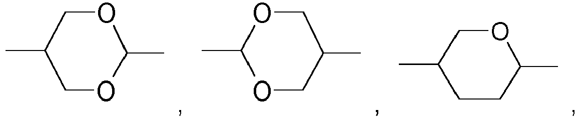 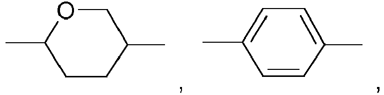 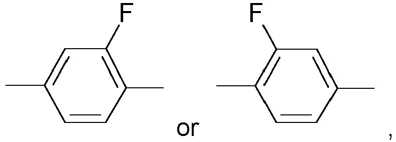
Z⁵¹ to Z⁵³ each, independently of one another, denote -CH₂-CH₂-, -CH₂-O-, -CH=CH-, -C≡C-, -COO- or a single bond, and
i and j each, independently of one another, denote 0 or 1.

10. Liquid-crystalline medium according to Claim 9, **characterised in that** it comprises one or more compounds selected from the group of formulae VI to IX: 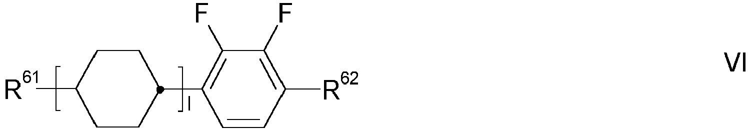 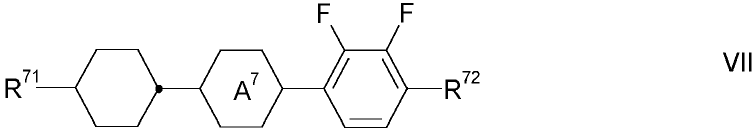 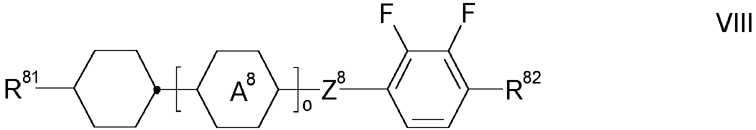 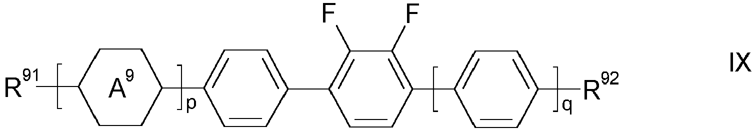 wherein
R⁶¹ denotes an unsubstituted alkyl radical having 1 to 7 C atoms, an unsubstituted alkenyl radical having 2 to 7 C atoms, an unsubstituted alkoxy radical having 1 to 6 C atoms or an unsubstituted alkenyloxy radical having 2 to 6 C atoms,
R⁶² denotes an unsubstituted alkyl radical having 1 to 7 C atoms, an unsubstituted alkoxy radical having 1 to 6 C atoms or an unsubstituted alkenyloxy radical having 2 to 6 C atoms, and
I denotes 0 or 1,
R⁷¹ denotes an unsubstituted alkyl radical having 1 to 7 C atoms, or an unsubstituted alkenyl radical having 2 to 7 C atoms,
R⁷² denotes an unsubstituted alkyl radical having 1 to 7 C atoms, an unsubstituted alkoxy radical having 1 to 6 C atoms or an unsubstituted alkenyloxy radical having 2 to 6 C atoms, 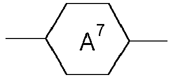 denotes 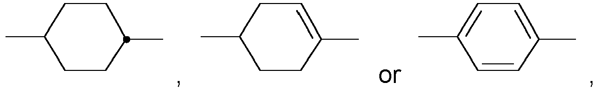
R⁸¹ denotes an unsubstituted alkyl radical having 1 to 7 C atoms, or an unsubstituted alkenyl radical having 2 to 7 C atoms,
R⁸² denotes an unsubstituted alkyl radical having 1 to 7 C atoms, an unsubstituted alkoxy radical having 1 to 6 C atoms or an unsubstituted alkenyloxy radical having 2 to 6 C atoms, preferably having 2, 3 or 4 C atoms, 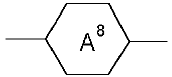 denotes 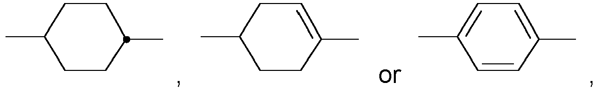
Z⁸ denotes -(C=O)-O-, -CH₂-O-, -CF₂-O- or -CH₂-CH₂-,
o denotes 0 or 1,
R⁹¹ and R⁹² independently of one another have the meaning given for R⁷² above, 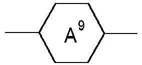 denotes 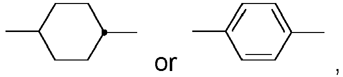
p and q independently of each other denote 0 or 1, and

11. Medium according to at least one of Claims 1 to 10, **characterised in that** the total concentration of the compounds of formula IN in the medium as a whole is 1 % or more to 60 % or less.

12. Medium according to at least one of Claims 1 to 11, **characterised in that** it additionally comprises one or more chiral compounds.

13. Electro-optical display or electro-optical component, **characterised in that** it comprises a liquid-crystalline medium according to at least one of Claims 1 to 12.

14. Display according to Claim 13, **characterised in that** it is based on the IPS- or FFS mode.

15. Display according to Claim 13 or 14, **characterised in that** it contains an active-matrix addressing device.

16. Display according to at least one of Claims 13 to 15, **characterised in that** it is a mobile display.

17. Use of a medium according to at least one of Claims 1 to 12 an electro-optical display or in an electro-optical component.

18. Process for the preparation of a liquid-crystalline medium according to one or more of Claims 1 to 12, , **characterised in that** one or more compounds of formula IN are mixed with one or more additional mesogenic compounds and optionally one or more additives.

19. Compound of formula IN-A 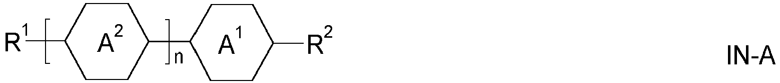 in which 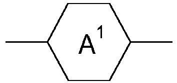 denotes 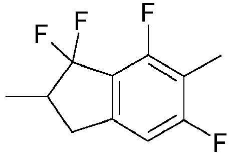 and the other parameters have the respective meanings given in claim 1.

20. Compound of formula IN-A selected from the group of compounds of formulae IN-A-1 to IN-A-5: 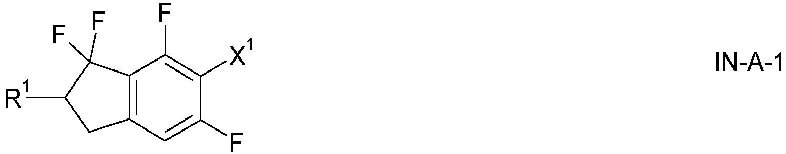 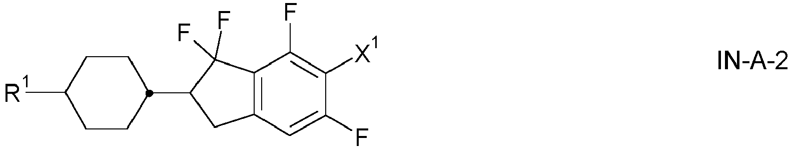 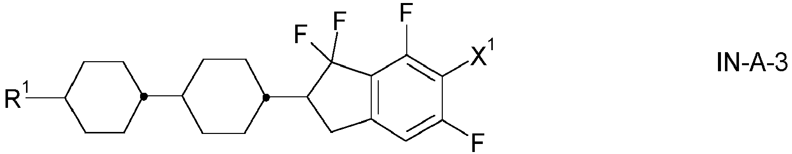 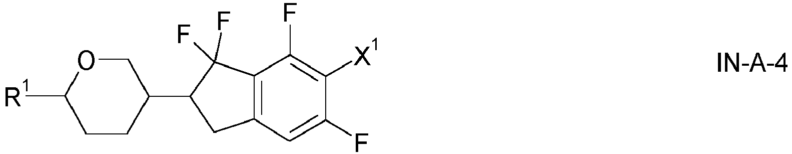 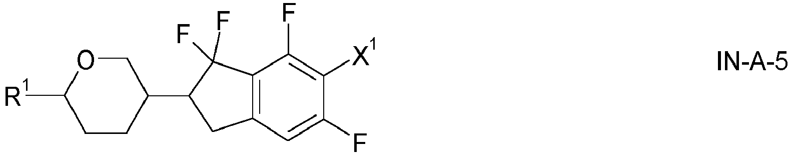 in which the parameters have the respective meanings given in claim 1.

21. Compound of formula IN-A-2 according to claim 20.

22. Process for the preparation of a compound of formula IN-A, as given in claim 19.

23. Process for the preparation of a compound of formula IN-A selected from the group of compounds of formulae IN-A-1 to IN-A-5, as given in claim 22.

24. Process for the preparation of a compound of formula IN-A-3, as given in claim 23.

## Patentansprüche

1. Flüssigkristallines Medium mit einer dielektrischen Anisotropie (Δε) von 0,5 oder mehr bei einer Temperatur von 20°C, **dadurch gekennzeichnet, dass** es eine oder mehrere Verbindungen IN-A 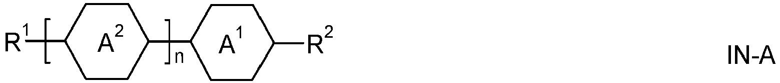 enthält, worin 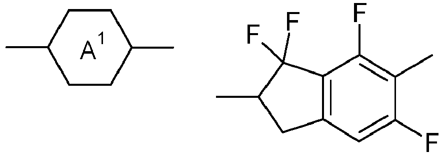 bedeutet, 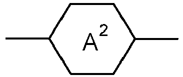 bei jedem Auftreten unabhängig voneinander 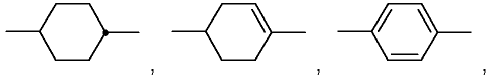 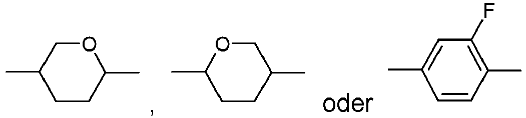 bedeutet,
n 0, 1 oder 2 bedeutet,
R¹ und R² unabhängig voneinander Alkyl, Alkoxy, fluoriertes Alkyl oder fluoriertes Alkoxy, vorzugsweise mit 1 bis 7 C-Atomen, Alkenyl, Alkenyloxy, Alkoxyalkyl oder fluoriertes Alkenyl mit 2 bis 7 C-Atomen bedeuten und R² alternativ H oder X¹ bedeutet,
X¹ F, Cl, fluoriertes Alkyl, fluoriertes Alkenyl, fluoriertes Alkoxy oder fluoriertes Alkenyloxy bedeutet.

2. Medium nach Anspruch 1, **dadurch gekennzeichnet, dass** es eine oder mehrere Verbindungen der Formel IN-A enthält, die ausgewählt sind aus der Gruppe der Verbindungen der Formeln IN-A-1 bis IN-A-5: 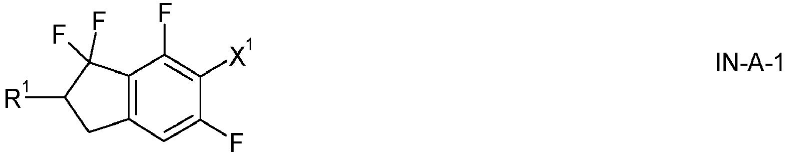 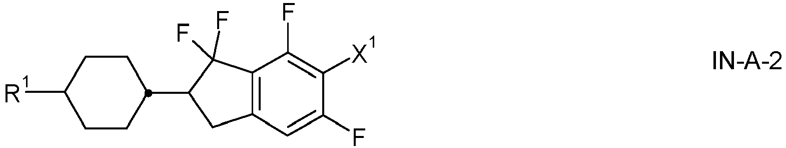 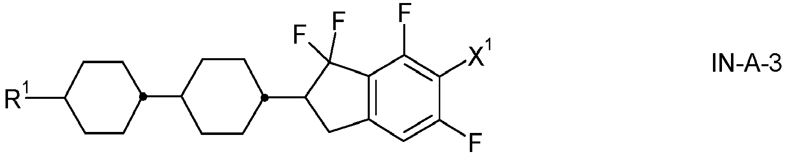 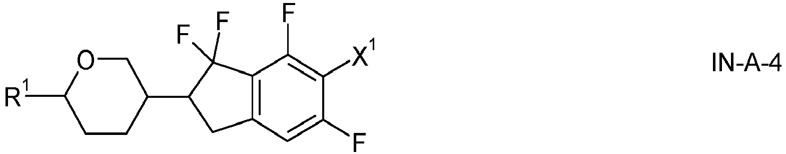 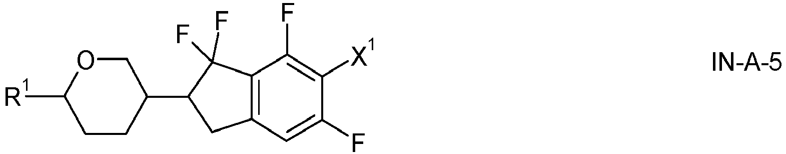 worin die Parameter die jeweiligen in Anspruch 1 gegebenen Bedeutungen besitzen.

3. Medium nach Anspruch 2, **dadurch gekennzeichnet, dass** es eine oder mehrere Verbindungen der Formel IN-A-2 enthält.

4. Medium nach mindestens einem der Ansprüche 1 bis 3, **dadurch gekennzeichnet, dass** es eine oder mehrere Verbindungen enthält, die ausgewählt sind aus der Formel IN-B 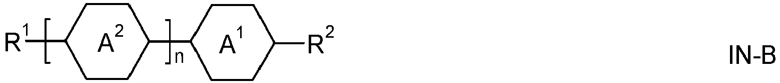 worin 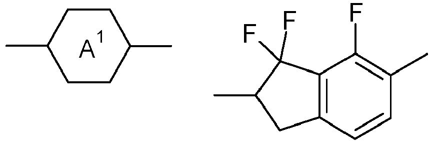 bedeutet, 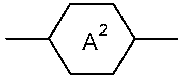 bei jedem Auftreten unabhängig voneinander 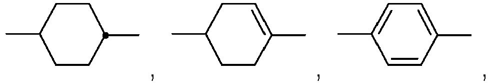 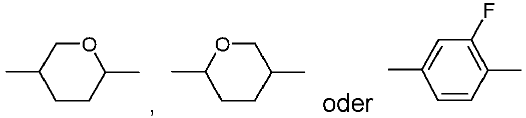 bedeutet,
n 0, 1 oder 2 bedeutet,
R¹ und R² unabhängig voneinander Alkyl, Alkoxy, fluoriertes Alkyl oder fluoriertes Alkoxy, vorzugsweise mit 1 bis 7 C-Atomen, Alkenyl, Alkenyloxy, Alkoxyalkyl oder fluoriertes Alkenyl mit 2 bis 7 C-Atomen bedeuten und R² alternativ H oder X¹ bedeutet,
X¹ F, Cl, fluoriertes Alkyl, fluoriertes Alkenyl, fluoriertes Alkoxy oder fluoriertes Alkenyloxy bedeutet.

5. Medium nach Anspruch 4, **dadurch gekennzeichnet, dass** es eine oder mehrere Verbindungen der Formel IN-B enthält, die ausgewählt sind aus der Gruppe der Verbindungen der Formeln IN-B-1 bis IN-B-5: 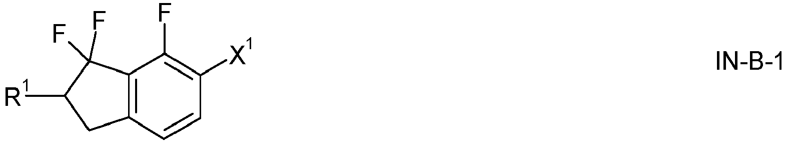 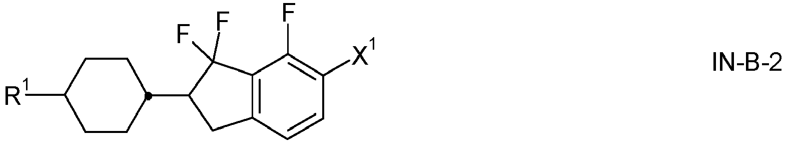 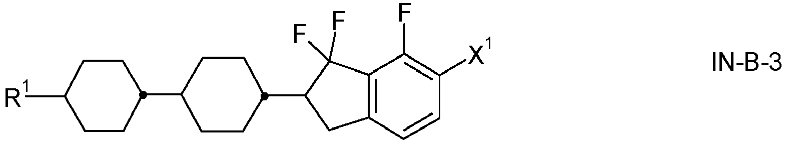 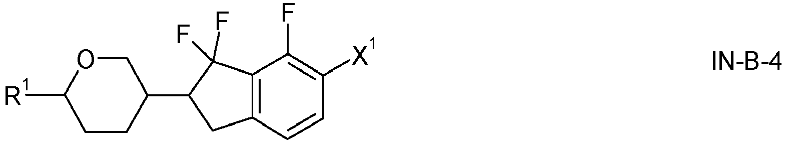 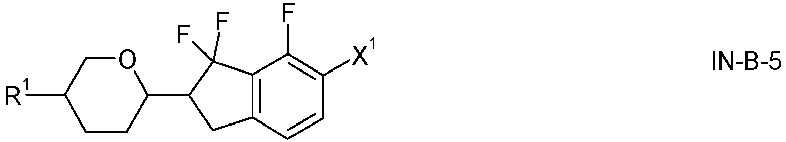 worin die Parameter die jeweiligen in Anspruch 4 gegebenen Bedeutungen besitzen.

6. Medium nach Anspruch 5, **dadurch gekennzeichnet, dass** es eine oder mehrere Verbindungen der Formel IN-B-2 enthält.

7. Medium nach mindestens einem der Ansprüche 1 bis 6, **dadurch gekennzeichnet, dass** es zusätzlich eine oder mehrere Verbindungen der Formel I enthält: 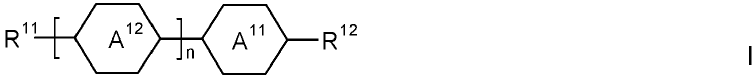 worin 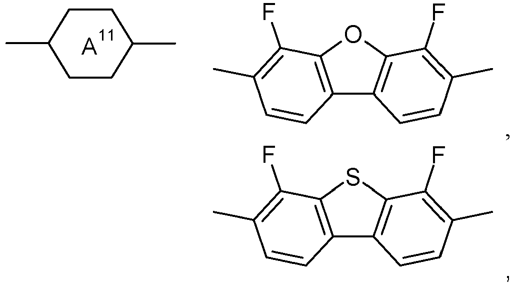 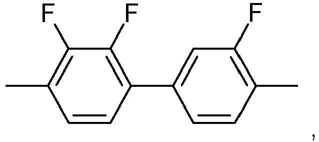 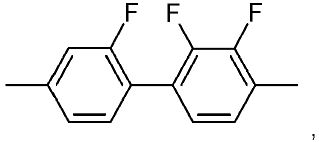 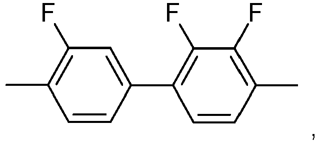 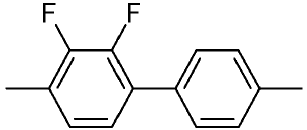 oder 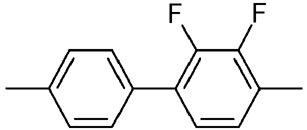 bedeutet, 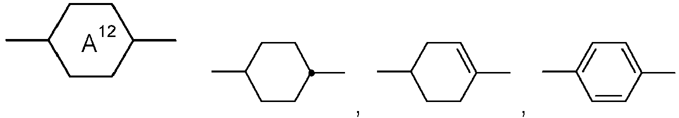 oder 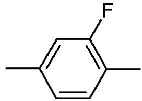 bedeutet,
n 0 oder 1 bedeutet,
R¹¹ und R¹² unabhängig voneinander Alkyl, Alkoxy, fluoriertes Alkyl oder fluoriertes Alkoxy, Alkenyl, Alkenyloxy, Alkoxyalkyl oder fluoriertes Alkenyl mit 2 bis 7 C-Atomen bedeuten und R¹¹ alternativ R¹ bedeutet und R¹² alternativ X¹ bedeutet,
R¹ Alkyl, Alkoxy, fluoriertes Alkyl oder fluoriertes Alkoxy, vorzugsweise mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet und
X¹ F, Cl, fluoriertes Alkyl, fluoriertes Alkenyl, fluoriertes Alkoxy oder fluoriertes Alkenyloxy bedeutet.

8. Medium nach mindestens einem der Ansprüche 1 bis 7, **dadurch gekennzeichnet, dass** es eine oder mehrere Verbindungen enthält, die ausgewählt sind aus der Gruppe der Verbindungen der Formeln II und III, 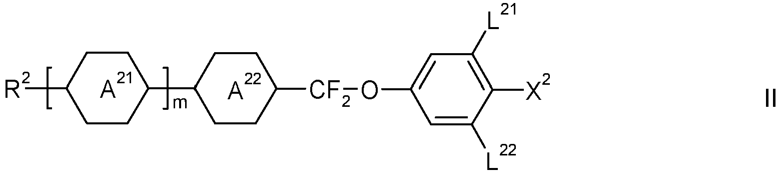 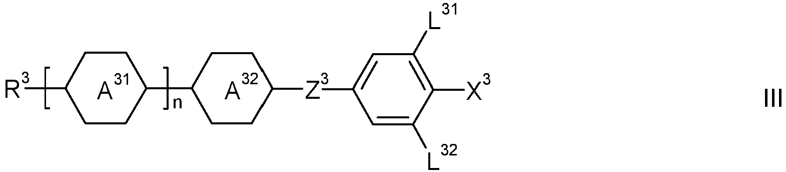 worin
R² Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet, 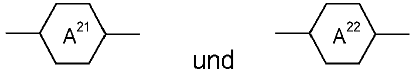 bei jedem Auftreten unabhängig voneinander 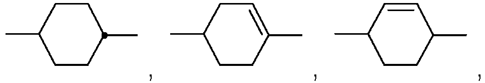 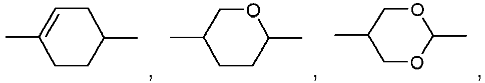 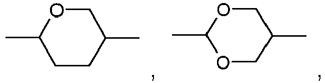 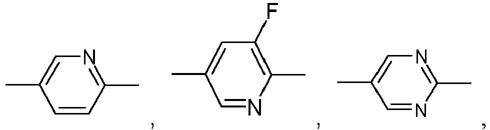 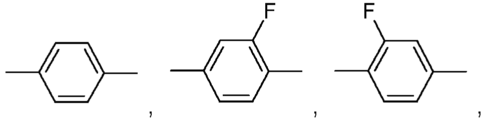 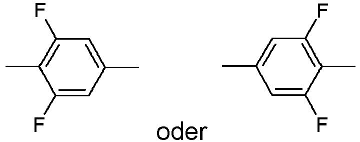 bedeuten,
L²¹ und L²² H oder F bedeuten,
X² Halogen, halogeniertes Alkyl oder Alkoxy mit 1 bis 3 C-Atomen oder halogeniertes Alkenyl oder Alkenyloxy mit 2 oder 3 C-Atomen bedeutet,
m 0, 1, 2 oder 3 bedeutet,
R³ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet, 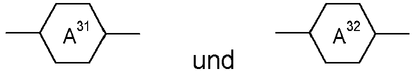 bei jedem Auftreten unabhängig voneinander 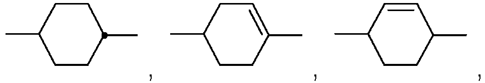 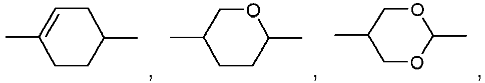 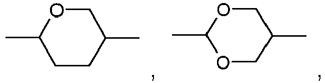 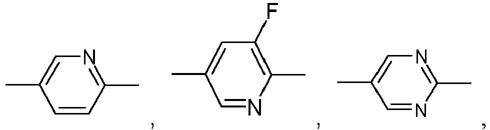 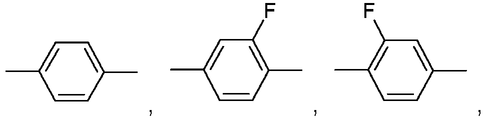 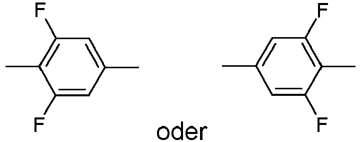 sind,
L³¹ und L³² unabhängig voneinander H oder F bedeuten,
X³ Halogen, halogeniertes Alkyl oder Alkoxy mit 1 bis 3 C-Atomen oder halogeniertes Alkenyl oder Alkenyloxy mit 2 oder 3 C-Atomen, F, Cl, -OCF₃, -OCHF₂, -O-CH₂CF₃, -O-CH=CF₂, -O-CH=CH₂ oder -CF₃ bedeutet,
Z³ -CH₂CH₂-, -CF₂CF₂-, -COO-, *trans*-CH=CH-, *trans*-CF=CF-, -CH₂O- oder eine Einfachbindung bedeutet und
n 0, 1, 2 oder 3 bedeutet.

9. Flüssigkristallines Medium nach mindestens einem der Ansprüche 1 bis 8, **dadurch gekennzeichnet, dass** es eine oder mehrere dielektrisch neutrale Verbindungen enthält, die ausgewählt sind aus der Gruppe der Formeln IV und V: 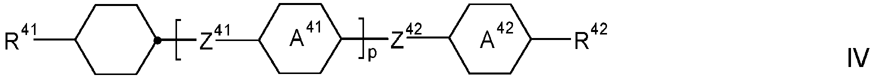 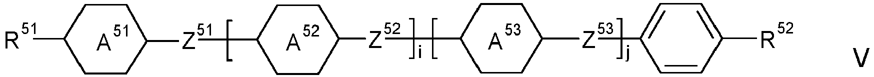 worin
R⁴¹ und R⁴² unabhängig voneinander die in Anspruch 4 für R² unter Formel II angegebene Bedeutung besitzen, 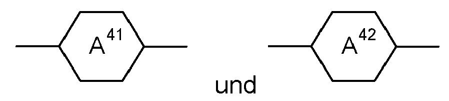 unabhängig voneinander und, wenn 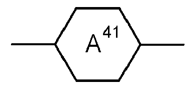 zweimal auftritt, auch diese unabhängig voneinander 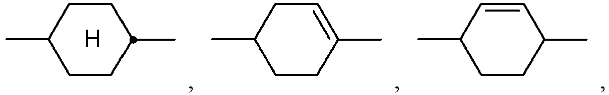 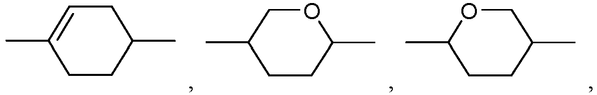 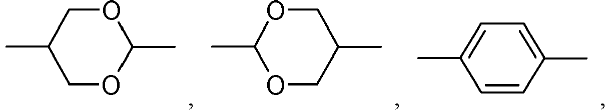 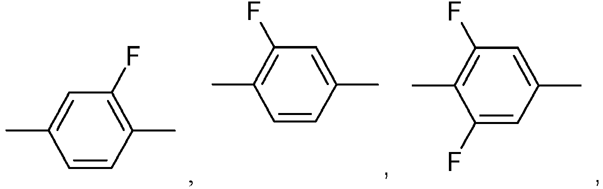 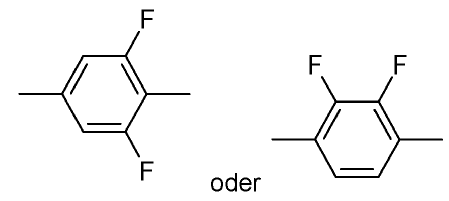 bedeuten,
Z⁴¹ und Z⁴² unabhängig voneinander und, wenn Z⁴¹ zweimal auftritt, auch diese unabhängig voneinander -CH₂CH₂-, -COO-, *trans*-CH=CH-, *trans*-CF=CF-, -CH₂O-, -CF₂O-, -C=C- oder eine Einfachbindung bedeuten,
p 0, 1 oder 2 bedeutet,
R⁵¹ und R⁵² unabhängig voneinander eine der in diesem Anspruch für R⁴¹ und R⁴² gegebenen Bedeutungen besitzen, 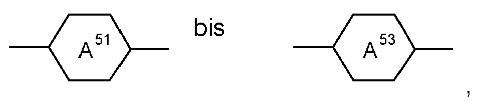 wenn vorhanden, jeweils unabhängig voneinander 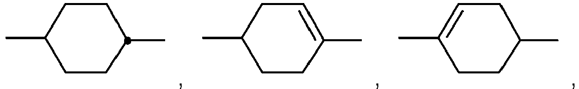 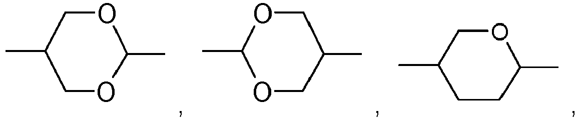 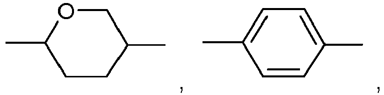 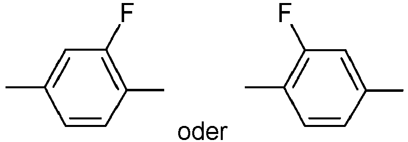 bedeuten,
Z⁵¹ bis Z⁵³ jeweils unabhängig voneinander -CH₂-CH₂-, -CH₂-O-, -CH=CH-, -C≡C-, -COO- oder eine Einfachbindung bedeuten und
i und j jeweils unabhängig voneinander 0 oder 1 bedeuten.

10. Flüssigkristallines Medium nach Anspruch 9, **dadurch gekennzeichnet, dass** es eine oder mehrere Verbindungen enthält, die ausgewählt sind aus der Gruppe der Formeln VI bis IX: 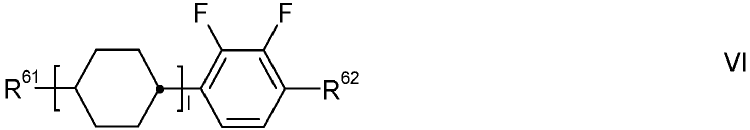 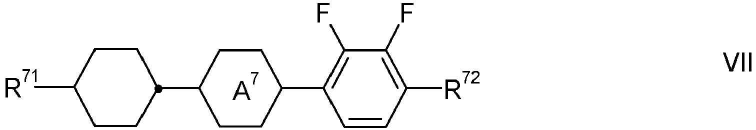 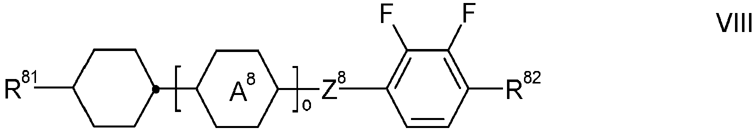 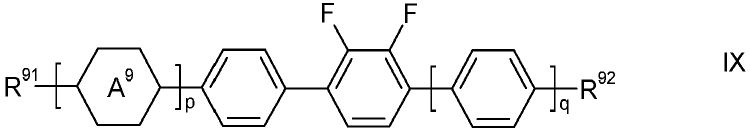 bei denen
R⁶¹ einen unsubstituierten Alkylrest mit 1 bis 7 C-Atomen, einen unsubstituierten Alkenylrest mit 2 bis 7 C-Atomen, einen unsubstituierten Alkoxyrest mit 1 bis 6 C-Atomen oder einen unsubstituierten Alkenyloxyrest mit 2 bis 6 C-Atomen bedeutet,
R⁶² einen unsubstituierten Alkylrest mit 1 bis 7 C-Atomen, einen unsubstituierten Alkoxyrest mit 1 bis 6 C-Atomen oder einen unsubstituierten Alkenyloxyrest mit 2 bis 6 C-Atomen bedeutet und
I 0 oder 1 bedeutet,
R⁷¹ einen unsubstituierten Alkylrest mit 1 bis 7 C-Atomen oder einen unsubstituierten Alkenylrest mit 2 bis 7 C-Atomen bedeutet,
R⁷² einen unsubstituierten Alkylrest mit 1 bis 7 C-Atomen, einen unsubstituierten Alkoxyrest mit 1 bis 6 C-Atomen oder einen unsubstituierten Alkenyloxyrest mit 2 bis 6 C-Atomen bedeutet, 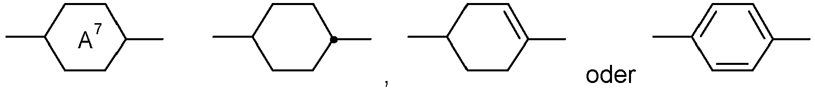 bedeutet,
R⁸¹ einen unsubstituierten Alkylrest mit 1 bis 7 C-Atomen oder einen unsubstituierten Alkenylrest mit 2 bis 7 C-Atomen bedeutet,
R⁸² einen unsubstituierten Alkylrest mit 1 bis 7 C-Atomen, einen unsubstituierten Alkoxyrest mit 1 bis 6 C-Atomen oder einen unsubstituierten Alkenyloxyrest mit 2 bis 6 C-Atomen, vorzugsweise mit 2, 3 oder 4 C-Atomen, bedeutet, 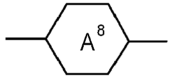 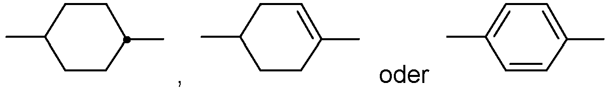 bedeutet,
Z⁸ -(C=O)-O-, -CH₂-O-, -CF₂-O- oder -CH₂-CH₂- bedeutet,
o 0 oder 1 bedeutet,
R⁹¹ und R⁹² unabhängig voneinander die vorstehend für R⁷² gegebene Bedeutung besitzen, 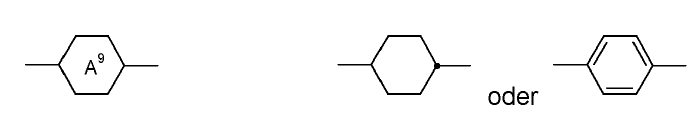 bedeutet,
p und q unabhängig voneinander 0 oder 1 bedeuten.

11. Medium nach mindestens einem der Ansprüche 1 bis 10, **dadurch gekennzeichnet, dass** die Gesamtkonzentration der Verbindungen der Formel IN im Gesamtmedium 1 % oder mehr bis 60 % oder weniger beträgt.

12. Medium nach mindestens einem der Ansprüche 1 bis 11, **dadurch gekennzeichnet, dass** es zusätzlich eine oder mehrere chirale Verbindungen enthält.

13. Elektrooptische Anzeige oder elektrooptische Komponente, **dadurch gekennzeichnet, dass** sie ein flüssigkristallines Medium nach mindestens einem der Ansprüche 1 bis 12 enthält.

14. Anzeige nach Anspruch 13, **dadurch gekennzeichnet, dass** sie auf dem IPS- oder FFS-Modus basiert.

15. Anzeige nach Anspruch 13 oder 14, **dadurch gekennzeichnet, dass** sie eine Aktivmatrix-Adressierungsvorrichtung enthält.

16. Anzeige nach mindestens einem der Ansprüche 13 bis 15, **dadurch gekennzeichnet, dass** es sich um eine mobile Anzeige handelt.

17. Verwendung eines Mediums nach mindestens einem der Ansprüche 1 bis 12 in einer elektrooptischen Anzeige oder in einer elektrooptischen Komponente.

18. Verfahren zur Herstellung eines flüssigkristallinen Mediums nach einem oder mehreren der Ansprüche 1 bis 12, **dadurch gekennzeichnet, dass** man eine oder mehrere Verbindungen der Formel IN mit einer oder mehreren zusätzlichen mesogenen Verbindungen und gegebenenfalls einem oder mehreren Zusatzstoffen mischt.

19. Verbindung der Formel IN-A 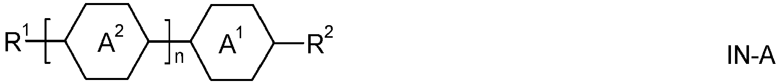 worin 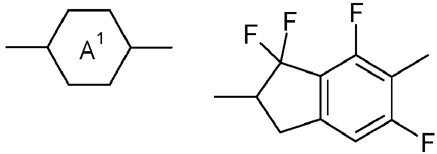 bedeutet, und die anderen Parameter die jeweiligen in Anspruch 1 gegebenen Bedeutungen besitzen.

20. Verbindung der Formel IN, ausgewählt aus der Gruppe der Verbindungen der Formeln IN-A-1 bis IN-A-5: 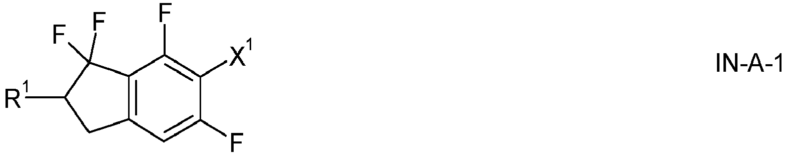 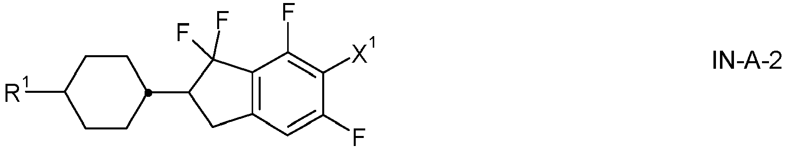 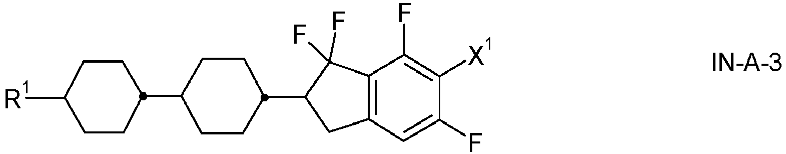 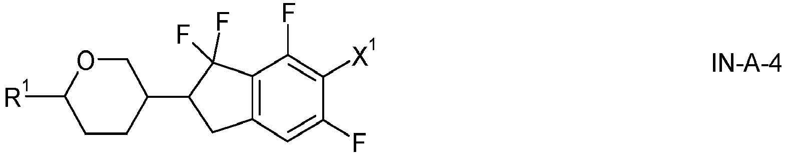 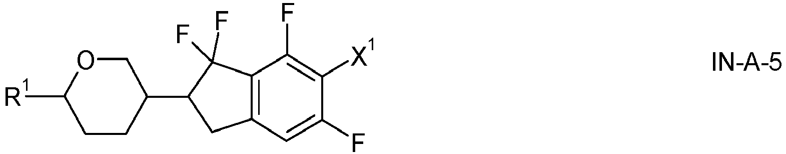 worin die Parameter die jeweiligen in Anspruch 1 gegebenen Bedeutungen besitzen.

21. Verbindung der Formel IN-A-2 nach Anspruch 20.

22. Verfahren zur Herstellung einer Verbindung der Formel IN-A, wie in Anspruch 19 gegeben.

23. Verfahren zur Herstellung einer Verbindung der Formel IN-A, die ausgewählt ist aus der Gruppe der Verbindungen der Formeln IN-A-1 bis IN-A-5, wie in Anspruch 22 gegeben.

24. Verfahren zur Herstellung einer Verbindung der Formel IN-A-3, wie in Anspruch 23 gegeben.

## Revendications

1. Milieu cristallin liquide présentant une anisotrope diélectrique (Δε) de 0,5 ou plus à une température de 20 °C, **caractérisé en ce qu'**il comprend un ou plusieurs composé(s) de la formule IN-A 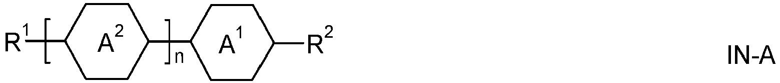 dans laquelle 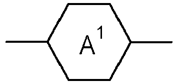 représente 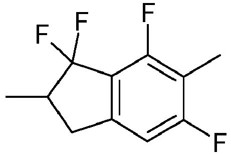 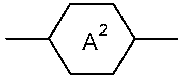 représente, pour chaque occurrence de manière indépendante les uns des autres, 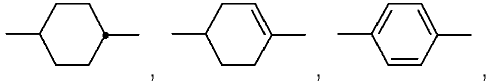 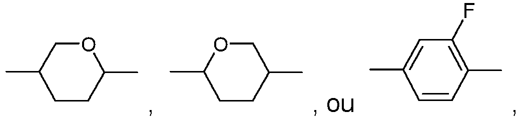
n représente 0, 1 ou 2,
R¹ et R² représentent, de manière indépendante l'un de l'autre, alkyle, alcoxy, alkyle fluoré ou alcoxy fluoré, de préférence qui comporte de 1 à 7 atome(s) de C, alkényle, alkényloxy, alcoxyalkyle ou alkényle fluoré qui comporte de 2 à 7 atomes de C, et R² représente à titre d'alternative H ou X¹,
X¹ représente F, Cl, alkyle fluoré, alkényle fluoré, alcoxy fluoré ou alkényloxy fluoré.

2. Milieu selon la revendication 1, **caractérisé en ce qu'**il comprend un ou plusieurs composé(s) de la formule IN-A, lequel/lesquels est/sont sélectionné(s) parmi le groupe de composés des formules IN-A-1 à IN-A-5 : 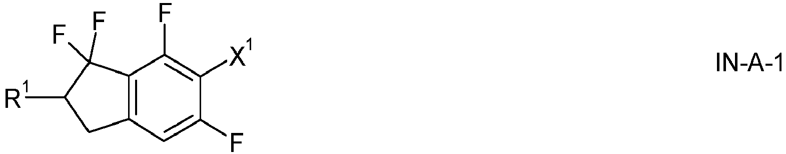 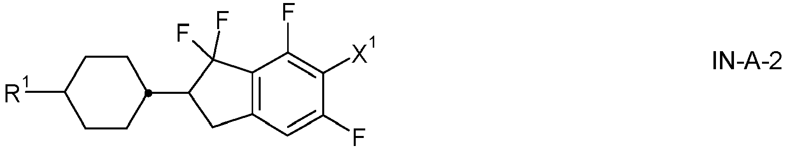 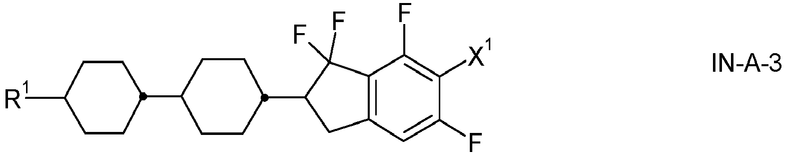 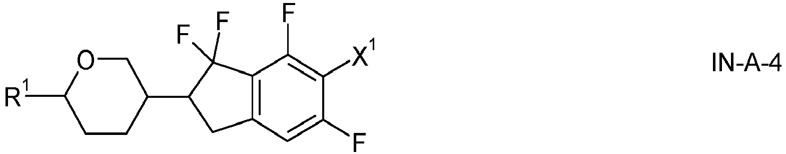 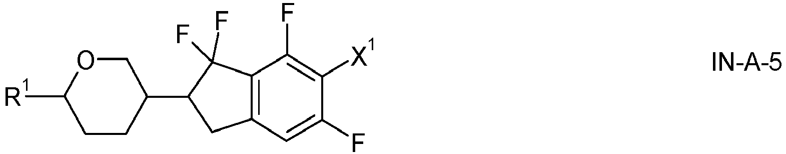 dans lesquelles les paramètres présentent les significations respectives qui ont été données selon la revendication 1.

3. Milieu selon la revendication 2, **caractérisé en ce qu'**il comprend un ou plusieurs composé(s) de la formule IN-A-2.

4. Milieu selon au moins l'une des revendications 1 à 3, **caractérisé en ce qu'**il comprend un ou plusieurs composé(s) qui est/sont sélectionné(s) à partir de la formule IN-B 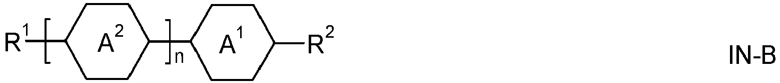 dans laquelle 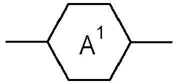 représente 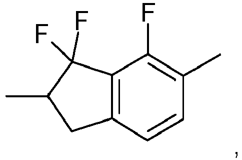 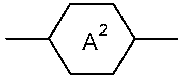 représente, pour chaque occurrence de manière indépendante les uns des autres, 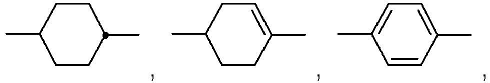 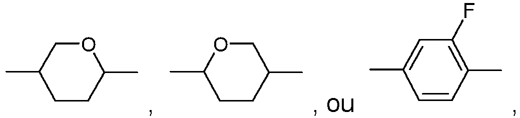
n représente 0, 1 ou 2,
R¹ et R² représentent, de manière indépendante l'un de l'autre, alkyle, alcoxy, alkyle fluoré ou alcoxy fluoré, de préférence qui comporte de 1 à 7 atome(s) de C, alkényle, alkényloxy, alcoxyalkyle ou alkényle fluoré qui comporte de 2 à 7 atomes de C, et R² représente à titre d'alternative H ou X¹,
X¹ représente F, Cl, alkyle fluoré, alkényle fluoré, alcoxy fluoré ou alkényloxy fluoré.

5. Milieu selon la revendication 4, **caractérisé en ce qu'**il comprend un ou plusieurs composé(s) de la formule IN-B, lequel/lesquels est/sont sélectionné(s) parmi le groupe de composés des formules IN-B-1 à IN-B-5 : 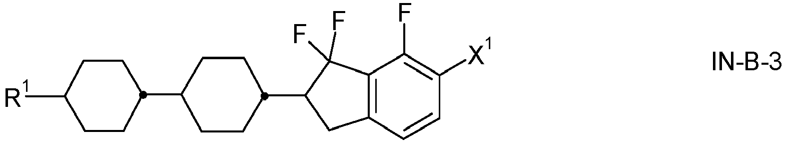 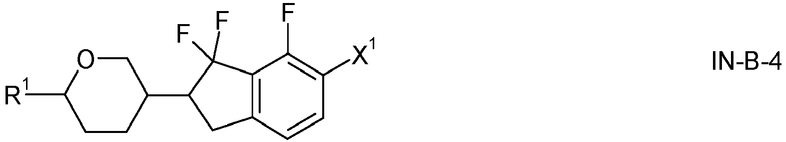 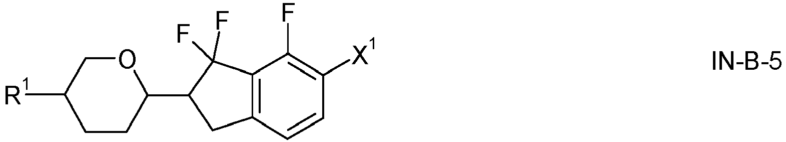 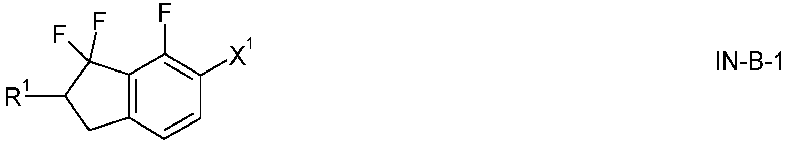 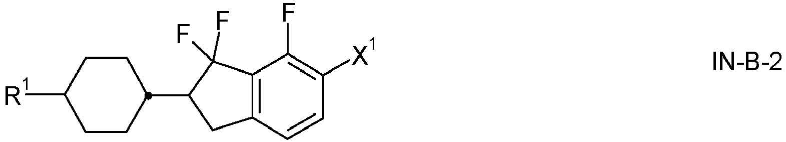 dans lesquelles les paramètres présentent les significations respectives qui ont été données selon la revendication 4.

6. Milieu selon la revendication 5, **caractérisé en ce qu'**il comprend un ou plusieurs composé(s) des formules IN-B-2.

7. Milieu selon au moins l'une des revendications 1 à 6, **caractérisé en ce qu'**il comprend de façon additionnelle un ou plusieurs composé(s) de la formule I : 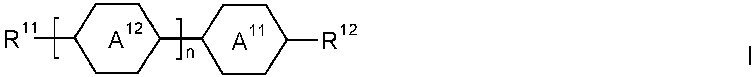 dans laquelle 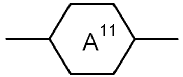 représente 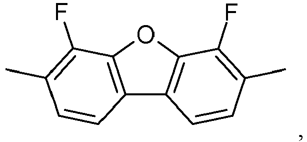 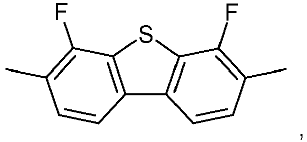 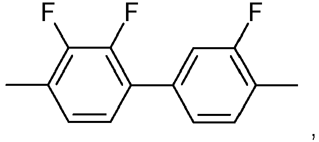 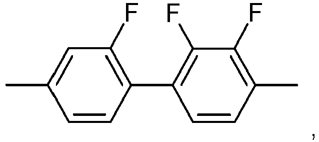 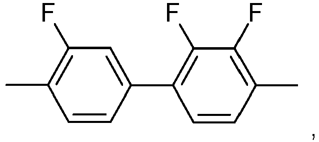 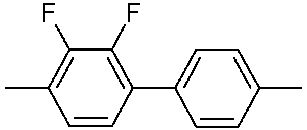 ou 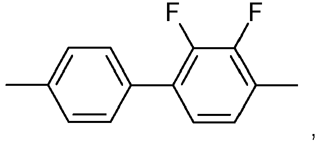 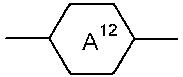 représente 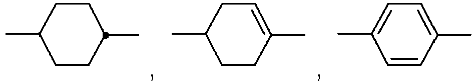 ou 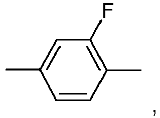
n représente 0 ou 1,
R¹¹ et R¹² représentent, de manière indépendante l'un de l'autre, alkyle, alcoxy, alkyle fluoré ou alcoxy fluoré, alkényle, alkényloxy, alcoxyalkyle ou alkényle fluoré qui comporte de 2 à 7 atomes de C et R¹¹ représente à titre d'alternative R¹, et R¹² représente à titre d'alternative X¹,
R¹ représente alkyle, alcoxy, alkyle fluoré ou alcoxy fluoré, de préférence qui comporte de 1 à 7 atome(s) de C, alkényle, alkényloxy, alcoxyalkyle ou alkényle fluoré qui comporte de 2 à 7 atomes de C et de préférence, alkyle ou alkényle, et
X¹ représente F, Cl, alkyle fluoré, alkényle fluoré, alcoxy fluoré ou alkényloxy fluoré.

8. Milieu selon au moins l'une des revendications 1 à 7, **caractérisé en ce qu'**il comprend un ou plusieurs composé(s) qui est/sont sélectionné(s) parmi le groupe de composés des formules II et III : 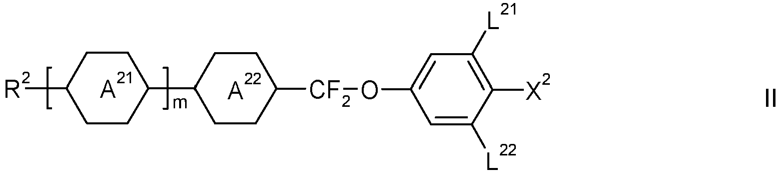 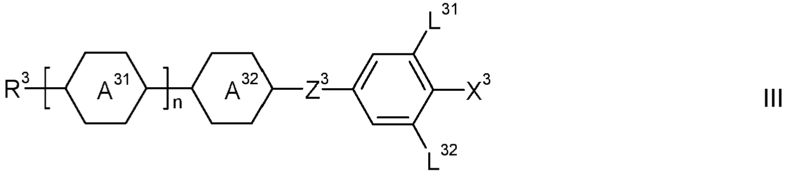 dans lesquelles
R² représente alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C, 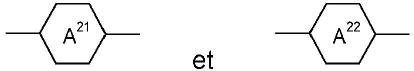 représentent pour chaque occurrence, de manière indépendante les uns des autres, 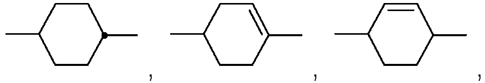 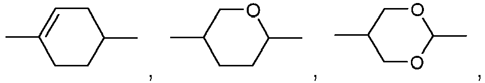 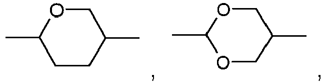 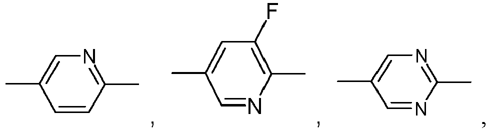 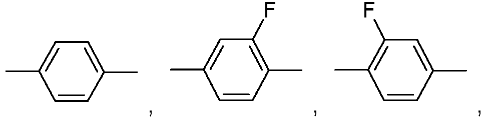 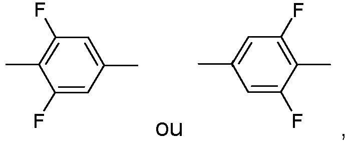
L²¹ et L²² représentent H ou F,
X² représente halogène, alkyle halogéné ou alcoxy qui comporte de 1 à 3 atome(s) de C ou alkényle halogéné ou alkényloxy qui comporte 2 ou 3 atomes de C,
m représente 0, 1, 2 ou 3,
R³ représente alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C 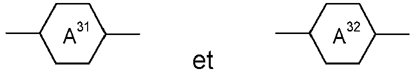 sont, pour chaque occurrence, de manière indépendante les uns des autres, 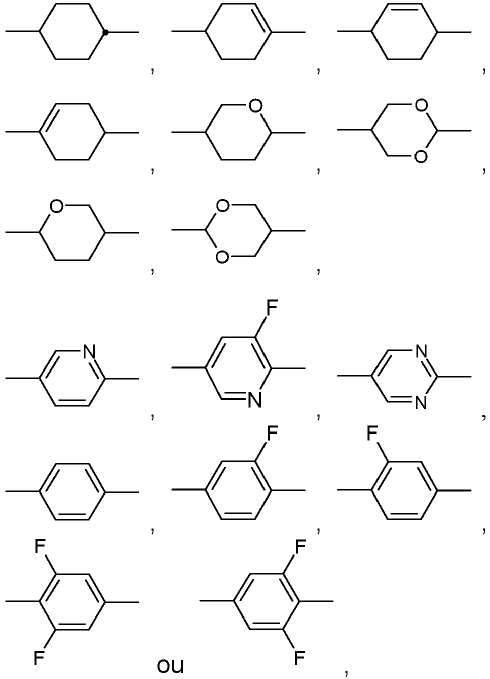
L³¹ et L³² représentent, de manière indépendante l'un de l'autre, H ou F,
X³ représente halogène, alkyle halogéné ou alcoxy qui comporte de 1 à 3 atome(s) de C ou alkényle halogéné ou alkényloxy qui comporte 2 ou 3 atomes de C, F, Cl, -OCF₃, -OCHF₂, -O-CH₂CF₃, -O-CH=CF₂, -O-CH=CH₂ ou -CF₃,
Z³ représente -CH₂CH₂-, -CF₂CF₂-, -COO-, *trans*-CH=CH-*, trans*-CF=CF-, -CH₂O- ou une liaison simple, et
n représente 0, 1, 2 ou 3.

9. Milieu cristallin liquide selon au moins l'une des revendications 1 à 8, **caractérisé en ce qu'**il comprend un ou plusieurs composé(s) diélectriquement neutre(s) qui est/sont sélectionné(s) parmi le groupe des formules IV et V : 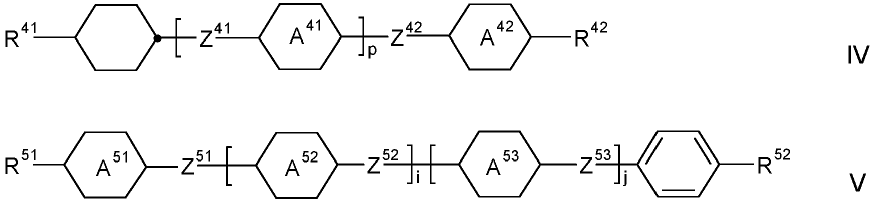 dans lesquelles
R⁴¹ et R⁴² présentent, de manière indépendante l'un de l'autre, la signification qui a été indiquée selon la revendication 4 pour R² en dessous de la formule II, 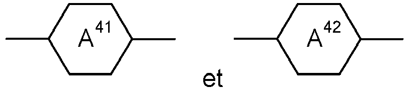 représentent, de manière indépendante l'un de l'autre et, si 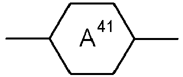 est présent deux fois, ces occurrences représentent également, de manière indépendante l'une de l'autre, 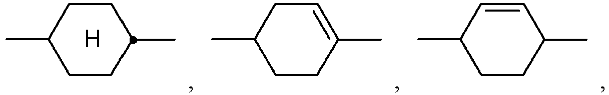 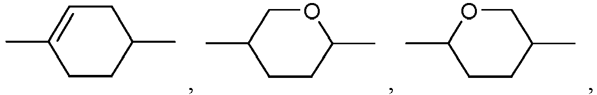 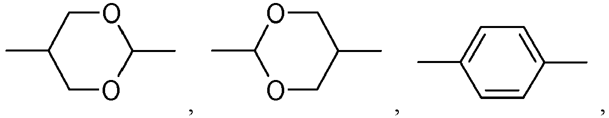 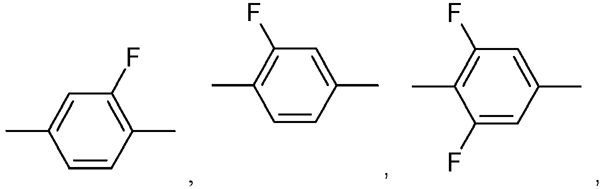 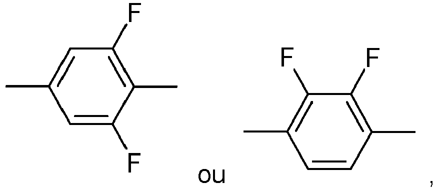
Z⁴¹ et Z⁴² représentent, de manière indépendante l'un de l'autre et, si Z⁴¹ est présent deux fois, ces occurrences représentent également, de manière indépendante l'une de l'autre, -CH₂CH₂-, -COO-, *trans*-CH=CH-*, trans*-CF=CF-, -CH₂O-, -CF₂O-, -C≡C- ou une liaison simple,
p représente 0, 1 ou 2,
R⁵¹ et R⁵² présentent, de manière indépendante l'un de l'autre, l'une des significations qui ont été données selon la présente revendication pour R⁴¹ et R⁴² 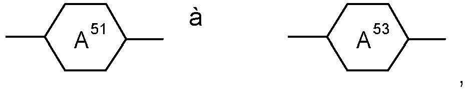 représentent chacun, s'ils sont présents, de manière indépendante les uns des autres 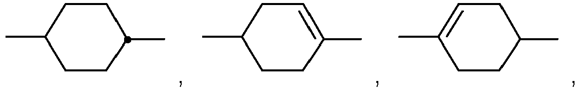 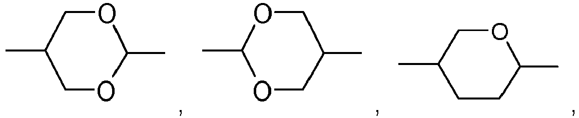 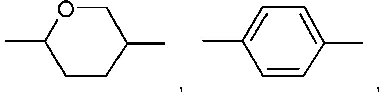 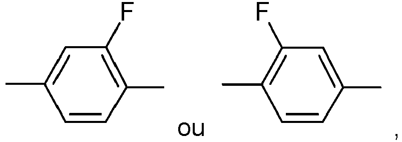
Z⁵¹ à Z⁵³ représentent chacun, de manière indépendante les uns des autres, -CH₂-CH₂-, -CH₂-O-, -CH=CH-, -C=C-, -COO-ou une liaison simple, et
i et j représentent chacun, de manière indépendante l'un de l'autre, 0 ou 1.

10. Milieu cristallin liquide selon la revendication 9, **caractérisé en ce qu'**il comprend un ou plusieurs composé(s) qui est/sont sélectionné(s) parmi le groupe de formules VI à IX : 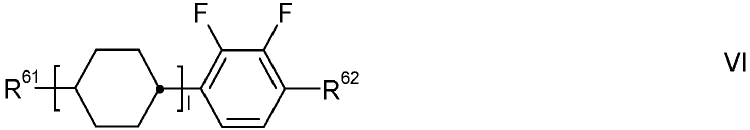 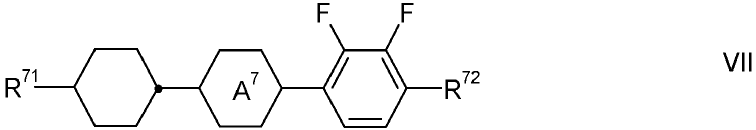 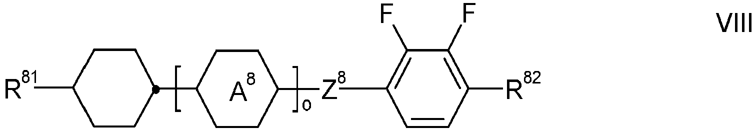 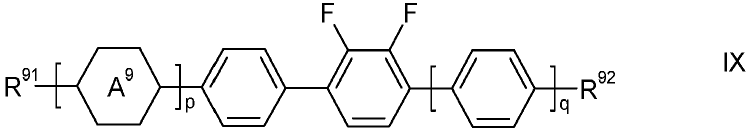 dans lesquelles
R⁶¹ représente un radical alkyle non substitué qui comporte de 1 à 7 atome(s) de C, un radical alkényle non substitué qui comporte de 2 à 7 atomes de C, un radical alcoxy non substitué qui comporte de 1 à 6 atome(s) de C ou un radical alkényloxy non substitué qui comporte de 2 à 6 atomes de C,
R⁶² représente un radical alkyle non substitué qui comporte de 1 à 7 atome(s) de C, un radical alcoxy non substitué qui comporte de 1 à 6 atome(s) de C ou un radical alkényloxy non substitué qui comporte de 2 à 6 atomes de C, et
l représente 0 ou 1,
R⁷¹ représente un radical alkyle non substitué qui comporte de 1 à 7 atome(s) de C ou un radical alkényle non substitué qui comporte de 2 à 7 atomes de C,
R⁷² représente un radical alkyle non substitué qui comporte de 1 à 7 atome(s) de C, un radical alcoxy non substitué qui comporte de 1 à 6 atome(s) de C ou un radical alkényloxy non substitué qui comporte de 2 à 6 atomes de C, 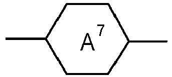 représente 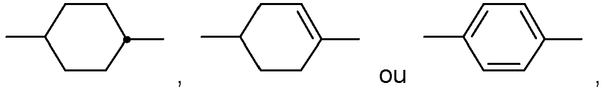
R⁸¹ représente un radical alkyle non substitué qui comporte de 1 à 7 atome(s) de C ou un radical alkényle non substitué qui comporte de 2 à 7 atomes de C,
R⁸² représente un radical alkyle non substitué qui comporte de 1 à 7 atome(s) de C, un radical alcoxy non substitué qui comporte de 1 à 6 atome(s) de C ou un radical alkényloxy non substitué qui comporte de 2 à 6 atomes de C, de préférence qui comporte 2, 3 ou 4 atomes de C, 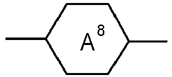 représente 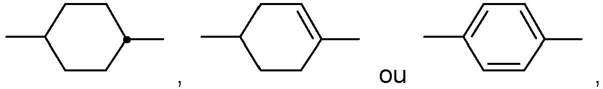
Z⁸ représente -(C=O)-O-, -CH₂-O-, -CF₂-O- ou -CH₂-CH₂-,
O représente 0 ou 1,
R⁹¹ et R⁹² présentent, de manière indépendante l'un de l'autre, la signification qui a été donnée pour R⁷² ci-avant, 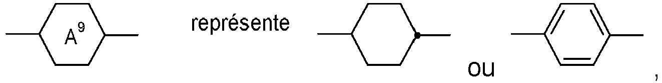
p et q représentent, de manière indépendante l'un de l'autre, 0 ou 1.

11. Milieu selon au moins l'une des revendications 1 à 10, **caractérisé en ce que** la concentration totale des composés de la formule IN dans le milieu considéré dans sa globalité est de 1 % ou plus à 60 % ou moins.

12. Milieu selon au moins l'une des revendications 1 à 11, **caractérisé en ce qu'**il comprend de façon additionnelle un ou plusieurs composé(s) chiral/chiraux.

13. Affichage électrooptique ou composant électrooptique, **caractérisé en ce qu'**il comprend un milieu cristallin liquide selon au moins l'une des revendications 1 à 12.

14. Affichage selon la revendication 13, **caractérisé en ce qu'**il est basé sur le mode IPS ou FFS.

15. Affichage selon la revendication 13 ou 14, **caractérisé en ce qu'**il contient un dispositif d'adressage par matrice active.

16. Affichage selon au moins l'une des revendications 13 à 15, **caractérisé en ce qu'**il s'agit d'un affichage mobile.

17. Utilisation d'un milieu selon au moins l'une des revendications 1 à 12 dans un affichage électrooptique ou dans un composant électrooptique.

18. Procédé pour la préparation d'un milieu cristallin liquide selon une ou plusieurs des revendications 1 à 12, **caractérisé en ce qu'**un ou plusieurs composé(s) de la formule IN est/sont mélangé(s) avec un ou plusieurs composé(s) mésogène(s) additionnel(s) et en option, avec un ou plusieurs additif(s).

19. Composé de la formule IN-A 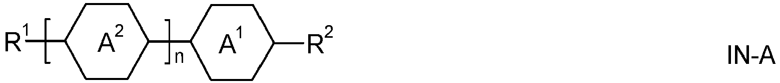 dans laquelle 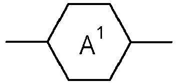 représente 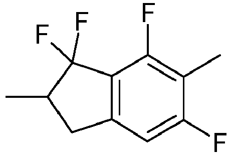 et les autres paramètres présentent les significations respectives qui ont été données selon la revendication 1.

20. Composé de la formule IN-A sélectionné parmi le groupe de composés des formules IN-A-1 à IN-A-5 : 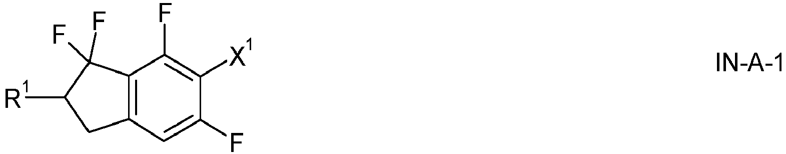 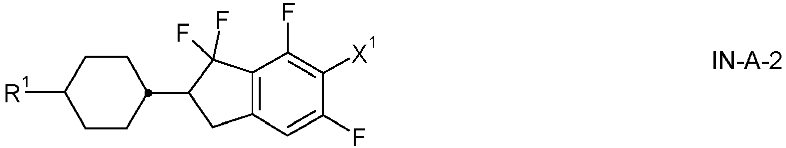 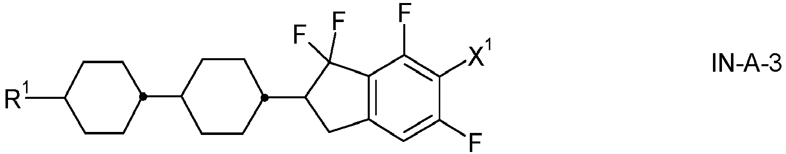 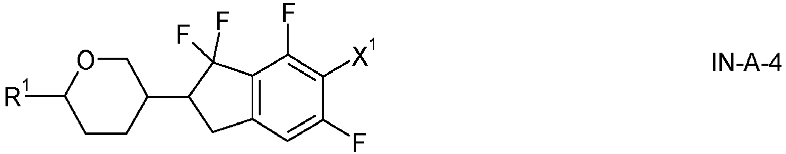 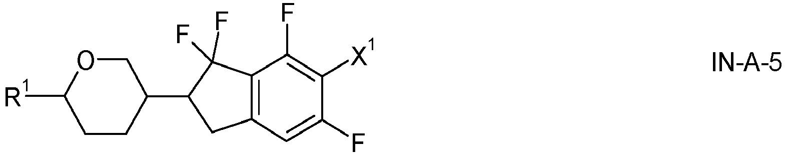 dans lesquelles les paramètres présentent les significations respectives qui ont été données selon la revendication 1.

21. Composé de la formule IN-A-2 selon la revendication 20.

22. Procédé pour la préparation d'un composé de la formule IN-A, comme il a été mentionné selon la revendication 19.

23. Procédé pour la préparation d'un composé de la formule IN-A qui est sélectionné parmi le groupe de composés des formules IN-A-1 à IN-A-5, comme il a été mentionné selon la revendication 22.

24. Procédé pour la préparation d'un composé de la formule IN-A-3, comme il a été mentionné selon la revendication 23.
